# EUROPÄISCHE PATENTSCHRIFT

(11) **EP 0 463 199 B1**
(45) Veröffentlichungstag und Bekanntmachung des Hinweises auf die Patenterteilung: **25.08.1993**
(21) Anmeldenummer: 90112000.6
(22) Anmeldetag: 25.06.1990
(51) Int. Cl.: B01F 3/10, B01F 7/00, B29B 7/02, B29B 7/04, B29B 7/06, B29B 7/84

(54) **Verfahren und Vorrichtung zur Herstellung von mittel- oder höherviskosen Zwei- oder Mehrkomponenten-Massen durch Vermischen der Komponenten miteinander**
Process and device for manufacturing average or highly viscous masses of two or multiple components by mixing the components together
Procédé et dispositif pour la préparation des masses de deux ou plusieurs constituants à moyenne ou haute viscosité pour mélange de tels constituants

(43) Veröffentlichungstag der Anmeldung: 02.01.1992
(73) Patentinhaber: VOSSCHEMIE GmbH, D-25436 Uetersen (DE)
(72) Erfinder: Voss, Klaus-Wilhelm, D-2082 Uetersen (DE)
(74) Vertreter: Richter, Werdermann & Gerbaulet

(56) Entgegenhaltungen:
- DE-B- 1 544 055
- DE-B- 2 417 137
- CHEMIE-INGENIEUR-TECHNIK, Nr. 9, 1964, Seiten 898-906, Weinheim, DE; W. RODENACKER:"Keilmaschinen - Fördern und Evakuieren von nicht-newtonschen Stoffen"

## Beschreibung

Die Erfindung betrifft ein Verfahren und eine Vorrichtung zur Herstellung insbesondere kleinerer Mengen von mittel- oder höherviskosen Zwei- oder Mehrkomponenten-Massen durch Vermischen der Komponenten miteinander.

Verfahren zum Mischen von mittel- oder höherviskosen Massen sind bekannt. Bei der Karosserie-Reparatur werden in den Werkstätten beispielsweise Polyesterspachtelmassen verwendet, um Unebenheiten der Bleche nach Unfallschäden auszugleichen oder um sonstige anderweitige Blechreparaturen durchzuführen.

Diese Polyesterspachtelmassen werden bekannterweise mit pastenförmigem, meist eingefärbtem Härter manuell vermischt. Diese Vermischung erfolgt dabei auf einer ebenen Platte mittels eines Spachtels oder eines Rührholzes. Durch die hohe Viskosität der Spachtelmasse wird bei der manuellen Vermischung mit der üblichen Menge von 2 bis 3% an Härtermasse automatisch zusätzliche Luft in diese pastöse Masse hineingeführt. Diese Luftbläschen werden bei intensivem Rühren wieder zerteilt. Nach der Härtung der so gemischten und dann aufgetragenen Spachtelmasse auf dem Karosserieblech wird diese nochmals wieder überschliffen, um die Oberfläche zu egalisieren und die Kontur der Oberfläche des Bleches anzupassen. Bei diesen Schleifarbeiten werden immer wieder erneut kleine Luftbläschen freigelegt. Diese in der Spachtelmasse fast immer vorhandenen Luftblasen stellen für eine Autolackierwerkstatt ein erhebliches Qualitätsproblem dar. Insbesondere die Luftblasen, die nur sehr gering unterhalb der Oberfläche liegen und noch nicht durch Anschleifen sichtbar geworden sind, sind als heimtükisch zu bezeichnen, denn nach der Lackierung wird das Fahrzeug bis auf 80°C erhitzt mit der Folge, daß sich die Luft innerhalb dieser Blasen sehr stark ausdehnt, wodurch Fehlstellen an der Oberfläche des Lackes verursacht werden. Nach dem Erkalten zieht sich diese Luft wieder zusammen und kann zu einer weiteren Fehlstelle führen. Spachtelmassen, die im Beisein eines Lösungsmittels vermischt werden, haben den Nachteil, daß Lösungsmitteldämpfe frei werden, denen der Lackierer ausgesetzt ist und die vom Lackierer eingeatmet werden.

Aus CHEMIE-INGENIEUR-TECHNIK Nr. 9, 1964, Seiten 898-906, Weinheim, DE; W. RODENACKER "Keilspaltmaschinen - Fördern und Evakuieren von nicht-newtonschen Stoffen" sind Keilspaltmaschinen bekannt, die sich den im Maschinenbau von den Gleitlagern her bekannten Keilspalt ergebenden physikalischen Vorgang zur Kunststoff-Verarbeitung zu nutze machen, bei der meistens unter Vakuum flüchtige Bestandteile aus hochzähen Flüssigkeiten entfernt und gleichzeitig andere Produkte eingearbeitet werden, wobei man bei der Berechnung der Keilspaltmaschinen auf die Theorie der Gleitlager zurückgreift. Bei dieser Keilspaltmaschine ist jedoch keine in einem evakuierbaren Mischraum angeordnete Mischscheibe vorgesehen.

Der Erfindung liegt die Aufgabe zugrunde, ein Verfahren zu schaffen, mit dem pastöse und hochviskose Spachtelmassen, insbesondere Polyesterspachtelmassen, gemäß der eingangs beschriebenen Art mit Härter in kleinen Mengen mechanisch so vermischt werden, daß eine luftblasenfreie, direkt verarbeitbare Spachtelmasse erhalten wird, die auch nach anschließender Bearbeitung durch Schleifen zu keinen Fehlstellen an den Oberflächen der gespachtelten Blechteile führt, wobei ein Minium an Verschmutzung der Mischwerkzeuge gegeben sein soll und ein umständliches, kostenaufwendiges Reinigen der Mischwerkzeuge vermieden wird, wobei des weiteren dem Lackierer eine handliche Vorrichtung zur Verfügung gestellt wird, mit der ein automatisches und mechanisches Vermischen von Härter enthaltenden Spachtelmassen,insbesondere Polyesterspachtelmassen, mit Härter, und zwar in den vom Lackierer jeweils benötigten Mengen für den augenblicklich anfallenden Bedarf möglich ist.

Diese Aufgabe wird durch die in den Patentansprüchen 1 bis 3 angegebenen Verfahrensmerkmale gelöst. Eine erste Lösung besteht darin, daß eine vorgegebene Gesamtmenge der zu mischenden Komponenten, wie Härter und Kunststoffmasse, auf einer in einem geschlossenen, evakuierbaren Mischraum angeordneten, sich bewegenden waagerechten Mischscheibe mit einem auf dieser senkrecht und gegenüber der bewegten Mischscheibe feststehenden, schaufelförmigen Mischelement aus einem rechtwinkligen oder gebogenen, eine Begrenzungswand bildenden Formkörper mit einer zur Umlaufsrichtung der bewegten Misch scheibe zugekehrten öffnung durch Abrollen des sich auf der bewegten Mischscheibe bildenden, etwa zylindrischen bzw. spindelförmigen und vom Mittelpunkt der bewegten Mischscheibe ausgehenden Mischungskörper auf der Mischscheibe und an der senkrechten Begrenzungswand des Mischelementes bei gleichzeitiger Beseitigung der in der Spachtelmasse enthaltenden und durch den Wander- bzw. Fließprozeß der Spachtelmassekörperoberfläche zugeführten Luftbläschen durch deren Vergrößerung und Aufplatzen durch Abpumpen der Luft in dem Mischraum durch Umwälzen und Verschieben vermischt wird, wobei die Roll- und Schiebebewegung des Mischungskörpers und dessen Translationsbewegung über das Mischelement gesteuert werden, wobei nach Beendigung des Mischvorganges der Mischraum belüftet wird.

Während dieses Verfahren davon ausgeht, daß die bewegte Mischscheibe gegen ein feststehendes Mischelement läuft, besteht eine weitere Lösung darin, daß eine vorgegebene Gesamtmenge der zu mischenden Komponenten, wie Härter und Kunststoffmasse, auf einer in einem geschlossenen, evakuierbaren Mischraum feststehend angeordneten, waagerechten Mischscheibe mit einem auf dieser senkrecht stehenden und gegenüber der feststehenden Mischscheibe um deren Mittelpunkt umlaufend angetriebenen, schaufelförmigen Mischelement aus einem rechtwinkligen oder gebogenen, eine Begrenzungswand bildenden Formkörper mit einer zur Umlaufsrichtung des Mischelementes zugekehrten Öffnung durch Abrollen des sich auf der Mischscheibe bildenden, etwa zylindrischen bzw. spindelförmigen und vom Mittelpunkt der Mischscheibe ausgehenden Mischungskörpers auf der Mischscheibe und an der senkrechten Begrenzungswand des umlaufenden Mischelementes bei gleichzeitiger Beseitigung der in der Spachtelmasse enthaltenden und durch den Wander- und Fließprozeß der Spachtelmassekörperoberfläche zugeführten Luftbläschen durch deren Vergrößerung und Aufplatzen durch Abpumpen der Luft aus dem Mischraum durch Umwälzen und Verschieben vermischt wird, wobei die Roll- und Schiebebewegung des Mischungskörpers und dessen Translationsbewegung über das Mischelement gesteuert werden, wobei nach Beendigung des Mischvorganges der Mischraum belüftet wird.

Nach diesem Verfahren läuft das umlaufend angetriebene Mischelement gegen die feststehende Mischscheibe.

Eine dritte Lösung besteht darin, daß eine vorgegebene Gesamtmenge der zu mischenden Komponenten, wie Härter und Kunststoffmasse, auf einer in einem geschlossenen, evakuierbaren Mischraum waagerechten angeordneten, sich bewegenden Mischscheibe mit einem auf dieser senkrecht stehenden und entgegengesetzt zur Umlaufsrichtung der Mischscheibe um deren Mittelpunkt umlaufend angetriebenen, schaufelförmigen Mischelement aus einem rechtwinkligen oder gebogenen, eine Begrenzungswand bildenden Formkörper mit einer der Bewegungsrichtung der Mischscheibe zugekehrten Öffnung durch Abrollen des sich auf der Mischscheibe bildenden, etwa zylindrischen bzw. spindelförmigen und vom Mittelpunkt der Mischscheibe ausgehenden Mischungskörpers auf der Mischscheibe und an der senkrechten Begrenzungswand des umlaufenden Mischelementes bei gleichzeitiger Beseitigung der in der Spachtelmasse enthaltenden und durch den Wander- und Fließprozeß der Spachtelmassekörperoberfläche zugeführten Luftbläschen durch deren Vergrößerung und Aufplatzen durch Abpumpen der Luft in dem Mischraum durch Umwälzen und Verschieben vermischt wird, wobei die Roll- und Schiebebewegung des Mischungskörpers und dessen Translationsbewegung über das Mischelement gesteuert werden, wobei nach Beendigung des Mischvorganges der Mischraum belüftet wird.

Hiernach wird die sich bewegende Misch scheibe gegen das Mischelement bewegt, das ebenfalls entgegengesetzt zur Bewegungsrichtung der Mischscheibe umläuft.

In den Fällen, in denen die Mischscheibe gegen das Mischelement bewegt wird, ist die Mischscheibe waagerecht angeordnet und um ihre Mittelachse umlaufend angetrieben.

Des weiteren wird die Aufgabe durch drei verschiedenartig ausgebildete Vorrichtungen gelöst, wobei die Vorrichtung für das Verfahren, bei dem die Mischscheibe gegen das feststehende Mischelement läuft, in der Weise ausgebildet ist, daß sie aus einem Mischbehälter mit einem quadratischen oder kreisförmigen Querschnitt, aus einem Bodenteil, einer umlaufenden Seitenwand und einem die obere Behälteröffnung verschließenden Deckelteil, das mittels mechanischer Einrichtungen oder vermittels Vakuum an der Behälterseitenwand im Betriebszustand der Vorrichtung befestigt wird, aus einer im Mischraum des Mischbehälters angeordneten, waagerechten Mischscheibe, die auf dem Bodenteil gelagert ist und um ihre senkrechte Mittelachse vermittels einer am Bodenteil angeordneten Antriebseinrichtung umlaufend angetrieben wird, und aus einem oberhalb der Mischscheibe gegenüber dieser feststehend angeordneten Mischelement besteht, das als im Mischraum angeordneter, senkrecht zur Mischscheibe stehender, als rechtwinklige oder gebogene Begrenzungswand ausgebildeter Formkörper mit der Funktion einer Mischschaufel und mit einer der Umlaufsrichtung der Mischscheibe zugekehrten Öffnung ausgebildet ist, wobei die Mischscheibe lösbar mit der Antriebsachse der Antriebseinrichtung verbunden ist, und wobei der Mischbehälter einen in der Behälterwand angeordneten Anschlußstutzen aufweist, der mit einer Vakuumerzeugungseinrichtung verbunden ist.

Die Vorrichtung zur Durchführung des Verfahrens, nach dem das Mischelement umlaufend gegen die feststehende Mischscheibe bewegt wird, besteht aus einem Mischbehälter mit einem quadratischen oder kreisförmigen Querschnitt aus einem Bodenteil, einer umlaufenden Seitenwand und einem die obere Behälteröffnung verschließenden Deckelteil, das mittels mechanischer Einrichtungen oder vermittels Vakuum an der Behälterseitenwand im Betriebszustand der Vorrichtung befestigt wird, aus einer im Mischraum des Mischbehälters feststehend angeordneten, waagerechten Mischscheibe, die auf dem Bodenteil lösbar angeordnet ist, und aus einem oberhalb der feststehenden Mischscheibe gegenüber dieser um eine senkrechte Achse vermittels einer Antriebseinrichtung umlaufend angetriebenen Mischelement, das als im Mischraum angeordneter, senkrecht zur Mischscheibe stehender, als rechtwinklige oder gebogene Begrenzungswand ausgebildeter Formkörper mit der Funktion einer Mischschaufel und mit einer der Umlaufsrichtung des Mischelementes zugekehrten Öffnung ausgebildet ist, wobei der Mischbehälter einen in der Behälterwand angeordneten Anschlußstutzen aufweist, der mit einer Vakuumerzeugungseinrichtung verbunden ist.

Für das Verfahren, bei dem sowohl die Mischscheibe als auch das Mischelement gegeneinander bewegt werden, ist eine Vorrichtung vorgesehen, die aus einem Mischbehälter mit einem quadratischen oder kreisförmigen Querschnitt, aus einem Bodenteil, einer umlaufenden Seitenwand und einem die obere Behälteröffnung verschließenden Deckelteil, das mittels mechanischer Einrichtungen oder vermittels Vakuum an der Behälterseitenwand im Betriebszustand der Vorrichtung befestigt wird, aus einer im Mischraum des Mischbehälters angeordneten, waagerechten Mischscheibe, die auf dem Bodenteil gelagert ist und um ihre senkrechte Mittelachse vermittels einer am Bodenteil angeordneten Antriebseinrichtung umlaufend angetrieben wird, und aus einem oberhalb der umlaufend angetriebenen Mischscheibe gegenüber dieser um eine senkrechte Achse vermittels einer Antriebseinrichtung zur Umlaufsrichtung der Mischscheibe gegenläufig um den Mittelpunkt der Mischscheibe umlaufend angetriebenen Mischelement besteht, das als im Mischraum angeordneter, senkrecht zur Mischscheibe stehender, als rechtwinklige oder gebogene Begrenzungswand ausgebildeter Formkörper mit der Funktion einer Mischschaufel und mit einer der Umlaufrichtung der Mischscheibe zugekehrten Öffnung ausgebildet ist, wobei die Mischscheibe lösbar mit der Antriebsachse der Antriebseinrichtung verbunden ist, während der Mischbehälter einen in der Behälterwand angeordneten Anschlußstutzen aufweist, der mit einer Vakuumerzeugungseinrichtung verbunden ist.

Mit diesem Verfahren und den dafür ausgebildeten Vorrichtungen ist eine automatische, mechanische Vermischung von Spachtelmassen und Härter insbesondere in den vom Lackierer jeweils benötigten Mengen, die klein oder groß sein können und sich jeweils nach der Größe der zu spachtelnden Flächen richten, wobei größere Flächen abschnittsweise gespachtelt werden, möglich. Des weiteren ist die hergestellte Spachtelmasse sofort verarbeitbar. Ein Umfüllen auf eine Arbeitsplatte entfällt, da die Mischplatte der Mischvorrichtung mit der darauf angemischten Spachtelmasse entnommen und in den Bereich der zu spachtelnden Fläche gebracht werden kann. Die automatische Vermischung wird somit in einem geschlossenen Mischraum durchgeführt, der während des Mischprozesses evakuiert wird. Während des Mischvorganges wird die Luft zu etwa 90% auf 100 mb mittels einer Vakuumpumpe abgepumpt. Gegebenenfalls während des Mischvorganges entstehende Lösungsmitteldämpfe werden gleichzeitig mit abgesogen, so daß der Lackierer Lösungsmitteldämpfen nicht ausgesetzt ist. Das hat zur Folge, daß die in der Mischmasse vorhandenen Lufteinschlüsse, nämlich Luftblasen, auf das 9-fache ihres Volumens vergrößert und während des Mischvorganges an die Oberfläche des Mischungskörpers bewegt und infolge ihrer Größe an der Oberfläche des Mischungskörpers, also der Spachtelmasse, zerplatzen. Dadurch, daß das Vermischen der Komponenten, von denen eine den Härter bildet, im Vakuum und auf einer Mischscheibe in Verbindung mit einem speziell ausgebildeten Mischelement erfolgt, wobei der Mischungskörper aufgrund der Bewegungsabläufe der Mischscheibe und/oder des Mischelementes neben einer rotierenden Bewegung auch eine Transversalbewegung durchführt, wird die Spachtelmasse während des Mischvorganges luftblasenfrei gemacht. Der Mischvorgang ist dabei so ausgelegt, daß die Vermischung vorzugsweise innerhalb von 15 bis 50 sec durchgeführt werden kann. Die so erhaltene, luftblasenfreie Spachtelmasse wird dann auf die Karosseriefläche mittels eines Spachtels aufgebracht. Nach etwa 4 bis 5 min ist die Spachtelmasse geliert (angehärtet), so daß nach weiteren 15 min der Schleifvorgang erfolgen kann. Die jetzt durchgeführten Schleifarbeiten zeigen keine Luftblaseneinschlüsse mehr, so daß mit diesem Verfahren und den hierfür ausgebildeten Vorrichtungen eine erhebliche Qualitätsverbesserung im Karosserie-Reparaturgewerbe und Autolackiergewerbe erreicht wird.

Diese Bewegung der Luftbläschen zur Oberfläche des Mischungskörpers wird neben dem Evakuieren des Mischraumes durch die Roll- und Schiebebewegung der Spachtelmasse erreicht. Durch die dabei erzielte Massenbewegung werden die Luftbläschen an die Oberfläche bewegt. Auch kleine Luftbläschen mit fehlender Auftriebskraft werden der Oberfläche zugeführt. Durch die verschiedenen Bewegungsabläufe der Mischscheibe und des Mischelementes wird eine vollständige Durchmischung der Spachtelmassenkomponenten auf kleinstem Raum erreicht, da durch die schaufelförmige Ausgestaltung des Mischelementes mit einer seitlichen Aufnahmekammer für das Mischprodukt, die seitlich nur von der senkrechten Begrenzungswand des Mischelementes und bodenseitig von der Mischscheibe begrenzt ist, die Spachtelmassenkomponenten auf einem durch die Stellung des Mischelementes vorgegebenen Platz auf der Mischscheibe während des Mischvorganges verweilen und dieser Platz auf der Mischscheibe nur durch Veränderung der Stellung des Mischelementes veränderbar ist, ist immer eine optimale Durchmischung gewährleistet. Das intensive Vermischen der Spachtelmassenkomponenten wird auch noch durch eine stetige Veränderung der Form des Mischungskörpers dadurch erreicht, daß der Anstellwinkel des Mischelementes zur Mischscheibe geändert wird. Durch wechselseitiges Hin- und Herverschwenken des Mischelementes erhält der Mischungskörper während des Mischvorganges eine ständig sich wechselnde Form. Dieses ständige Wechseln der Form des Mischungskörpers zusammen mit den Abrollbewegungen des Mischungskörpers zwischen der Mischscheibe und dem Mischelement trägt dazu bei, daß die Spachtelmassenkomponenten intensiv miteinander vermischt werden, so daß in Verbindung mit der Evakuierung des Mischraumes auch bei hochviskosen Massen eine Bewegung der Luftbläschen aus dem Inneren der Masse zu dessen Oberfläche erreicht wird. Die Schwenkbewegung des Mischelementes wird dabei nur in einem kleinen Bereich durchgeführt. Dieser Bereich ist so eingestellt, daß während des Mischvorganges keine Mischmasse aus dem Bereich der Mischscheibe auswandern kann . Das Mischelement kann von Hand, elektromotorisch, pneumatisch oder elektromagnetisch verschwenkt werden. Der Mittelpunkt des Mischungskörpers unterliegt einer stetigen Bewegung, da er in Abhängigkeit von der Bewegung des Mischelementes ständig wandert, was zur Folge hat, daß der Härter die gesamte Spachtelmasse durchwandert.

Des weiteren werden von der Spachtelmasse nur die unmittelbar mit dieser in Berührung kommenden Teile der Mischvorrichtung verschmutzt und da nur wenige Teile, nämlich Mischelement und Mischscheibe, mit der Spachtelmasse in Berührung kommen, ist ein Reinigen der Teile nach beendigung des Mischvorganges mühelos und in keiner Weise kostenaufwendig. Besteht die Mischscheibe und das Mischelement aus einem hochpolierten Kunststoff, wie Polyäthylen, Polyurethan oder Tetrafluorkohlenstoff, dann ist ein Entfernen von Resten gelierter Spachtelmasse mühelos.

Neben lösungsmittelhaltigen Spachtelmassen können auch lösungsmittelfreie Spachtelmassen mit gleich gutem Ergebnis vermischt werden, insbesondere auch dann, wenn Einfärbungen vorgenommen werden müssen. Neben Silikonkautschuk, Polyurethanmassen, Epoxidspachtelmassen, Spachtelmassen und Kitte können alle Komponenten, und zwar in den kleinsten Mengen, miteinander vermischt werden. Die Mischscheibe selbst bildet für den Lackierer den Transportkörper für die fertige Spachtelmasse.

Ist der Mischvorgang beendet, der Mischraum belüftet und der Mischbehälter geöffnet, dann wird die Mischscheibe oder der auf der Mischscheibe liegende Mischteller dem Mischraum entnommen und das erhaltene luftblasenfreie Mischprodukt (Spachtelmasse) direkt mittels eines Spachtels auf die zu spachtelnde Fläche, z.B. Karosseriefläche, aufgetragen, auf der dann die Spachtelmasse geliert (aushärtet).

Vorteilhafte Ausgestaltungen der Erfindung sind in den Unteransprüchen gekennzeichnet. Es zeigen
Fig. 1 teils in Ansicht, teils in einem senkrechten Schnitt eine einer Vorrichtung zur gleichzeitigen und dosierten Abgabe von Spachtelmassen und Härterpasten zugeordnete Mischvorrichtung zum Vermischen von Spachtelmassen mit einem Härter unter Verwendung einer umlaufend angetriebenen Mischscheibe und einem dieser zugeordneten, feststehenden, leitschaufelförmigen Mischelement,
Fig. 2 teils in einer Seitenansicht, teils in einem senkrechten Schnitt die in Fig. 1 dargestellte Gesamtvorrichtung aus Abgabevorrichtung und Mischvorrichtung,
Fig. 3 in einer Ansicht von oben ein auf der Mischscheibe angeordnetes, rechtwinkliges Mischelement in zwei verschiedenen Schwenkstellungen,
Fig. 4 in einer Ansicht von oben das Mischelement in einer der beiden Schwenkstellungen mit einem nach außen fließenden Massemittelpunkt der Spachtelmasse,
Fig. 5 in einer Ansicht von oben das Mischelement in der jeweiligen anderen Schwenkstellung mit nach innen verlagertem Fließmittelpunkt der Spachtelmasse,
Fig. 6 einen senkrechten Schnitt gemäß Linie VI-VI in Fig. 4,
Fig. 7 in einer Ansicht von oben eine weitere Ausführungsform eines gebogenen, auf der Mischscheibe angeordneten Mischelementes in einem waagerechten Schnitt in verschiedenen Schwenkstellungen und mit durch die Schwenkstellungen erzielten unterschiedlichen Formen des Mischungskörpers,
Fig. 8 und 9 Kennzeichnungen der Spachtelmasse der beiden unterschiedliche Formen aufweisenden Mischungskörpers bei den verschiedenen Schwenkstellungen der Mischelemente in Fig. 7,
Fig. 10 in einer Ansicht von oben die Mischscheibe mit darauf angeordnetem, bogenförmigem Mischelement in einem waagerechten Schnitt in einer der beiden in Fig. 7 dargestellten Schwenkstellungen,
Fig. 11 in einer Ansicht von oben die Mischscheibe mit darauf angeordnetem, bogenförmigem Mischelement in einem waagerechten Schnitt in der jeweils anderen Schwenkstellung gemäß Fig. 7,
Fig. 12 in einer schaubildlichen Ansicht die Mischscheibe mit zugeordnetem, leitschaufelförmig ausgebildetem Mischelement mit auf der Mischscheibe und vor dem Mischelement angeordneter, mit Härter versetzter Spachtelmasse,
Fig. 13 und 14 in schaubildlichen Ansichten die Mischvorrichtung während des Mischvorganges bei verschiedenen Schwenkstellungen des Mischelementes,
Fig. 15 teils in einer Seitenansicht, teils in einem senkrechten Schnitt eine einer Vorrichtung zur gleichzeitigen und dosierten Abgabe von Spachtelmasse und Härterpaste zugeordnete Mischvorrichtung zum Vermischen von Spachtelmasse mit einem Härter unter Verwendung einer umlaufend angetriebenen Mischscheibe und einem dieser gegenüber ebenfalls umlaufend angetriebenen Mischelement,
Fig. 16 in einer Vorderansicht mit teilweise senkrecht geschnittenen Teilen eine weitere Ausführungsform der Mischvorrichtung mit einem Mischbehälter, dessen Deckelteil haubenförmig ausgebildet ist,
Fig. 17 teils in einer Seitenansicht, teils in einem senkrechten Schnitt eine Mischvorrichtung mit einer abnehmbar auf der Antriebsachse der Antriebseinrichtung angeordneten Mischscheibe,
Fig. 18 teils in einer Ansicht von oben, teils in einem waagerechten Schnitt die Mischvorrichtung gemäß Fig.1,
Fig. 19 teils in einer Seitenansicht, teils in einem senkrechten Schnitt eine Mischvorrichtung mit einem gegenüber der feststehenden Mischscheibe umlaufenden Mischelement,
Fig. 20 teils in einer Ansicht von oben, teils in einem waagerechten Schnitt die Mischvorrichtung gemäß Fig. 19,
Fig. 21 teils in einer Seitenansicht, teils in einem senkrechten Schnitt eine weitere Ausführungsform einer Mischvorrichtung mit einer quer angeordneten Antriebseinrichtung für die Mischscheibe,

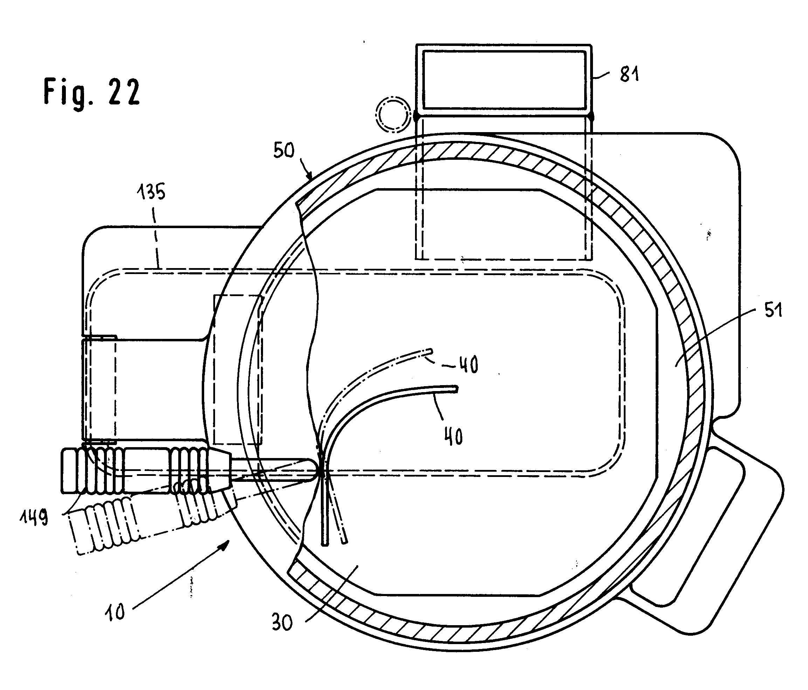

Fig. 22 teils in einer Ansicht von oben, teils in einem waagerechten Schnitt die Mischvorrichtung gemäß Fig. 21,
Fig. 23 in einer Vorderansicht die Abgabevorrichtung für Kunststoffmasse und Härter,
Fig. 24 in einer schaubildlichen Ansicht den unteren Bereich der Abgabevorrichtung mit dem Abfüllkopf,
Fig. 25 teils in Ansicht, teils in einem senkrechten Schnitt die Abfüllvorrichtung und
Fig. 26 in einem senkrechten Teilschnitt die Zentrierplatte mit aufgesetztem, dosenartigem Behälter für die Spachtelmasse.

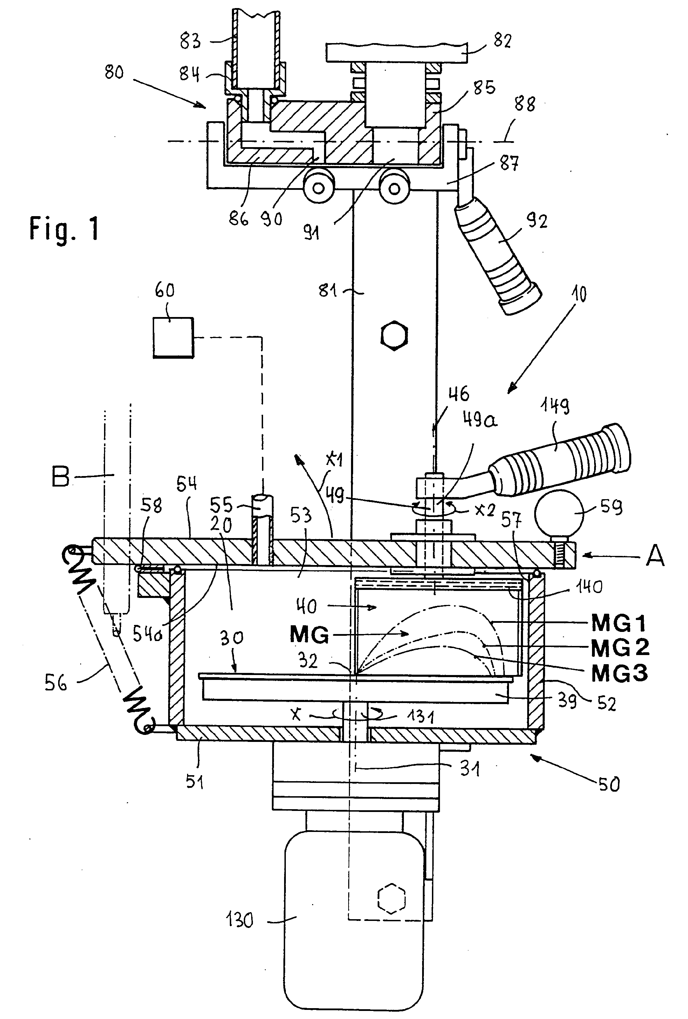

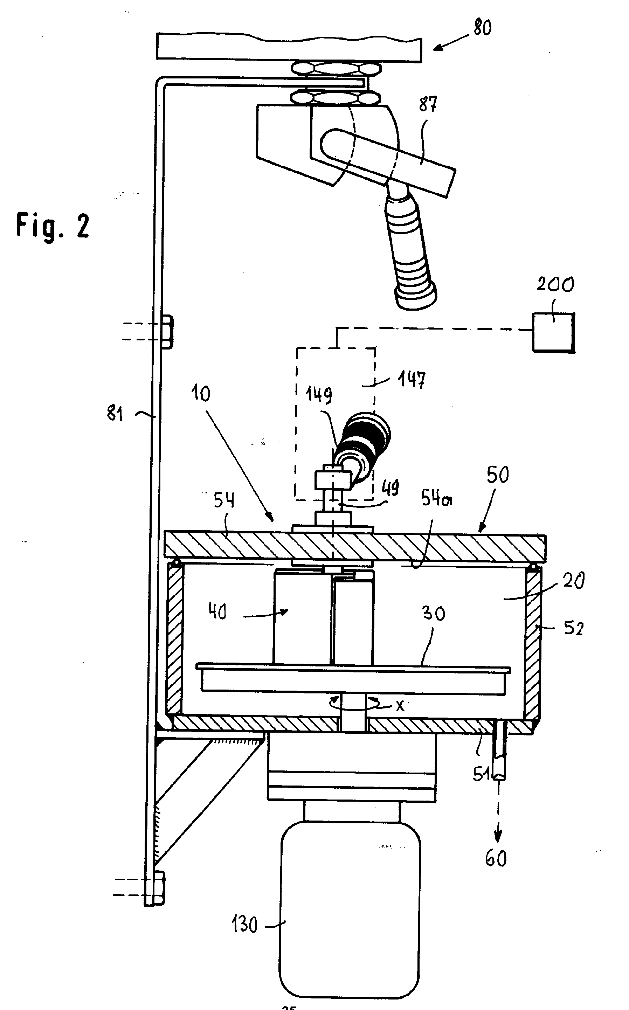

Die in Fig. 1 und 2 dargestellte und mit 10 bezeichnete Vorrichtung zum Herstellen einer aushärtbaren Zwei- oder Mehrkomponentenspachtelmasse, insbesondere Polyesterspachtelmasse, durch Vermischen einer Spachtelmasse mit einer Härterpaste besteht aus einem Mischbehälter 50 mit einem quadratischen oder kreisförmigen Querschnitt. Gebildet wird dieser Mischbehälter 50 von einem Bodenteil 51, einer mit dem Bodenteil fest verbundenen, umlaufenden Seitenwand 52 und einem die obere Behälteröffnung 53 verschließenden Deckelteil 54, das mittels mechanischer Einrichtungen oder vermittels Vakuum an der Behälterseitenwand 52 im Betriebszustand der Vorrichtung 10 gehalten wird. Der Innenraum des Mischbehälters 50 stellt den Mischraum 20 dar.

Das Deckelteil 54 des Mischbehälters 50 ist im Bereich seines Anlenkungspunktes 58 an der Seitenwand 52 mit einer Zugfeder, Gasfeder, Hydraulikzylinder od.dgl. 56 zum selbsttätigen Verschwenken des Deckelteils 54 in seine öffnungsstellung versehen, wobei an der dem Anlenkungspunkt 58 gegenüberliegenden Seite eine bei 59 angedeutete Einrichtung zum Arretieren des Deckelteils 54 an der Behälterseitenwand 52 vorgesehen sein kann. Das Arretieren des Deckelteils 54 an der Behälterseitenwand kann beispielsweise mit einer Feststellschraube od.dgl. erfolgen. Der obere umlaufende Rand 57 des Mischbehälters 50 weist eine Gummidichtung od.dgl. auf, um im geschlossenen Zustand des Deckelteils 54 eine hohe Abdichtung zu erreichen (Fig.1).

Der Mischbehälter 50 besteht aus metallischen Werkstoffen, Kunststoffen oder anderen geeigneten Werkstoffen.

Zur Erzeugung eines Vakuums im Mischraum 20 des Mischbehälters 50 weist der Mischbehälter 50 einen Anschlußstutzen 55 auf, der mit einer Vakuumerzeugungseinrichtung , wie Vakuumpumpe 60, verbunden ist. Der Anschlußstutzen 55 ist vorzugsweise im Deckelteil 54 des Mischbehälters 50 angeordnet. Die Vakuumerzeugungseinrichtung 60 kann integrierter Bestandteil des Mischbehälters 50 sein. In diesem Falle ist die Vakuumerzeugungseinrichtung 60 beispielsweise an der Außenseite des Bodenteils 51 befestigt. Es besteht jedoch auch die Möglichkeit, den Anschlußstutzen 55 an der umlaufenden Seitenwand 52 des Mischbehälters 50 vorzusehen.

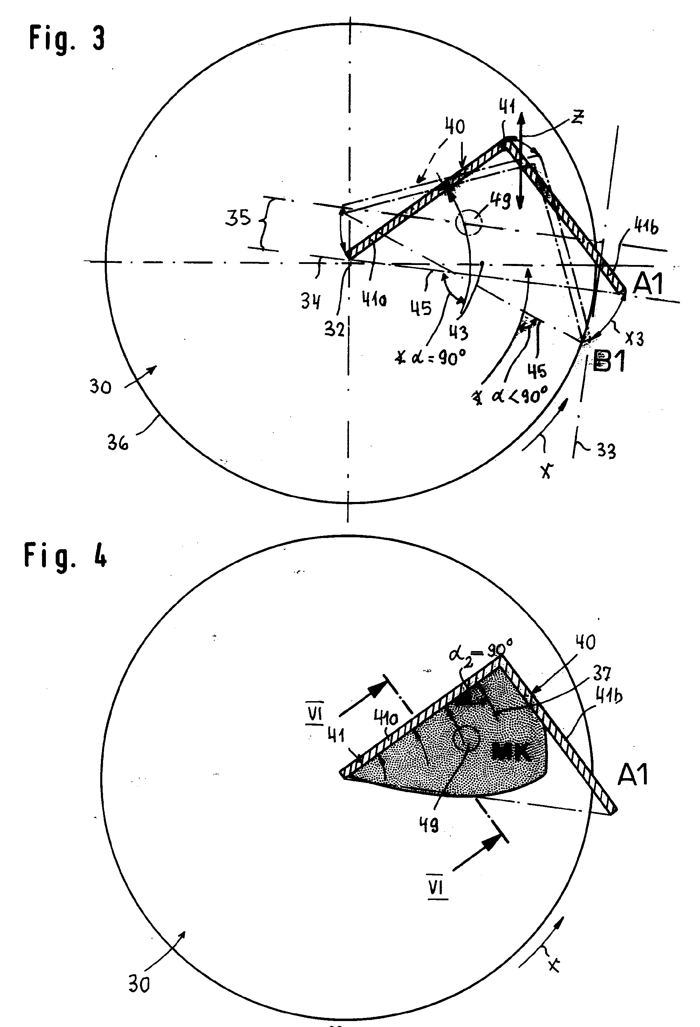

In dem Mischraum 20 des Mischbehälters 50 ist als Mischfläche eine Mischscheibe 30 angeordnet, die auf dem Bodenteil 51 gelagert und um ihre senkrechte Mittelachse 31 vermittels einer am Bodenteil 51 angeordneten Antriebseinrichtung 130 angetrieben wird. Der Umlauf der Mischscheibe 30 erfolgt in Pfeilrichtung X. Die Antriebseinrichtung 130 ist an der Außenseite des Bodenteils 51 des Mischbehälters 50 angeordnet. Die Mischscheibe 30 ist mit der mit der Antriebseinrichtung 130 verbundenen und durch das Bodenteil 51 des Mischbehälters 50 hindurchgeführten Antriebsachse 131 lösbar verbunden, und zwar derart, daß die Mischscheibe 30 von der Antriebsachse 131 abgenommen werden kann. Als lösbare Verbindung kann hier eine Steckverbindung oder eine andere geeignete Verbindung eingesetzt werden. Die Mischscheibe 30 besteht aus metallischen Werkstoffen, Kunststoffen, aus einem mit einem Kunststoff beschichteten metallischen Werkstoff oder anderen geeigneten Werkstoffen. Des weiteren ist die Mischscheibe 30 kreisförmig ausgebildet (Fig. 3 bis 5). Anstelle einer umlaufend angetriebenen Mischscheibe kann auch eine bewegte Mischfläche, z.B. in Form eines umlaufend angetriebenen, endlosen Bandes, verwendet werden.

Die Mischscheibe 30 kann auch aus einer Trägerscheibe 39 bestehen, die mit der Antriebsachse 131 der Antriebseinrichtung 130 fest verbunden ist. Auf dieser Trägerscheibe 39 ist dann die eigentliche Mischscheibe 30 angeordnet, die aus einem dünnwandigen, jedoch eine ausreichende Eigensteifigkeit aufweisenden Material besteht. Die Halterung dieser Mischscheibe 30 auf der Trägerscheibe 39 erfolgt über lösbare Haftverbindungen, wie Bajonettverschluß, Magnetverschluß od.dgl.. Dadurch, daß die Mischscheibe 30 von der Trägerscheibe 39 abnehmbar ausgebildet ist, kann die Mischscheibe aus der Vorrichtung 10 herausgenommen werden, um als Spachtelmassenträger bei der Verarbeitung der fertigen Spachtelmasse zu dienen (Fig.1). Ist dagegen die Mischscheibe 30 einscheibig ausgebildet und lösbar mit der Antriebsachse 131 der Antriebseinrichtung 130 verbunden, dann wird die Mischscheibe 30, um als Spachtelmassenträger beim Aufbringen der Spachtelmasse auf eine Reparaturstelle verwenden zu können, von der Antriebsachse 131 abgezogen. Als Antriebseinrichtung 130 können elektromotorische Antriebe oder andere geeignete Antriebe verwendet werden.

In dem Mischraum 20 des Mischbehälters 50 ist oberhalb der Mischscheibe 30 ein Mischelement angeordnet, das als im Mischraum 20 angeordneter, senkrecht zu der Mischscheibe 30 stehender, als rechtwinklige oder gebogene Begrenzungswand ausgebildeter Formkörper 42 bzw. 142 mit der Funktion einer Mischschaufel und mit einer der Umlaufrichtung der Mischscheibe 30 zugekehrten Öffnung 43 bzw. 143 ausgebildet ist.

Nach der Ausführungsform gemäß Fig.1 und 2 ist der Formkörper 42 rechtwinklig und leitschaufelartig ausgebildet. Die rechtwinklig ausgebildete Begrenzungswand 41 des Formkörpers 42 des Mischelementes 40 begrenzt eine seitliche Öffnung 43, wobei eine die Öffnung 43 nach oben hin abschließende Abdeckung 140 vorgesehen ist (Fig.1). Besteht dagegen das Mischelement 40 aus einem Formkörper 142 mit einer gebogenen Begrenzungswand 141, dann ist die von dieser gebogenen Begrenzungswand gebildete seitliche öffnung 143 ebenfalls nach oben hin mittels der Abdeckung 140 abgeschlossen.

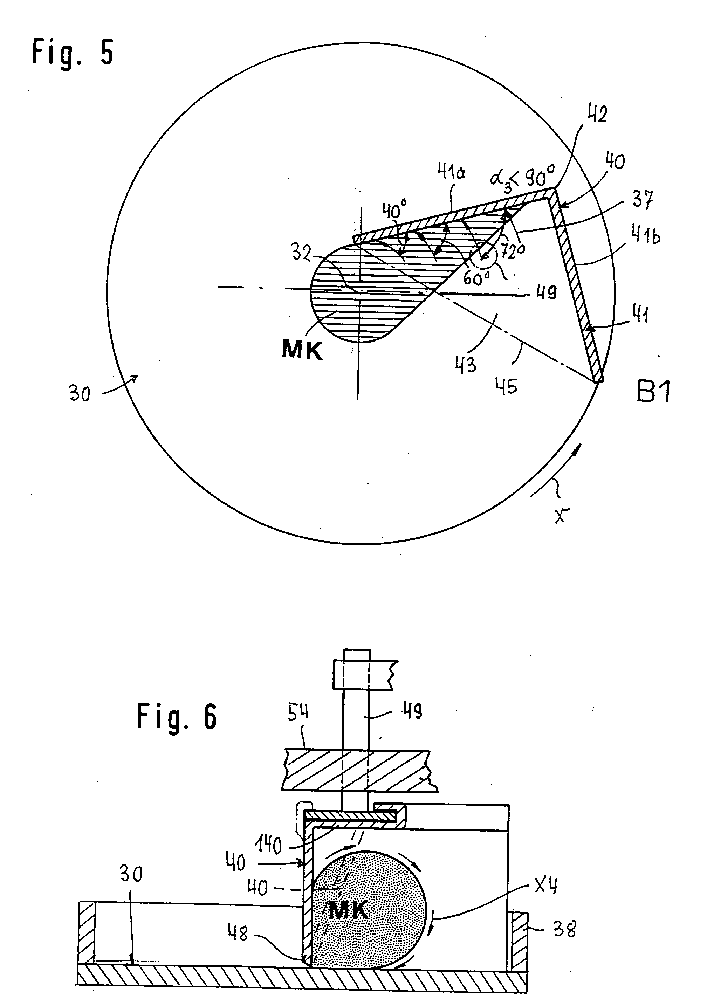

Das an dem Umlauf der Mischscheibe 30 nicht teilnehmende Mischelement 40 ist senkrecht stehend zu der Mischscheibe 30 auf dieser angeordnet. Die Halterung des Mischelementes 40 in dem Mischraum 20 erfolgt mittels einer durch das Deckelteil 54 des Mischbehälters 50 hindurchgeführten Schwenkachse 49, wobei das aus dem Deckelteil 54 herausgeführte Ende 49a der Schwenkachse 49 mit einer griffartigen Handhabe 149 versehen ist. Aufgrund dieser Anordnung ist das Mischelement 40 an der Innenwandfläche 54a des Deckelteils 54 gehalten (Fig.1). Wird das Deckelteil 54 des Mischbehälters 50 von seiner Verschlußstellung A in die senkrechte Öffnungsstellung B in Pfeilrichtung X1 verschwenkt, dann nimmt an dieser Schwenkbewegung auch das an dem Deckelteil 54 gehaltene Mischelement 40 teil (Fig.1). Dadurch, daß das Mischelement 40 vermittels der senkrechten Schwenkachse 49 an dem Deckelteil 54 des Mischbehälters 50 gehalten ist, besteht die Möglichkeit, vermittels der an der Schwenkachse 49 befestigten griffartigen Handhabe 149 das Mischelement 40 wechselweise um die senkrechte Schwenkachse 49 in Pfeilrichtung X2 zu verschwenken, wobei die beiden verschiedenen Schwenkstellungen A1 und B1 in Fig. 3, in Fig. 4 die Schwenkstellung A1 und in Fig.5 die Schwenkstellung B1 des Mischelementes 40 dargestellt sind. Aufgrund dieser Anordnung und Halterung des Mischelementes 40 an dem Deckelteil 54 des Mischbehälters 50 ist das Mischelement 40 einmal nach der einen Seite und einmal nach der anderen Seite von Hand verschwenkbar. Anstelle einer Handbetätigung besteht auch die Möglichkeit, dieses wechselseitige Verschwenken des Mischelementes 40 in Pfeilrichtung X2 mittels einer beispielsweise elektromotorisch ausgebildeten Antriebseinrichtung 147 durchzuführen. Hierzu ist die mit dem Mischelement 40 verbundene Antriebsachse 49 mit der an dem Deckelteil 54 des Mischbehälters 50 angeordneten Antriebseinrichtung 147 verbunden, die über eine Steuereinrichtung 200 derart gesteuert wird, daß das Mischelement 40 während des Mischvorganges eine wechselseitige Schwenkbewegung ausführt (Fig.2).

Das Mischelement 40 ist zu der Mischscheibe 30 derart angeordnet, daß zwischen der Mischscheibe 30 und der bodenseitigen Kante 48 des Mischelementes ein kleiner Zwischenraum ausgebildet ist, der die freie Beweglichkeit der Mischscheibe 30 zum feststehenden Mischelement 40 gewährleistet. Die bodenseitige Kante 48 des Mischelementes 40 ist messerklingenartig ausgebildet.

Das Mischelement 40 besteht aus metallischen Werkstoffen, Kunststoffen oder aus mit einem Kunststoff beschichteten Metall; es ist, wie in Fig. 1,2 und 6 dargestellt, senkrecht stehend zu der Mischscheibe 30 angeordnet. Es besteht jedoch auch die Möglichkeit, das Mischelement 40 in einer Winkelstellung zu der Mischscheibe 30 anzuordnen, wie dies in Fig. 6 gestrichelt angedeutet ist. Die Anordnung des Mischelementes 40 erfolgt außermittig an dem Deckelteil 54 des Mischbehälters.

In gleicher Weise wie das Mischelement 40 aus einem rechtwinklig gebildeten Formkörper 42 ist auch das aus einem gebogenen Formkörper 142 gebildete Mischelement 40 an dem Deckelteil 54 des Mischbehälters 50 angeordnet.

Bei beiden Ausführungsformen des Mischelementes 40 steht die rechtwinklige Begrenzungswand 41 und die gebogene bzw. bogenförmig verlaufende Begrenzungswand 141 senkrecht zu der Mischscheibe 30, wobei auch eine Schrägstellung der Begrenzungswände 41,141 möglich ist.

Bei der Mischvorrichtung 10 werden eine kreisförmige Mischscheibe 30 und ein Mischelement 40 verwendet, dessen von der in Längsrichtung gebogenen oder rechtwinkligen Begrenzungswand 41,141 gebildete Öffnung 43,143 eine Länge aufweist, die gleich oder kleiner dem Radius der Mischscheibe 30 ist, deren Mittelpunkt bei 32 angedeutet ist.

Die Winkelstellung der die senkrechte Öffnungsfläche 45 bildenden öffnung 43,143 der Begrenzungswand 41,141 des Mischelementes 40 ist zu der an die Mischscheibe 30 angelegten Tangente 33 veränderbar (Fig.3).

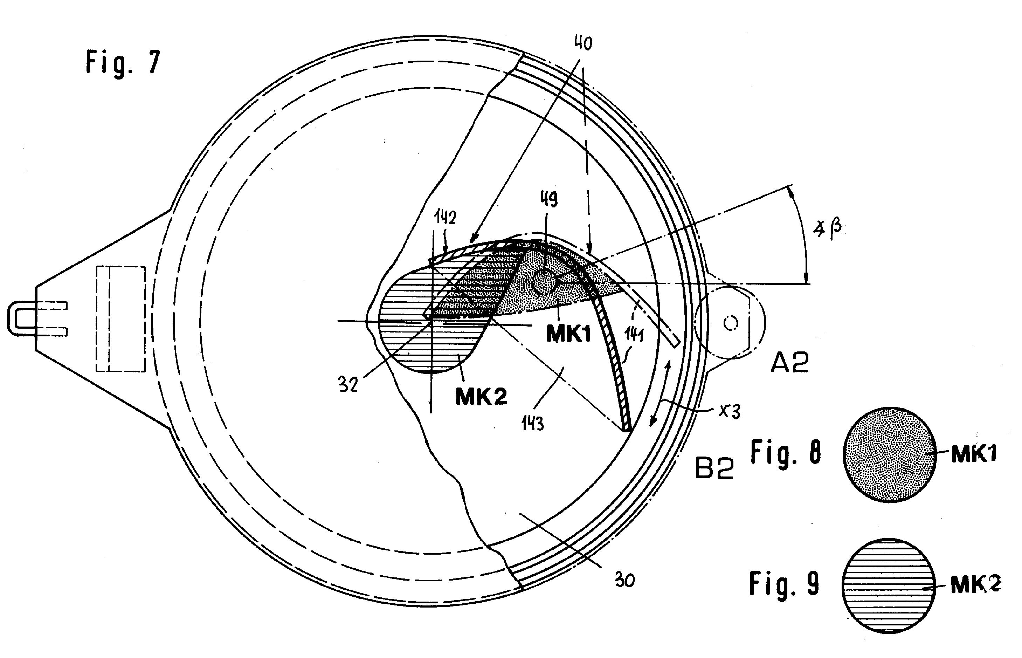

Das Mischelement 40 ist zu der Mischscheibe 30 derart angeordnet, daß die senkrechte Öffnungsfläche 45 der von der Begrenzungswand 41,141 des Mischelementes 40 bildenden Öffnung 43,143 zur Radiuslinie 34 der Mischscheibe 30 parallel und durch den Mischscheibenmittelpunkt 32 verlaufend und um seine senkrechte Achse 46 derart verschwenkbar ist, daß die Öffnungsfläche 45 der Öffnung 43, 143 in einem Winkel zur Radiuslinie 34 liegend ist (Stellung A1 in Fig.3 und Stellung A2 in Fig.7) oder daß die Öffnungsfläche 45 der Öffnung 43,143 um einen Abschnitt 35 zur Radiuslinie 34 versetzt verlaufend und die Öffnung 43,143 zum Mischscheibenmittelpunkt 32 zeigend ist (Stellung B1 in Fig.3 und Stellung B2 in Fig.7). Dabei ist das Mischelement 40 zu der Mischscheibe 30 derart angeordnet, daß die Kreislinien 37 der Mischscheibe 30 im rechten Winkel α auf den dem Mischscheibenmittelpunkt 32 zugekehrten Wandabschnitt 41a der beiden Wandabschnitte 41a,41b der Begrenzungswand 41 des Mischelementes 40 treffen (Fig.4). Hier sind alle Aufprallwinkel 90°. Infolge der höheren Umfangsgeschwindigkeit ist die Fließtendenz der Mischmasse nach außen.

Nimmt dagegen das rechtwinklig ausgebildete Mischelement 40 die in Fig. 3 und 5 gezeigte Stellung B1 ein, dann ist das Mischelement 40 zu der Mischscheibe 30 derart angeordnet, daß die Kreislinien 37 der Mischscheibe 30 in einem speitzen Winkel α auf den dem Mischscheibenmittelpunkt 32 zugekehrten Wandabschnitt 41a der beiden Wandabschnitte 41a, 41b der Begrenzungswand 41 des Mischelementes 40 treffen. Hierbei sind alle Aufprallwinkel kleiner als 90° und die Fließtendenz der Mischmasse erfolgt in Richtung zum Mischscheibenmittelpunkt 32.

In Übereinstimmung des Verlaufs der Kreislinien 37 der Mischscheibe 30 zu dem rechtwinklig ausgebildeten Mischelement 40 treffen auch die Masseteilchen des Mischungskörpers MK in einem Winkel α2 von 90° auf den Abschnitt 41a des Mischelementes 40 auf, wenn das Mischelement die in Fig. 4 dargestellte Stellung A1 einnimmt. Nimmt dagegen das Mischelement 40 zu der Mischscheibe 30 die in Fig.5 dargestellte Stellung B1 ein, dann treffen die Masseteilchen des Mischungskörpers MK in einem Winkel α3 von kleiner als 90° auf die Begrenzungswand 41 des rechtwinkligen Mischelementes 40 auf (Fig.5).

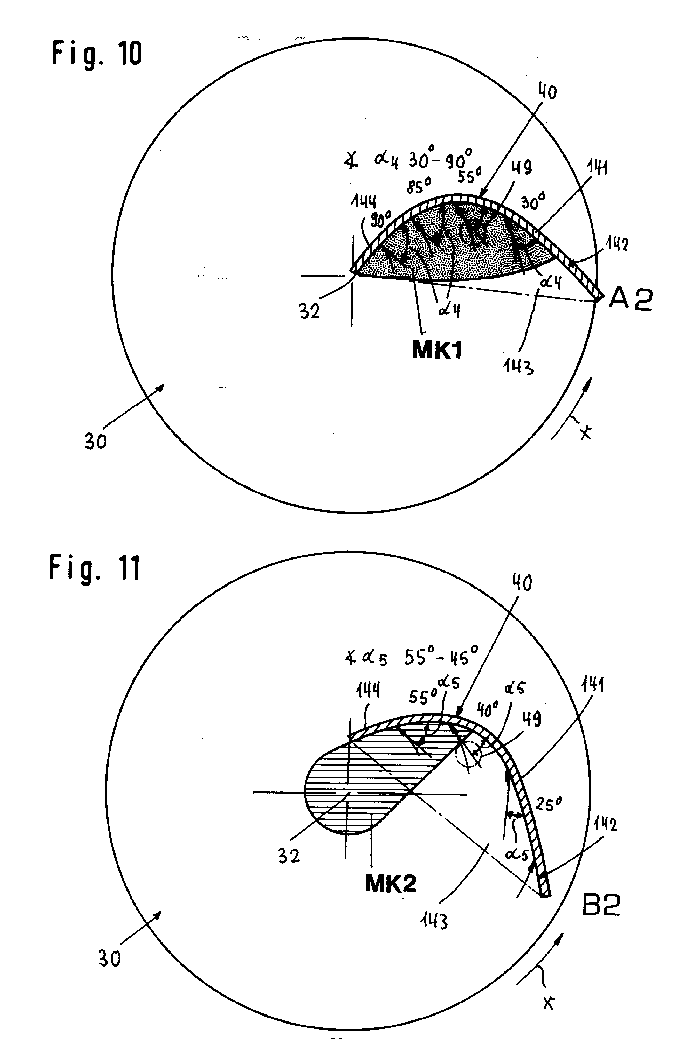

In ähnlicher Weise wie die Zuordnung des rechtwinkligen Mischelementes 40 zu der Mischscheibe 30 erfolgt, erfolgt auch die Zuordnung des Mischelementes 40 mit einer bogenförmig ausgebildeten Begrenzungswand 141 zu der Mischscheibe 30 (Fig.7). Auch das bogenförmige Mischelement 40 wird wechselweise in Pfeilrichtung X3 von der Stellung A2 in die Stellung B2 und von dieser wieder in die Stellung A2 entsprechend dem rechtwinklig ausgebildeten Mischelement 40 bewegt (Fig.3). Dieses Mischelement 40 mit seiner bogenförmigen, senkrecht stehenden Begrenzungswand 141 ist zu der Mischscheibe 30 in seiner Stellung A2 derart angeordnet, daß die Masseteilchen des Mischungskörpers MK in einem von außen nach innen verlaufenden Winkelbereich α4 von 30° bis 90° auf die Begrenzungswand 141 des bogenförmigen Mischelementes 40 auftreffen (Fig.10). In der Stellung B2 ist dagegen das bogenförmig ausgebildete Mischelement 40 zu der Mischscheibe 30 derart angeordnet, daß die Masseteilchen des Mischungskörpers MK in dem dem Mittelpunkt 32 der Mischscheibe 30 zugekehrten Abschnitt 144 der Begrenzungswand 141 in einem von außen nach innen verlaufenden Winkelbereich α5 von 55° bis 45° auf die Begrenzungswand 141 des Mischelementes 40 auftreffen (Fig.11). Der Mischungskörper MK nimmt in den verschiedenen Stellungen A2,B2 des bogenförmig ausgebildeten Mischelementes 40 verschiedene Formen an, so wie dies in Fig. 7 dargestellt ist. In der Stellung A2 des Mischelementes 40 liegt der Mischungskörper MK1 (Fig.8) in dem von dem bogenförmig ausgebildeten Mischelement 40 begrenzten Innenraum und wird vom Wandbereich der Begrenzungwand 141 begrenzt. Wird dagegen das Mischelement von der Stellung A2 in die Stellung B2 bewegt, dann wandert der Mischungskörper MK2 in Richtung des Mittelpunktes 32 der Mischscheibe 30 und über diesen Mittelpunkt hinaus (Fig.7 und 9). Der Schwenkbereich des Mischelementes 40 von seiner Stellung A2 in die Stellung B2 ist in Fig.7 durch den Winkel β angedeutet . Nimmt das Mischelement 40 die Stellung B2 ein, dann weist der Mischungskörper MK2 etwa Tropfenform auf und wird das Mischelement von der Stellung B2 in die Stellung A2 zurückbewegt, dann wandert der Mischungskörper MK2 bei gleichzeitiger Verformung seiner Masse mit dem Mischelement 40 mit, so daß der Mischungskörper MK einer ständigen, wechselnden Verformung unterworfen ist, wobei die jeweiligen Grenzen der beiden Verformungen durch die Mischungskörper MK1 und MK2 dargestellt sind. Diese ständige Verformung des Mischungskörpers MK während der wechselnden Schwenkbewegung des bogenförmig ausgebildeten Mischelementes 40 bewirkt in Verbindung mit der umlaufend angetriebenen Mischscheibe 30 und der Begrenzungwand des Mischelementes 40 ein Durchmischen und Durchwalken der Spachtelmasse mit der Härterpaste, so daß in kürzester Zeit eine homogene Durchmischung erreicht wird.

Sowohl das Mischelement 40 mit seiner rechtwinkligen Begrenzungswand 41 als auch das Mischelement 40 mit seiner bogenförmigen Begrenzungswand 141 werden zu der Mischscheibe 30 wechselweise bewegt, und zwar das rechtwinklig ausgebildete Mischelement derart, daß einmal die Masseteilchen des Mischungskörpers MK in einem Winkel α2 von 90° und danach in einem Winkel α3 von kleiner als 90° auf die Begrenzungswand 41 des Mischelementes 40 auftreffen (Fig.4 und 5). Die Umlaufbewegung während des Misch- und Walkprozesses des Mischungskörpers MK erfolgt dabei in Pfeilrichtung X4 (Fig.6). Das bogenförmig ausgebildete Mischelement wird zu der Mischscheibe 30 derart wechselweise bewegt, daß einmal die Masseteilchen des Mischungskörpers MK in einem von außen nach innen verlaufenden Winkelbereich α4 von 30° bis 90° und danach in einem von außen nach innen verlaufenden Winkelberteich α5 von 55° bis 45° in dem dem Mittelpunkt 32 der Mischscheibe zugekehrten Abschnitt 144 der Begrenzungswand 141 des Mischelementes 40 auf diese auftreffen (Fig.7).

Während des Mischvorganges ist die Drehzahl der Mischscheibe 30 so gewählt, daß das Mischgut trotz gegebener Fliehkraft auf der Mischscheibe 30 verbleibt. Bei Mischgut mit niedriger Viskosität ist es von Vorteil, wenn die Mischscheibe 30 mit einem senkrecht stehenden, umlaufenden Rand 38 versehen ist (Fig.6).

Die Mischvorrichtung 10 wird wie folgt verwendet:

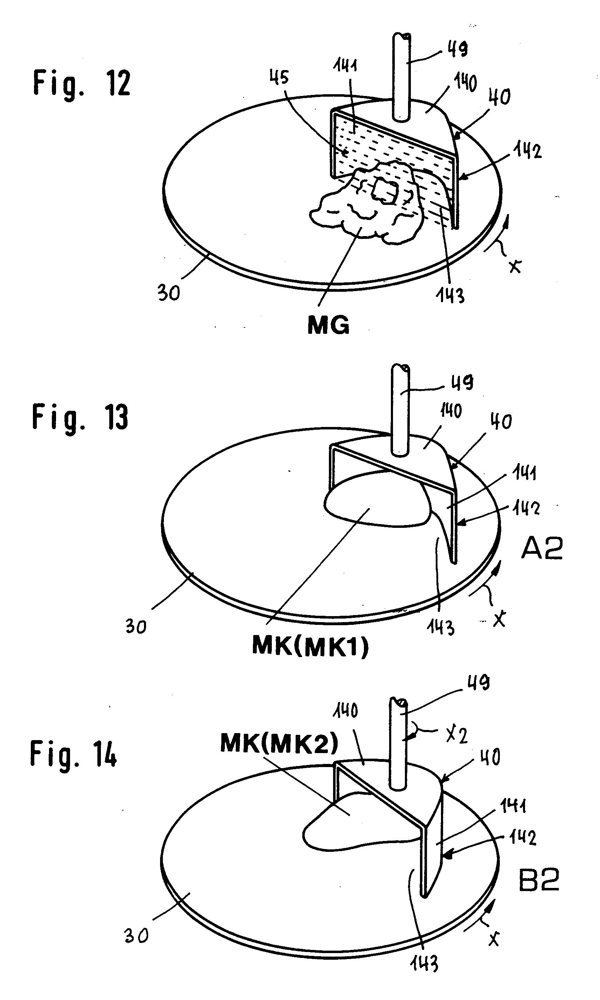

Die Aufgabe der Mischungskomponenten, wie Spachtelmasse und Härterpaste, erfolgt in einem vorgegebenen Verhältnis in dosierter Menge entweder von Hand oder vermittels einer in Fig. 1 bei 80 angedeuteten und nachstehend noch näher beschriebenen Vorrichtung, mit der ein dosiertes Ausgeben von Spachtelmasse und Härterpaste möglich ist. In diesem Fall bilden die Mischvorrichtung 10 und die Ausgabevorrichtung 80 eine Baueinheit, bei der die beiden Vorrichtungen 10 und 80 an einem Tragrahmen 81 angeordnet sind. Die Ausgabevorrichtung 80 weist an ihrem Gehäuse 86 Halterungen 84,85 zur Aufnahme eines Spachtelmasse enthaltenden Behälters 82 und einer die Härterpaste aufnehmenden Kartusche 83 auf. Spachtelmasse und Härterpaste werden über hydraulisch betätigbare Kolben Auslaßöffnungen 90,91 zugeführt, die mittels eines Schwenkschiebers 87 geöffnet und verschlossen werden, wobei dieser Schwenkschieber vermittels einer griffartigen Handhabe 92 um die Schwenkachse 88 entweder von Hand oder mittels mechanischer, pneumatischer oder elektromotorischer Einrichtungen verschwenkbar ist. Werden die Ausgabeöffnungen 90,91 freigegeben, dann wird Härterpaste und Spachtelmasse auf die Mischscheibe 30 bei geöffnetem Mischbehälter 50 gegeben. Spachtelmasse und Härter werden z.B. in einem Mischungsverhältnis von 3 Teilen Härter und 97 Teilen Kunststoffmasse der Mischscheibe 30 zugeführt. Befindet sich das Mischgut MG auf der Mischscheibe 30 (Fig.12), dann wird der Mischbehälter 50 durch Auflegen seines Deckelteils 54 von Hand, mechanisch, pneumatisch oder elektromotorisch geschlossen, wobei gleichzeitig während des Schließvorganges zusammen mit dem Deckelteil 54 das Mischelement 40 in den Mischraum 20 des Mischbehälters 50 verschwenkt wird, so daß bei geschlossenem Deckelteil 54 das Mischelement 40 oberhalb der Mischscheibe 30 zu liegen kommt (Fig.12 bis 14). Nach dem Schließen des Deckelteils 54 wird die Vakuumerzeugungseinrichtung 60 in Betrieb gesetzt und der Mischraum 20 evakuiert. Gleichzeitig wird die Mischscheibe 30 vermittels ihrer Antriebseinrichtung 130 in Umdrehung gesetzt, so daß die Mischscheibe 30 in Pfeilrichtung X umläuft, während das Mischelement 40 feststehend in dem Mischraum 20 ist. Dadurch, daß sich die Mischscheibe 30 gegen das Mischelement 40 in Pfeilrichtung X bewegt, wird das Mischgut MG in das schaufelartig ausgebildete Mischelement 40 bewegt, wobei die weitere Bewegung dann durch die rechtwinklige Begrenzungswand 41 oder durch die gebogene Begrenzungswand 141 des Mischelementes 40 begrenzt wird. Aufgrund der ständig umlaufenden Mischscheibe 30 wird das Mischgut in Rotation in Pfeilrichtung X4 versetzt (Fig.6). Aufgrund der Bewegungsabläufe formt sich das Mischgut MG (Fig.12) in dem von dem schaufelförmigen Mischelement 40 ausgebildeten Raum zu den in Fig. 13 und 14 dargestellten Mischungskörpern MK, wobei die Lage und die Form dieser Mischungskörper von der jeweiligen Stellung des Mischelementes 40 abhängt. In der Stellung A1 des Mischelementes 40 liegt der Mischungskörper MK im Innenraum des Mischelementes 40 (Fig.13), während in der Stellung B1 des Mischelementes 40 der Mischungskörper sich mehr in Richtung zum Mittelpunkt 32 der Mischscheibe 30 erstreckt (Fig.14). Der Mischvorgang wird unter Vakuum durchgeführt. Während der gesamten Mischzeit wird dieses Vakuum aufrechterhalten. Mittels des verschwenkbaren Mischelementes 40 erfolgt eine intensive Vermischung der beiden oder mehrerer Komponenten auf der Mischscheibe 30, wobei das Mischelement 40 gleichzeitig die Funktion einer Abstreifvorrichtung hat. Bei einer geneigten Stellung des Mischelementes 40 erfolgt die Drehbewegung schneller gegenüber einer 90° Stellung, was auf die längere Kontaktfläche mit dem Untergrund zurückzuführen ist. Mischdauer und Umlaufgeschwindigkeit der Mischscheibe sind vorgegeben und abhängig von der Gesamtmenge der jeweiligen miteinander zu mischenden Komponenten.

Nach Beendigung des Mischvorganges wird durch Verschwenken des Deckelteils 54 von der Verschlußstellung A in die Stellung B (Fig.1) der Mischbehälter 50 geöffnet und die Mischscheibe 30 mit dem Mischgut kann der Mischvorrichtung 10 entnommen werden.

Die Mischvorrichtung 10 eignet sich besonders zur Herstellung kleinerer Mengen von mittel- oder höherviskosen Zwei- und Mehrkomponentenmassen, wie Spachtelmassen, insbesondere Polyesterspachtelmassen, die zum Ausgleich von Unebenheiten der Bleche von Kraftfahrzeugkarosserien nach Unfallschäden oder für sonstige Blechreparaturarbeiten verwendet werden. Vermischt werden hierzu eine Kunststoffmasse mit einem farblosen oder eingefärbten Härter, z.B. in einem Mischungsverhältnis von 3 Teilen Härter und 97 Teilen Kunststoffmasse oder in einem anderen geeigneten Mischungsverhältnis.

Die Mischscheibe 30 kann auch auswechselbar ausgebildet sein und ist dann über Mitnehmer mit der umlaufend angetriebenen Trägerscheibe verbunden.

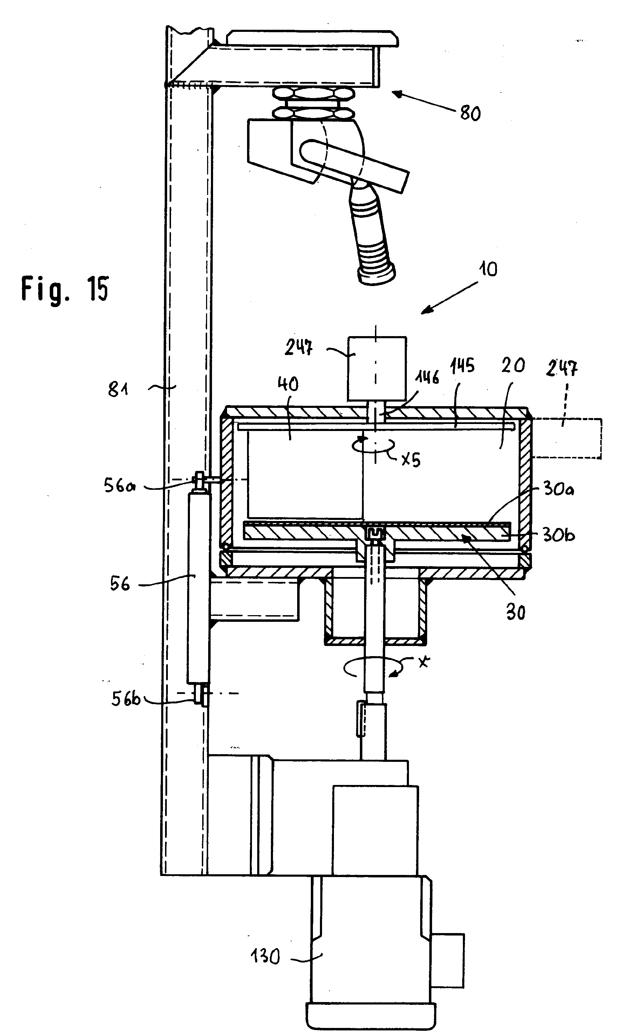

Nach einer weiteren Ausführungsform besteht die Mischscheibe 30 aus zwei übereinanderliegend angeordneten, gleiche oder ungleiche Abmessungen aufweisenden Scheibenkörpern 30a,30b, die beide über lösbare Haftverbindungen, wie Haftverschluß, Magnetverschluß od.dgl., miteinander verbunden sind und von denen der obere Scheibenkörper 30a als Spachtelmassenträger bzw. Mischgutträger ausgebildet ist (Fig.15). Ist die Mischscheibe 30 bzw. der obere Scheibenkörper 30a der beiden die Mischscheibe 30 bildenden Scheibenkörper 30a,30b mit einem nach oben gezogenen, umlaufenden Rand 38 versehen, dann kann die Mischscheibe 30 bzw. der Scheibenkörper 30a aus einem elastischen Werkstoff, wie Gummi oder einem gummiähnlichen Werkstoff, bestehen.

Je nach den eingesetzten Mengen des Mischgutes MG nimmt dieses unterschiedliche Formen ein. In Fig. 1 sind verschiedene Mischgutmengen bei MG1,MG2 und MG3 dargestellt. Die Kurve MG1 entspricht einer Mischgutmenge von etwa 250 g, die Kurve MG2 einer Mischgutmenge von etwa 150 g und die Kurve MG3 einer Mischgutmenge von etwa 100 g.

Bei der Mischvorrichtung 10 nach Fig. 1 und 2 ist die Mischscheibe 30 gegenüber dem feststehend, im Mischraum 20 angeordneten Mischelement 40 umlaufend angetrieben. Nach einer weiteren Ausführungsform gemäß Fig. 15 sind die Mischscheibe 30 und das Mischelement 40 der Mischvorrichtung 10 gegenläufig zueinander umlaufend angetrieben. Auch bei dieser Ausführungsform besteht die Mischvorrichtung 10 aus einem Mischbehälter 50 mit einem quadratischen oder kreisförmigen Querschnitt aus einem Bodenteil 51, einer umlaufenden Seitenwand 52, einem die obere Behälteröffnung 53 verschließenden Deckelteil 54, das mittels mechanischer Einrichtungen oder vermittels Vakuum an der Behälterseitenwand 52 im Betriebszustand der Mischvorrichtung 10 befestigt wird, aus einer im Mischraum 20 des Mischbehälters 50 angeordneten, waagerechten Mischscheibe 30, die auf dem Bodenteil 51 gelagert ist und um ihre senkrechte Mittelachse 31 vermittels einer am Bodenteil 51 angeordneten Antriebseinrichtung 130 umlaufend angetrieben wird, und aus einem oberhalb der umlaufend angetriebenen Mischscheibe 30 gegenüber dieser um eine senkrechte Achse 146 vermittels einer Antriebseinrichtung 247 zur Umlaufrichtung der Mischscheibe 30 gegenläufig umlaufend angetriebenen Mischelement. Das Mischelement 40 ist als im Mischraum 20 angeordneter, senkrecht zur Mischscheibe 30 stehender Formkörper 42,142 mit der Funktion einer Mischschaufel ausgebildet, wobei dieser Formkörper aus einer rechtwinkligen oder gebogenen Begrenzungswand 41,141 besteht. Die Mischscheibe 30 ist abnehmbar mit der Antriebsachse 131 der Antriebseinrichtung 130 verbunden oder besteht aus zwei lösbar miteinander verbundenen Scheibenkörpern 30,30b. Das gegenüber der umlaufenden Mischscheibe 30 umlaufende Mischelement 40 ist radial an einer an der Innenwandfläche 54a des Deckelteils 54 des Mischbehälters 50 gelagerten Antriebsscheibe 145 befestigt, die mit der Antriebseinrichtung 247 in Wirkverbindung steht, wobei diese Antriebseinrichtung 247 auf der Außenseite des Deckelteils 54 angeordnet und mit der Achse 146 verbunden ist, wobei jedoch die Antriebseinrichtung 247 auch an der Außenwandfläche der Seitenwand 52 angeordnet sein kann. Die Antriebsachse der Antriebseinrichtung 247 steht dann über ein entsprechend gestaltetes Getriebe mit der Antriebsscheibe 145 in Verbindung, um die Antriebsscheibe 145 in Pfeilrichtung X5 umlaufend anzutreiben (Fig.15). Auch bei dieser Ausführungsform ist das Mischelement 40 verschwenkbar ausgebildet, um das Mischelement 40 im Bereich der Stellungen A1,B1 bzw. A2,B2 verschwenken zu können. Für diese Verschwenkbarkeit des Mischelementes 40 ist an der Antriebsscheibe 145 die mit der Antriebsachse 49 für das Mischelement 40 verbundene Antriebseinrichtung 147 angeordnet, die über die Steuereinrichtung 200 derart gesteuert wird, daß das Mischelement 40 eine wechselseitige Schwenkbewegung ausführt.

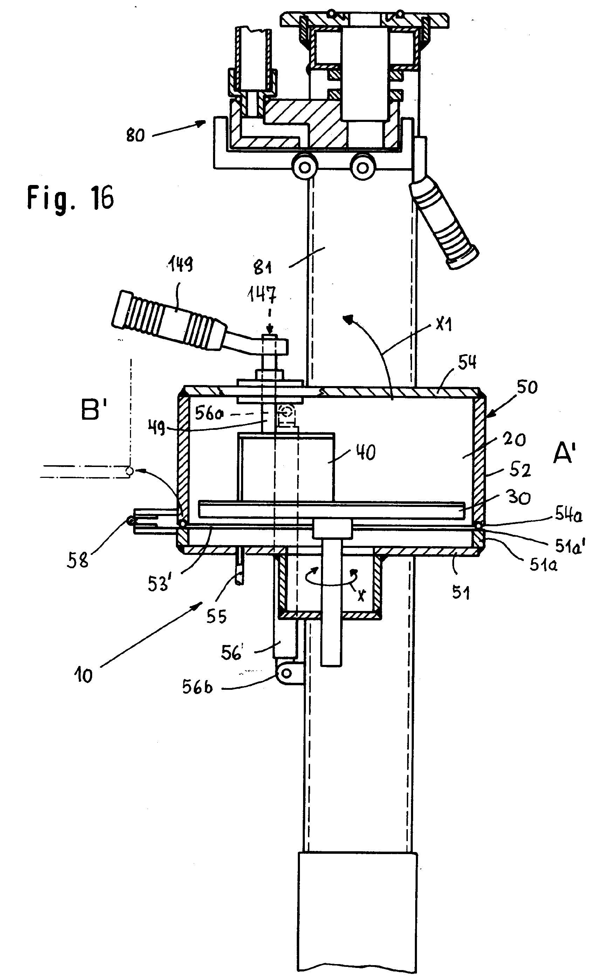

Bei der in Fig. 16 gezeigten Ausführungsform weist die Vorrichtung 10 einen Mischbehälter 50 auf, dessen Deckelteil 54 haubenförmig ausgebildet ist und auf dem umlaufenden Rand 51a' der senkrechten Seitenwand 51a des Bodenteils 51 aufsitzt. Das Bodenteil 51 ist plattenförmig ausgebildet und mit einem senkrecht zum Bodenteil stehenden umlaufenden Rand 51a' versehen. Das haubenförmige Deckelteil 54 sitzt mit dem umlaufenden Rand 54a der Deckelteilseitenwand 52 auf dem umlaufenden Rand 51a' der Seitenwand 51a des Bodenteils 51 auf, so daß die Behälteröffnung 53' im unteren Bereich des Mischbehälters 50 liegt. In dem Mischraum 20 sind die Mischscheibe 30 und das dieser zugeordnete Mischelement 40 angeordnet, das über die griffartige Handhabe 149 wechselseitig in Pfeilrichtung X2 um seine senkrechte Achse verschwenkbar ist, wobei diese Verschwenkbarkeit auch elektromotorisch oder mittels einer andersartig ausgebildeten und geeigneten Antriebseinrichtung durchgeführt werden kann. Der Mischraum 20 ist evakuierbar. Im Betriebszustand wird das haubenförmige Deckelteil 54 mittels mechanischer Einrichtungen oder mittels Vakuum in der Verschlußstellung gehalten. Einendseitig ist das Deckelteil 54 bei 58 an das Bodenteil 51 scharnierartig angelenkt, so daß das Öffnen des Mischbehälters 50 durch Verschwenken des haubenförmigen Deckelteils 54 in Pfeilrichtung X1 von der Stellung A' in die Stellung B' erfolgt, wobei das an dem Deckelteil 54 gehaltene Mischelement 40 mit in die Öffnungsstellung B' verschwenkt, so daß die Mischscheibe 30 frei zugänglich für die Entnahme des Mischgutes ist. Das Öffnen des Mischbehälters 50 wird unterstützt durch eine Zugfeder,Gasfeder, Hydraulikzylinder od.dgl. 56, die bei 56a und 56b an der Deckelteilseitenwand 52 und an dem Bodenteil 51 bzw. an dem Wandhalter 81 befestigt ist. Die Vorrichtung 10 ist in Verbindung mit der Vorrichtung 80 zum dosierten Ausgeben von Spachtelmassen und Härterpasten an einem Wandhalter 81 befestigt, wobei beide Vorrichtungen 10,80 derart übereinanderliegend angeordnet sind, daß über die Vorrichtung 80 Spachtelmasse und Härter bzw. Härterpaste direkt auf die Mischscheibe 30 bei geöffnetem Mischbehälter 50 abgegeben werden können.

Die Ausgestaltung der Mischvorrichtung 10 mit einem Mischbehälter 50, dessen Deckelteil 54 haubenförmig ausgebildet und auf einem plattenförmigen Bodenteil 51 aufsitzt, wodurch die Entnahmeöffnung des Mischbehälters in Bodenteilnähe gebracht wird, erbringt den Vorteil, daß die Mischscheibe 30 nicht mehr über die mit dem Bodenteil 51 fest verbundene Seitenwand 52 des in Fig. 1 und 2 dargestellten Mischbehälters 50 mehr gehoben zu werden braucht, sondern daß das Mischgut zusammen mit der Mischscheibe 30 frei zur Entnahme auf dem Boden 52 aufliegt.

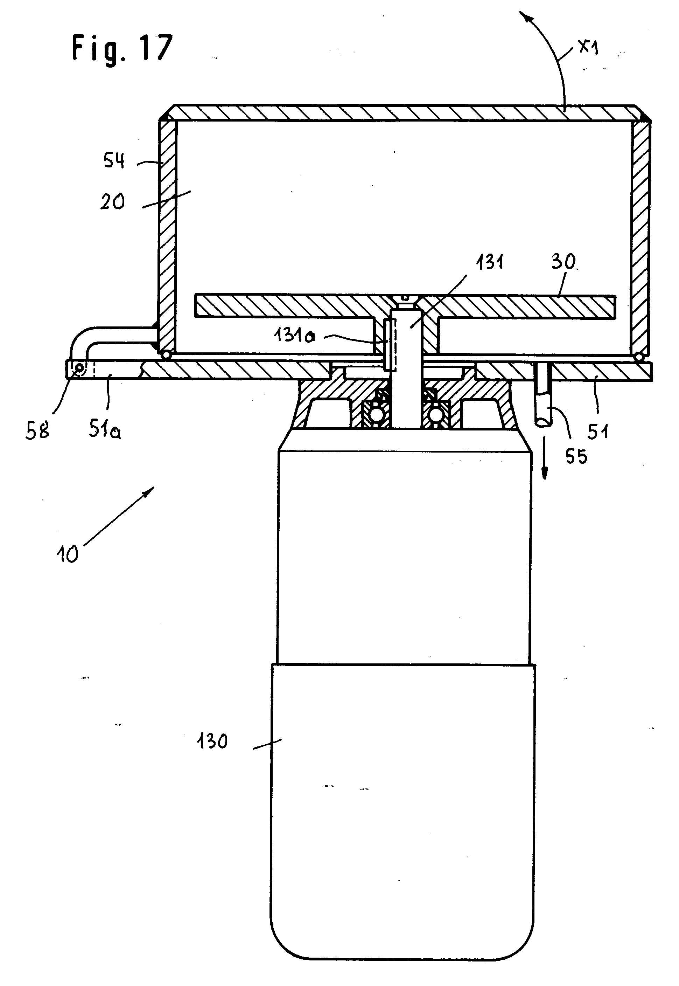

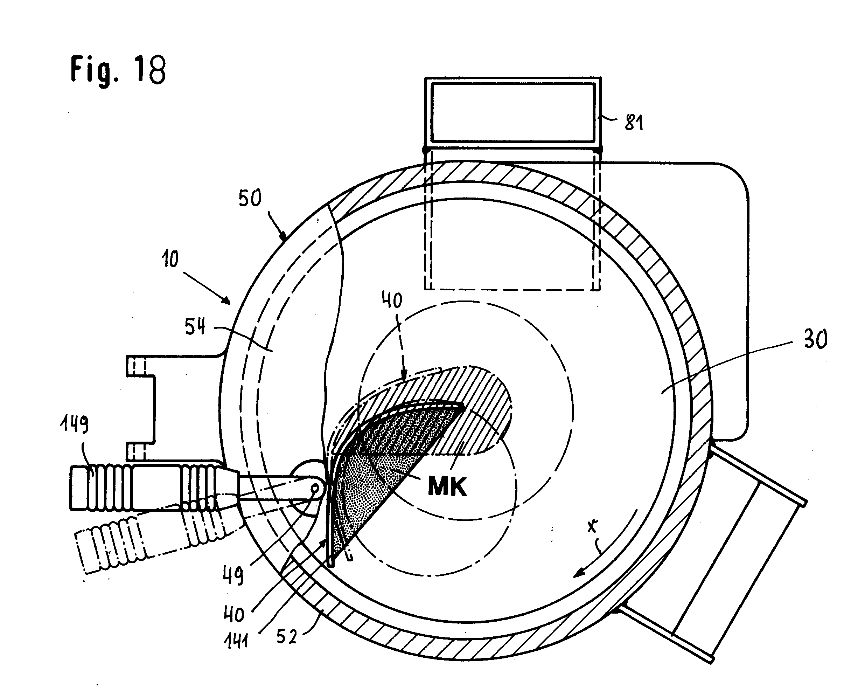

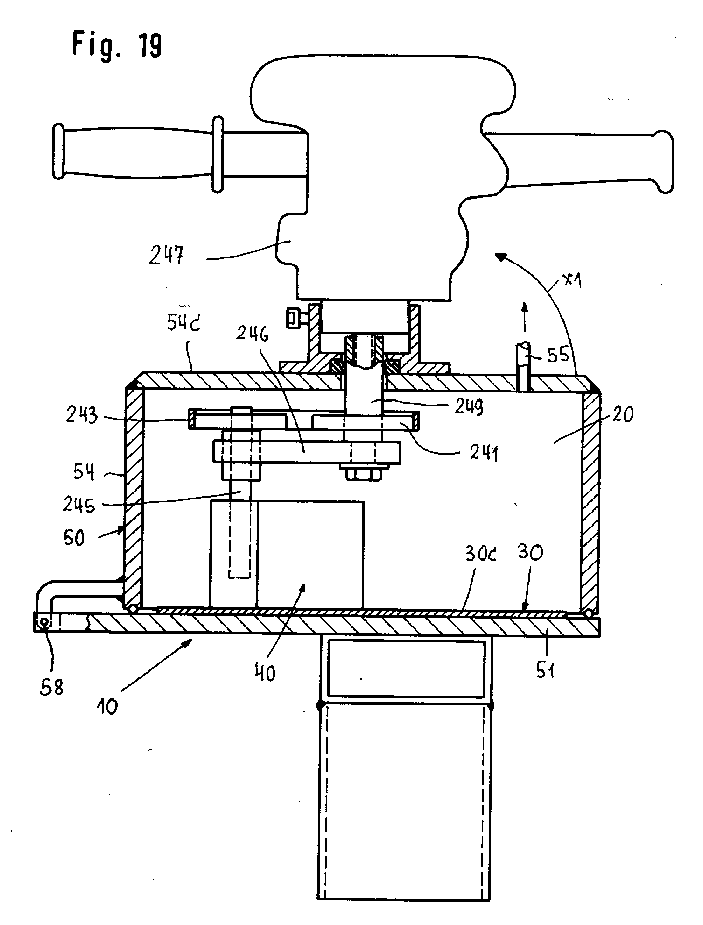

Bei der Mischvorrichtung 10 gemäß Fig.17 und 18 besteht der Mischbehälter 50 lediglich aus einem plattenförmigen Bodenteil 51, auf das das haubenförmige Deckelteil 54 aufgesetzt ist. Um ein vollständiges Freilegen der Mischscheibe 30 zu erreichen, ist das haubenförmige Deckelteil 54 an einem verlängert ausgebildeten Abschnitt 51a des Bodenteils 51 bei 58 angelenkt, so daß das Deckelteil 54 gänzlich aus dem Bereich der Mischscheibe 30 herausgeklappt werden kann. Im geöffneten Zustand des Mischbehälters 50 ist die Mischscheibe 30 frei entnehmbar, die auf ihre Antriebsachse 131 aufgesteckt und vermittels eines Mitnehmerbolzens 131a von der umlaufenden Antriebsachse 131 mitgenommen wird. Wie auch bei den anderen Ausführungsformen ist in dem Mischraum 20 oberhalb der Mischscheibe 30 das Mischelement 40 mit einer rechtwinkligen oder bogenförmigen Begrenzungswand 41,141 angeordnet, wobei das Mischelement 40 in Fig. 17 nicht dargestellt ist. Das wechselseitige Verschwenken des Mischelementes 40 erfolgt auch hier entweder von Hand mittels der griffartigen Handhabe 149 oder mittels eines elektromotorischen Antriebes (Fig.19).

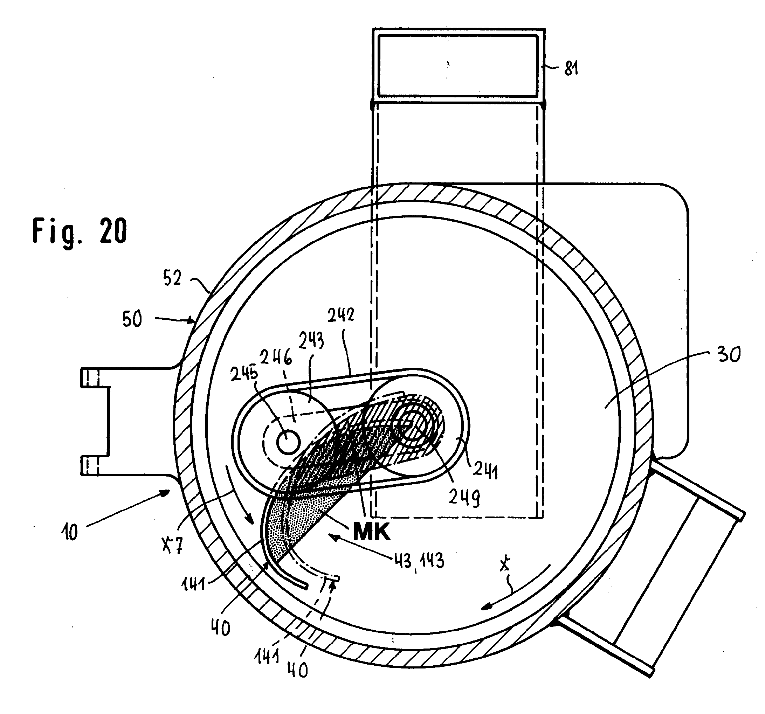

Bei der Ausführungsform gemäß Fig.19 und 20 wird das Mischelement 40 umlaufend oberhalb der feststehenden Mischscheibe 30 angetrieben. Der Mischbehälter 50 weist in seinem Mischraum 20 das Mischelement 40 auf, das senkrecht zur waagerechten Mischscheibe 30 steht, die als plattenförmiger Scheibenkörper 30c ausgebildet ist, die lösbar auf dem Bodenteil 51 des Mischbehälters 50 angeordnet ist. Die Halterung des Scheibenkörpers 30c, auf dem Spachtelmasse und Härterpaste miteinander vermischt werden, erfolgt z.B. mittels einer magnetischen Haftverbindung; jedoch auch mittels eines angelegten Vakuums kann die vorübergehende Haftung des Scheibenkörpers 30c auf dem Bodenteil 51 erreicht werden. Der Scheibenkörper 30c besteht aus metallischen Werkstoffen oder geeigneten Kunststoffen. Im geschlossenen Zustand des Mischbehälters 50 ist dessen Mischraum 20 evakuierbar.

Die Antriebseinrichtung 247 für das Mischelement 40 ist auf der Außenseite der oberen Abdeckung 54c des haubenförmigen Deckelteils 54, das auch entsprechend Fig. 1 und 2 ausgebildet sein kann, angeordnet. Die Antriebsachse 249 der Antriebseinrichtung 247 ist durch die obere Abdeckung 54c hindurchgeführt und trägt an ihrem freien Ende einen in dem Mischraum 20 angeordneten Trägerarm 246, der an seinem freien Ende eine Schwenkachse 245 trägt, die mit dem Mischelement 40 verbunden ist. Des weiteren Trägt die Antriebsachse 249 eine Riemenscheibe 241; eine weitere Riemenscheibe 243 sitzt auf der mit dem Mischelement 40 verbundenen Schwenchackse 245. Beide Reimenscheiben 241,243 sind über einen Riementrieb 242 verbunden, mit dem die Stellung des Mischelementes 40 zu der Mischscheibe 30 derart gesteuert wird, daß das Mischelement 40 während seines Umlaufes entweder die gleiche Stellung zu der Mischscheibe 30 beibehält oder wechselweise die in den Fig. 3 und 7 gezeigten Schwenkstellungen einnimmt, wobei letztere von Hand oder elektromotorisch erhalten werden. Das Mischelement 40 nimmt dabei zu der Mischscheibe 30 die Stellung ein, in der die öffnung 43,143 des Mischelementes 40 in Umlaufrichtung X des Mischelementes 40 liegt (Fig.19 und 20)

Um den Scheibenkörper 30c, der bei der Mischvorrichtung 10 gemäß Fig. 19 und 20 die Mischscheibe 30 bildet, mühelos von dem Bodenteil 51 abheben zu können, ist der Scheibenkörper 30c an seinem umlaufenden Rand mit einer in der Zeichnung nicht dargestellten Handhabe versehen.

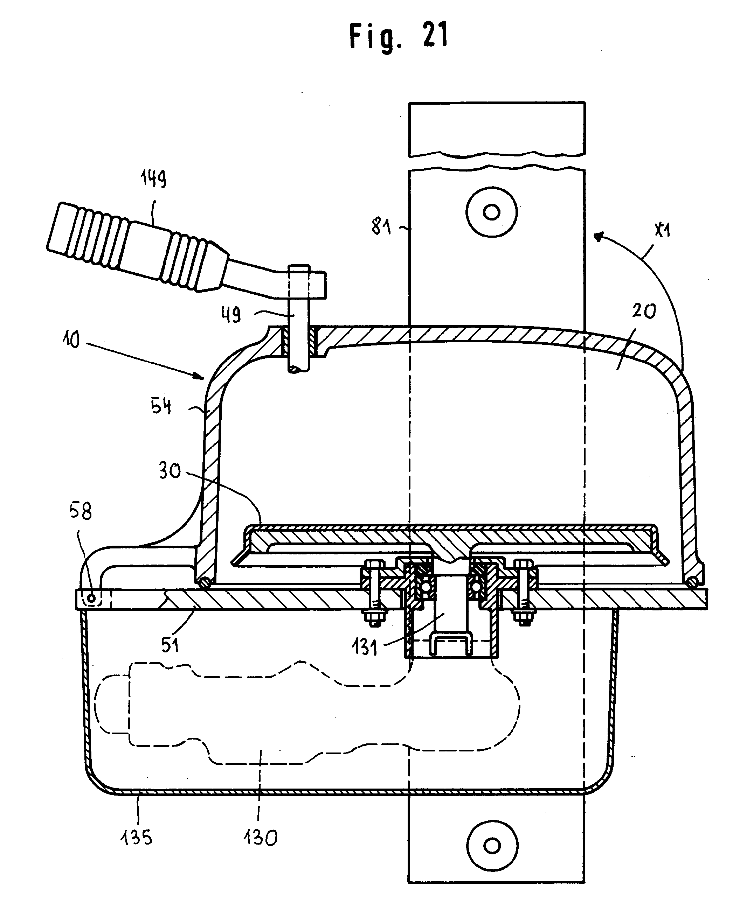

Um der Mischvorrichtung 10 möglichst kleine Abmessungen zu geben und um somit ein handliches Mischgerät zu schaffen, ist die Antriebseinrichtung 130 für die Mischscheibe 30 zur Mischscheibenantriebsachse 131 querliegend in einem unterhalb des Bodenteils 51 angeordneten Gehäuse 135 angeordnet. Das auf dem Bodenteil 51 aufsitzende Deckelteil 54 ist haubenförmig mit einem abgerundeten, oberen Rand ausgebildet. Das in Fig. 21 nicht dargestellte Mischelement 40 ist entsprechend den vorangehend beschriebenen Ausführungsformen ausgebildet.

Der Mischbehälter 50 ist zusammen mit der Vorrichtung 80 zum dosierten Ausgeben von Spachtelmasse und Härterpaste an einem als Wandhalter ausgebildeten Tragrahmen 81 befestigt, wobei die Auslaßöffnungen 90,91 der Ausgabevorrichtung 80 zu dem Mischbehälter 50 derart angeordnet sind, daß bei geöffnetem Mischbehälter 50 die Mischscheibe 30 unterhalb der Auslaßöffnungen 90,91 liegt, wobei der Abstand zwischen dem Mischbehälter 50 und der Ausgabevorrichtung 80 dem Radius des Schwenkbereiches des Deckelteils 54 des Mischbehälters 50 entspricht oder die Auslaßöffnungen 90,91 der Ausgabevorrichtung 80 oberhalb des Deckelteils 54 liegen, wobei dieser als Schieber ausgebildet ist.

Das schaufelartig ausgebildete Mischelement 40 braucht nicht um seine senkrechte Lagerachse verschwenkbar ausgebildet zu sein. Es besteht auch die Möglichkeit, das Mischelement zur Mischscheibe 30 in Pfeilrichtung Z zu verschieben (Fig.3).

Das Mischelement 40 kann als Träger für eine entsprechend gestaltete Platte aus einem Kunststoff mit hochpolierter Oberfläche ausgebildet sein, wobei diese Platte lösbar, z.B. mittels Klemm- oder Rastverbindungen an dem Träger gehalten ist. Auf diese Weise besteht die Möglichkeit, den von der Spachtelmasse während des Mischvorganges beaufschlagten Teil des Mischelementes 40 mühelos zu reinigen und bei zu starker Verschmutzung auszutauschen.

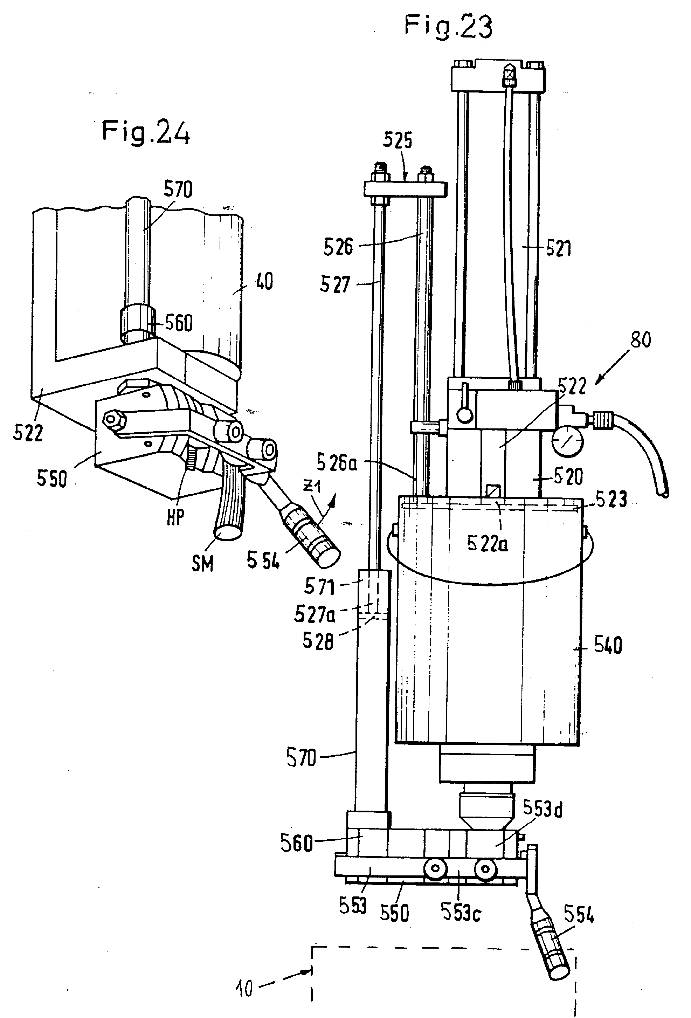

Die mit 80 bezeichnete Vorrichtung zur gleichzeitigen und dosierten Abgabe von Kunststoffmasse und Härter, wie beispielsweise Polyester-Spachtelmassen, und Härterpasten besteht gemäß Fig. 23 aus einem Traggestell 520, welches mit Befestigungseinrichtungen für einen Anschluß an eine senkrechte Wand od.dgl. versehen ist. An diesem Traggestell 520 ist auch die Mischvorrichtung 10 angeordnet.

Im oberen Bereich trägt das Traggestell 520 einen in an sich bekannter Weise ausgebildeten Arbeitszylinder 521, der mittels Druckluft,Druckgas,hydraulisch oder elektromotorisch oder von Hand betreibbar ist. Dieser Arbeitszylinder 521 ist mit einer senkrecht verfahrbaren Kolbenstange 522 versehen, an deren Ende 522a eine Kolbenplatte 523 befestigt ist.

Im unteren Bereich des Traggestells 520 ist an diesem im Bewegungsbereich der Kolbenstange 522 des Arbeitszylinders 521 eine Zentrierplatte 530 für einen dosenartigen Behälter 540 vorgesehen, der die Spachtelmasse aufnimmt. Dieser dosenartige Behälter 540 ist vor dem Einsetzen in die Vorrichtung 80 mittels eines Deckelteils 545 verschlossen. Das Bodenteil 543 des dosenartigen Behälters 540 ist mit einer Ausflußöffnung 544 versehen, die zur Aufbewahrung des mit Spachtelmasse gefüllten Behälters mittels eines in der Zeichnung nicht dargestellten Verschlußstopfens verschlossen ist.

Die Zentrierplatte 530 ist zum Arbeitszylinder 521 und seiner Kolbenstange 522 derart angeordnet, daß der auf die Zentrierplatte 530 aufgesetzte dosenartige Behälter 540 die Kolbenplatte 523 der Kolbenstange 522 des Arbeitszylinders 521 aufnehmen kann, so daß die Kolbenplatte 523 im Innenraum 541 des dosenartigen Behälters 540 längsverschieblich ist.

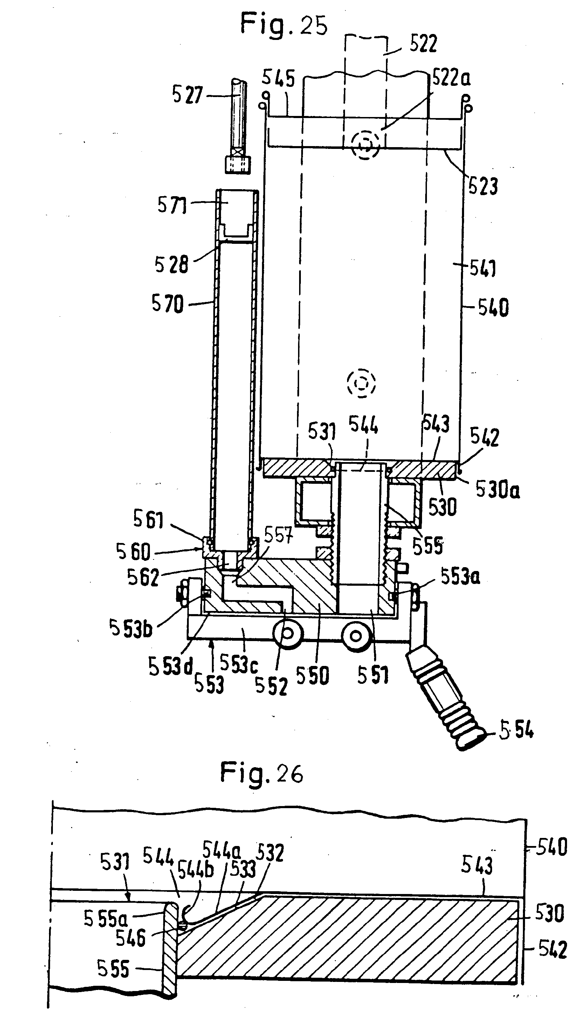

Der dosenartige Behälter 540 ist bodenseitig mit einem umlaufenden Rand 542 versehen und weist einen Querschnitt und Abmessungen auf, die denen der Zentrierplatte 530 entsprechen, so daß bei auf die Zentrierplatte 530 aufgesetztem dosenartigen Behälter 540 dessen umlaufender Rand 42 den umlaufenden Rand 530a der Zentrierplatte 530 übergreift, so daß der dosenartige Behälter 540 auf der Zentrierplatte 530 sicher gehalten ist (Fig.25).

Die Zentrierplatte 530 ist mit einer mittigen Durchbohrung 531 versehen, die auch exzentrisch zum Mittelpunkt der kreisförmigen Zentrierplatte 530 angeordnet sein kann. Der obere umlaufende Rand 532 dieser Durchbohrung 531 ist zur Durchbohrungsmitte hin konisch sich verjüngend ausgebildet, so wie dies in Fig. 26 dargestellt ist. Dieser konische Abschnitt ist mit 533 bezeichnet.

Unterhalb der Zentrierplatte 530 ist ein an dieser oder an dem Traggestell 520 befestigter Abfüllkopf 550 angeordnet (Fig.24 und 25).

Dieser Abfüllkopf 550 weist zwei Ausgabeöffnungen 551 und 552 auf, von denen die Ausgabeöffnung 551 zur Ausgabe der Spachtelmasse und die Ausgabeöffnung 552 zur Ausgabe der Härterpaste vorgesehen sind. Beide Ausgabeöffnungen 551,552 sind dicht nebeneinanderliegend angeordnet.

Die Ausgabeöffnung 551 für die Spachtelmasse ist vermittels eines Stutzens 555 mit der Durchbohrung 531 in der Zentrierpaltte 530 verbunden, während die andere Ausgabeöffnung 552 für die Härterpaste über eine Durchbohrung 556 in dem Abfüllkopf 550 mit einer in diesem oben ausgebildeten Eintrittsöffnung 557 verbunden ist.

Die beiden Ausgabeöffnungen 551 und 552 sind gemeinsam verschließbar mittels eines messerartig wirkenden Verschlußriegels 553, der U-förmig ausgebildet und bei 553a und 553b drehbar an den Seiten des Abfüllkopfes 550 gelagert ist (Fig.25). Dieser Verschlußriegel 553 ist von Hand betätigbar oder wird mittels geeigneter Antriebseinrichtungen verschwenkt, wobei die Öffnungszeit vorprogrammiert ist. An einem der Seitenschenkel des Verschlußriegels 553 ist eine Handhabe 554 vorgesehen, die als einarmiger Hebel ausgebildet ist. Die die Ausgabeöffnungen 551,552 aufweisende Fläche des Abfüllkopfes 550 ist kreisbogenförmig ausgebildet, so daß der Steg 553c des Verschlußriegels 553 auf der kreisbogenförmigen Fläche 553d des Abfüllkopfes 550 abläuft. Bei einem Verschwenken des Verschlußriegels 553 mittels der Handhabe 554 in Pfeilrichtung Z1 werden die beiden Ausgabeöffnungen 551,552 gleichzeitig freigelegt, so daß aus den Ausgabeöffnungen 551,552 die Spachtelmasse und die Härtermasse nebeneinanderliegend austreten können. In Fig.24 ist mit SM ein Strang aus Spachtelmasse und mit HP ein Strang der Härterpaste bezeichnet. Um zu verhindern, daß in der Verschlußstellung des Verschlußriegels 553 aus den Ausgabeöffnungen 551,552 noch Spachtelmasse oder Härterpaste nachfließen kann, liegen die beiden Ausgabeöffnungen 551,552 im Bereich von in der Fläche 553d des Abfüllkopfes 550 ausgebildeten nutenartigen Vertiefungen, in denen an der Innenseite des Steges 553c des Verschlußriegels 553 angeordnete Abdichtelemente bewegbar sind, wenn der Verschlußriegel 553 betätigt wird. Aufgrund dieser Ausgestaltung ist eine sehr gute Abdichtung der Ausgabeöffnungen 551,552 in der Verschlußstellung des Verschlußriegels 553 gewährleistet, so daß in keiner Weise aus diesen Ausgabeöffnungen noch Spachtelmasse oder Härterpaste nachfließen kann. Die Wirkungsweise des derart ausgebildeten Verschlußriegels entspricht einer messerartigen Abschneideeinrichtung, d.h. die aus den Ausgabeöffnungen 551,552 herausfließenden Stränge an Spachtelmasse und Härterpaste werden bei einem verschließen der Ausgabeöffnungen 551,552 regelrecht abgeschert bzw. abgeschnitten.

Auf dem Abfüllkopf 550 ist im Bereich dessen Eintrittsöffnung 557 für die Härterpaste ein Austauschadapter 560 angeordnet, der aufsteckbar und somit lösbar mit dem Abfüllkopf 550 verbunden ist. Dieser Austauschadapter ist mit einer Halterung 561 zur Aufnahme einer Kartusche 570 versehen, die die Härterpaste aufnimmt. Im Verwendungszustand ist die Kartusche 570 bodenseitig offen ausgebildet. Zur Aufbewahrung und Lagerung mit Härterpaste gefüllter Kartuschen ist die Kartusche 570 mit einem abnehmbaren Bodenteil versehen. Im oberen Bereich ist bei Nichtgebrauch der Kartusche 570 diese mittels eines in der Zeichnung nicht dargestellten Deckelteils verschlossen. Dieser Deckelteil wird beim Aufstecken der Kartusche 570 auf den Austauschadapter 560 abgenommen. Der Austauschadapter 560 ist ferner mit einer bei 562 angedeuteten Anschlußöffnung versehen, die mit der oberen Eintrittsöffnung 557 des Abfüllkopfes korrespondiert, so daß der Inhalt der auf den Adapter 560 aufgesetzten Kartusche 570 über die Anschlußöffnung 562 und die Eintrittsöffnung 557 der Durchbohrung 556 und somit der Ausgabeöffnung 552 in dem Abfüllkopf 550 zugeführt werden kann.

Der Austauschadapter 560 ist auf die Abmessungen der jeweils verwendeten Kartusche 570 abgestimmt, so daß Kartuschen mit unterschiedlichen Durchmessern unter Verwendung jeweils entsprechend ausgebildeter Austauschadapter 560 ohne weiteres auf den Abfüllkopf 550 aufsetzbar sind. Die Verwendung von Austauschadaptern 560 ist insofern vorteilhaft, als bei unterschiedlichen Außentemperaturen, denen die Vorrichtung 80 ausgesetzt ist, unterschiedliche Mengen an Härterpaste der Spachtelmasse zugeführt werden müssen. Bei kälteren Außentemperaturen wird mehr Härterpaste benötigt, so daß für ein entsprechendes Zudosieren von Härterpaste zu der Spachtelmasse Kartuschen für die Härterpaste verwendet werden müssen, die einen größeren Durchmesser aufweisen, so daß gleichzeitig bei der Ausgabe der Spachtelmasse die jeweils erwünschte und erforderliche große Menge an Härterpaste mit ausgegeben wird, denn das Ausdrücken von Spachtelmasse und Härterpaste aus den entsprechenden Behältern in den Abfüllkopf 550 zur gleichzeitigen, dosierten Entnahme erfolgt gleichzeitig vermittels des Arbeitszylinders 521, worauf nachstehend noch näher eingegangen wird.

Das Herauspressen der Härterpaste aus der auf den Abfüllkopf 550 aufgesetzten Kartusche 570 in den Abfüllkopf erfolgt zusammen mit dem Herauspressen der Spachtelmasse aus dem dosenartigen Behälter 540 vermittels des Arbeitszylinders 521. Hierzu ist die Kolbenplatte 523 der Kolbenstange 522 des Arbeitszylinders 521 an dem freien Ende 526a des Schenkels 526 eines U-förmigen Steuerbügels 525, dessen anderer Schenkel 527 an seinem freien Ende 527a eine Kolbenplatte 528 trägt, die in dem Innenraum 571 der Kartusche 570 längsverschieblich ist, angeordnet. Die Ausbildung und die Anordnung des U-förmigen Bügels 525 ist dergestalt, daß der Schenkel 527 mit der Kolbenplatte 528 des Bügels 525 mittig und in Längsrichtung der Kartusche 570 bewegbar ist. Die Kolbenplatte 528 braucht nicht fest mit dem Schenkel 527 des Bügels 525 verbunden zu sein. Bei dem in Fig. 25 gezeigten Ausführungsbeispiel ist das freie Ende 527a des Schenkels 527 des Bügels 525 lediglich verstärkt ausgebildet, während die Kolbenplatte 528 im Innenraum 571 der Kartusche 570 angeordnet und in Kartuschenlängsrichtung verschieblich ist. Die Kolbenplatte 528 im Innenraum 521 der Kartusche 570 ist dabei so ausgebildet, daß die Kolbenplatte 528 während des Vorschubes nicht verkanten kann. Ist die Kartusche 570 voll mit Härterpaste angefüllt, dann kann die verwendete Kolbenplatte 528 gleichzeitig den oberen Verschluß der Kartusche 570 bilden. Die Verwendung einer nicht mit dem Bügel 525 verbundenen Kolbenplatte 528 hat den Vorteil, daß mühelos Kartuschen 570 mit unterschiedlichem Durchmesser verwendet werden können, da lediglich die bereits kartuschenseitig vorgesehene Kolbenplatte nur vom freien Ende 527a des Schenkels 527 des Bügels beaufschlagt wird, wenn die Kolbenstange 522 mittels des Arbeitszylinders 521 abwärts bewegt wird. Der Bügel 525 ist zusammen mit der Kolbenstange 522 zwangsgesteuert, d.h. bei einer Abwärtsbewegung der Kolbenstange 522 wird auch der Bügel 525 abwärts bewegt mit der Folge, daß gleichzeitig die Massen aus dem Behälter 540 und der Kartusche 570 in den Abfüllkopf 550 gepreßt und diesem entnommen werden können.

Der die Ausgabeöffnung 551 für die Spachtelmasse in dem Abfüllkopf 550 verbindende Stutzen 555 ist bis in den konischen Bereich 533 der Durchbohrung 531 in der Zentrierplatte 530 geführt, so daß der Stutzen 555 mit seinem oberen umlaufenden Abschnitt 555a in die Durchbohrung 531 hineinragt (Fig.26). Die Ausflußöffnung 544 in dem Bodenteil 543 des dosenartigen Behälters 540 ist so ausgebildet, daß nach erfolgtem Aufsetzen des Behälters 540 auf die Zentrierplatte 530 eine dichte Verbindung zwischen dem Stutzen 555 und der Ausflußöffnung 544 in dem Bodenteil 543 des Behälters 540 gegeben ist. Die Ausflußöffnung 544 in dem Bodenteil 543 des Behälters 540 ist entsprechend der Lage der Durchbohrung 531 in der Zentrierplatte ausgebildet und so angeordnet, daß bei auf die Zentrierplatte 530 aufgesetztem Behälter 540 dessen Ausflußöffnung 544 mit der Durchbohrung 531 in der Zentrierplatte 530 korrespondiert. Ist die Durchbohrung 531 in der Zentrierplatte 530 exzentrisch zur Plattenmitte angeordnet, dann ist auch die Ausflußöffnung in dem Bodenteil 543 des Behälters 540 in entsprechender Weise exzentrisch angeordnet, so daß im aufgesetzten Zustand die Behälterausflußöffnung 544 der Durchbohrung 531 in der Zentrierplatte 530 gegenüberliegt (Fig.25).

Der die Ausflußöffnung 544 begrenzende umlaufende Randabschnitt 544a des Bodenteils 543 ist entsprechend der Form des konischen Abschnittes 533 der Durchbohrung 531 in der Zentrierplatte 530 ausgebildet und ebenfalls konisch gestaltet, so daß der Randabschnitt 544a des Bodenteils 543 parallel zum konisch verlaufenden Abschnitt 533 der Durchbohrung 531 verläuft (Fig.26). Die freie umlaufende Endkante des konisch verlaufenden umlaufenden Randabschnittes 544a geht in einen kreisbogenförmig ausgebildeten und hochgebogenen Randabschnitt 544b über, der so ausgebildet und im Bereich der Ausflußlöffnung angeordnet ist,daß bei auf die Zentrierplatte 530 aufgesetztem Behälter 540 der obere Randabschnitt 555a des Verbindungsstutzens 555 den kreisbogenförmig abgebogenen Randabschnitt 544b im Bereich der Ausflußöffnung 544 derart beaufschlagt, daß eine dichte Verbindung zwischen dem die Ausflußöffnung 544 begrenzenden Rand und dem Stutzen 555 gegeben ist. Diese Verbindung wird noch wesentlich dadurch verbessert, wenn der die Ausflußöffnung 544 begrenzende Rand aus federndelastischem Material bzw. wenn das Bodenteil 543 aus federnd-elastischem Material besteht, so daß dann der die Ausflußöffnung 544 begrenzende umlaufende Rand 544a einer gewissen Vorspannung unterliegt. Eine erhöhte Abdichtung kann auch zusätzlich noch dadurch erreicht werden, wenn, wie in Fig. 26 dargestellt, ein Dichtungsring 546 eingesetzt wird, der den Stutzen 555 im Bereich seines oberen Abschnittes 555a außenseitig umschließt und bei auf die Zentrierplatte 530 aufgesetztem Behälter 540 von dem umlaufenden Rand 544a der Ausflußöffnung 544 beaufschlagt wird.

Der dosenartige Behälter 540 ist so ausgestaltet, daß dieser, wie in Fig. 25 und 26 dargestellt, sicher auf der Zentrierplatte 530 gehalten ist. Die an der Kolbenstange 522 befestigte Kolbenplatte 523 entspricht in Form und Abmessung denen des Behälters 540, so daß eine einwandfreie Entleerung bis auf den letzten Rest des Behälters 540 möglich ist.

Die gleichzeitige Ausgabe von Spachtelmasse und Härterpaste mittels dieser Vorrichtung erfolgt in der Weise, daß nach Einschalten des Arbeitszylinders 521, beispielsweise durch Zufuhr von Preßluft, durch entsprechende Betätigung des Verschlußriegels 553 die jeweils gewünschten Mengen an Spachtelmasse und Härterpaste abgezapft werden können. Dadurch, daß mittels des Arbeitszylinders 521 gleichzeitig beide Kolbenplatten 523 und 528 betätigt werden, erfolgt ein gleichzeitiges Ausdrücken der Massen aus den Behältern 540 und 570, so daß bei einem Öffnen des Verschlußriegels 553 aus den beiden Ausgabeöffnungen 551 und 552 des Abfüllkopfes 550 Spachtelmasse und Härterpaste direkt in den geöffneten Mischbehälter der Vorrichtung 10 fließen. Dadurch, daß die beiden Ausgabeöffnungen 551,552 des Abfüllkopfes 550 dicht nebeneinanderliegend sind, werden auf die unterhalb der Ausgabeöffnungen 551,552 liegende Mischscheibe der Vorrichtung 10 auf diese die abgezapfte Menge Spachtelmasse und die gleichzeitig mit abgezapfte Menge Härterpaste nahe nebeneinanderliegend abgelegt, was für ein inniges Vermischen der beiden Pasten von Vorteil ist. Es sind somit für das Vermischen der beiden Komponenten keine großen Wege zu überwinden, was sonst nach den herkömmlichen Methoden erforderlich war.

Auch die Kolbenplatte 523 braucht nicht fest mit der Kolbenstange 522 verbunden sein; es besteht die Möglichkeit, die Kolbenplatte 523 von vornherein im Innenraum des Behälters 540 anzuordnen, so daß sie lediglich für den Auspreßvorgang von der Kolbenstange 522 des Arbeitszylinders 521 beaufschlagt wird. Anstelle eines einzigen Adapters 560 können zwei und auch mehr Adapter für die Aufnahme unterschiedlich im Durchmesser bemessener Kartuschen 570 auf dem Abfüllkopf 550 angeordnet sein. Die Adapter sind dann z.B. auf einem Schlitten zusammengefaßt, der auf dem Abfüllkopf 550 so verschieblich gelagert ist, daß die Anschlußöffnung 562 eines jeden Adapters 560 in den Bereich der Eintrittsöffnung 557 bewegbar ist.

Mit der Vorrichtung 80 ist ein gleichzeitiges und dosiertes, einwandfreies Zapfen von Spachtelmasse und Härterpaste auf die Mischscheibe der Vorrichtung 10 gewährleistet. Sowohl die Spachtelmasse als auch die Härterpaste werden dicht nebeneinanderliegend auf die Mischscheibe abgegeben, was besonders vorteilhaft für das sich dann hieran anschließende Vermischen der Spachtelmasse mit der Härterpaste auswirkt. Mit der Vorrichtung 80 sind ferner einwandfreie und saubere Massen zapfbar, ohne daß dabei eingekrustete Spachtelmassenteilchen oder sonstige Schmutzstoffe mit empfangen werden, welche bekanntlich, zum Ärger des Lackierers, zur Riefenbildung während des Aufspachtelns führen. Große und kleine Mengen bei prozentual genauer Zudosierung der Härterpaste lassen sich somit mühelos abzapfen. Eine überdosierung ist ausgeschlossen und damit ein mögliches Durchbluten auf lackierten Flächen. Besonders vorteilhaft ist die Verwendung eines Austauschadapters zur Aufnahme der Kartusche für die Härterpaste. Wird nämlich auf Wunsch im Winter mehr Härter benötigt, so werden Adapter und Kolben des Härtergestänges sowie die Härterkartuschen einfach gegen im Durchmesser größere und wieder genau aufeinander abgestimmte Einheiten ausgetauscht. Der bei der Vorrichtung verwendete Abfüllkopf gewährleistet ein dichtes Abschließen der Ausgabeöffnungen für die Spachtelmasse und die Härterpaste nach erfolgter Entnahme, so daß ein Einkrusten oder Erhärten von verbleibenden Resten dieser Massen vermieden wird. Ferner ist vorteilhaft, daß die Behälter bis auf den letzten Rest entleert werden. Der Behälter für die Spachtelmasse ist auf der Zentrierpaltte sicher gehalten und immer derart angeordnet, daß seine bodenseitige Ausflußöffnung mit der Durchbohrung in der Zentrierplatte korrespondiert, die wiederum mit der Ausgabeöffnung in dem Abfüllkopf verbunden ist. Die speziellen und aufeinander abgestimmten Ausgestaltungen der Durchbohrung in der Zentrierplatte und der bodenseitigen Ausflußöffnung im dosenartigen Behälter gewährleisten einen dichten Verschluß, wenn der Behälter für die Spachtelmasse auf der Zentrierplatte angeordnet ist. Der umlaufende Rand des Behälters für die Spachtelmasse übergreift seitlich die Zentrierplatte, so daß ein fester Sitz des Behälters in der Vorrichtung 80 gewährleistet ist.

Ist ein dosenartiger Behälter entleert, so wird lediglich ein neuer voller Behälter in die Vorrichtung 80 eingesetzt und der Behälterinhalt kann mittels des Arbeitszylinders und mittels des Abfüllkopfes in der jeweils gewünschten Menge abgegeben werden. Dadurch, daß der Behälter für die Spachtelmasse auf die Ausbildung der Vorrichtung ausgerichtet ist, können für die Vorrichtung 80 auch nur die hierfür speziell ausgebildeten Behälter verwendet werden.

Soweit Teile der Mischvorrichtung pneumatisch, elektromotorisch, hydraulisch oder elektromagnetisch angetrieben sind, so sind diese Teile in einem Steuerwerk zusammengeführt, über das alle Arbeitsabläufe in vorgegebener Reihenfolge gesteuert werden. Auch die Spachtelmasse/ Härter-Ausgabevorrichtung 80 ist pneumatisch, elektromotorisch, hydraulisch oder elektromagnetisch angetrieben; ihre Steuerung erfolgt ebenfalls über das Gesamtsteuerwerk, so daß folgender Arbeitsablauf gewährleistet ist:
- Öffnen der Ausgabevorrichtung 80 in einem vorgegebenen Zeitintervall in Abhängigkeit von der Menge der zu mischenden Komponenten,
- Unterbrechung der Spachtelmasse und Härterzufuhr auf die Mischscheibe der Mischvorrichtung bei geöffnetem Mischbehälter,
- Schließen des Deckelteils des Mischbehälters und Inbetriebnahme der Vakuumerzeugungseinrichtung,
- Aufbau des erforderlichen Vakuums und gleichzeitiges Inbetriebsetzen der Mischscheibe bei gleichzeitiger Durchführung der Schwenkbewegung des Mischelementes,
- Abschalten der Vakuumerzeugungseinrichtung, belüften des Mischbehälterinnenraumes und Außerbetriebsetzen der Mischscheibe,
- Öffnen des Deckelteils zur Entnahme der Mischscheibe mit der verarbeitungsfähigen Spachtelmasse.

## Patentansprüche

1. Verfahren zur Herstellung insbesondere kleinerer Mengen von mittel- oder höherviskosen Zwei- oder Mehrkomponenten-Massen, durch Vermischen der Komponenten miteinander, wobei eine vorgegebene Gesamtmenge der zu vermischenden Komponenten, wie Härter und Kunststoffmasse, auf einer in einem geschlossenen, evakuierbaren Mischraum (20) angeordneten, sich bewegenden waagerechten Mischscheibe (30) mit einem auf dieser senkrecht und gegenüber der bewegten Mischscheibe (30) feststehenden, schaufelförmigen Mischelement (40) aus einem rechtwinkligen (41) oder gebogenen, eine Begrenzungswand (141) bildenden Formkörper (42;142) mit einer zur Umlaufsrichtung der Mischscheibe(30) zugekehrten öffnung (43, 143) durch Abrollen des sich auf der bewegten Mischscheibe(30) bildenden, etwa zylindrischen bzw. spindelförmigen und vom Mittelpunkt (32) der bewegten Mischscheibe (30) ausgehenden Mischungskörpers (MK) auf der Mischscheibe (30) und an der senkrechten Begrenzungswand (41;141) des Mischelementes (40), bei gleichzeitiger Beseitigung der in der Spachtelmasse enthaltenden und durch den Wander- bzw. Fließprozeß der Spachtelmassekörperoberfläche zugeführten Luftbläschen durch deren Vergrößerung und Aufplatzen durch Abpumpen der Luft aus dem Mischraum (20), durch Umwälzen und Verschieben vermischt wird, wobei die Roll- und Schiebebebewegung des Mischungskörpers (MK) und dessen Translationsbewegung über das Mischelement (40)gesteuert werden, wobei nach Beendigung des Mischvorganges der Mischraum belüftet und das luftblasenfreie Mischprodukt (Spachtelmasse) entnommen wird.

2. Verfahren zur Herstellung insbesondere kleinerer Mengen von mittel- oder höherviskosen Zwei- oder Mehrkomponenten-Massen durch Vermischen der Komponenten miteinander, wobei eine vorgegebene Gesamtmenge der zu vermischenden Komponenten, wie Härter und Kunststoffmasse, auf einer in einem geschlossenen, evakuierbaren Mischraum (20) feststehend angeordneten, waagerechten Mischscheibe(30) mit einem auf dieser senkrecht stehenden und gegenüber der feststehenden Mischscheibe(30) um deren Mittelpunkt (32) umlaufend angetriebenen, schaufelförmigen Mischelement (40) aus einem rechtwinkligen (41) oder gebogenen, eine Begrenzungswand (142) bildenden Formkörper (42;142) mit einer zur Umlaufsrichtung des Mischelementes (40) zugekehrten Öffnung (43;143) durch Abrollen des sich auf der Mischscheibe (30) bildenden, etwa zylindrischen bzw. spindelförmigen und vom Mittelpunkt (32) der Mischscheibe (30) ausgehenden Mischungskörper (MK) auf der Mischscheibe (30) und an der senkrechten Begrenzungswand (41;141) des Umlaufenden Mischelementes (40), bei gleichzeitiger Beseitigung der in der Spachtelmasse enthaltenden und durch den Wander- bzw. Fließprozeß der Spachtelmassekörperoberfläche zugeführten Luftbläschen durch deren Vergrößerung und Aufplatzen durch Abpumpen der Luft aus dem Mischraum (20), durch Umwälzen und Verschieben vermischt wird, wobei die Roll- und Schiebebewegung des Mischungskörpers (MK) und dessen Translationsbewegung über das Mischelement (40) gesteuert werden, wobei nach Beendigung des Mischvorganges der Mischraum belüftet und das luftblasenfreie Mischprodukt (Spachtelmasse) entnommen wird.

3. Verfahren zur Herstellung insbesondere kleinerer Mengen von mittel- oder höherviskosen Zwei- oder Mehrkomponenten-Massen durch Vermischen der Komponenten miteinander, wobei eine vorgegebene Gesamtmenge der zu vermischenden Komponenten, wie Härter und Kunststoffmasse, auf einer in einem geschlossenen, evakuierbaren Mischraum (20) angeordneten, sich bewegenden waagerechten Mischscheibe (30) mit einem auf dieser senkrecht stehenden und entgegengesetzt zur Umlaufsrichtung der Mischscheibe (30) um deren Mittelpunkt (32) umlaufend angetriebenen, schaufelförmigen Mischelement (40) aus einem, rechtwinkligen (41) oder gebogenen, eine Begrenzungswand (141) bildenden Formkörper (142) mit einer zur Umlaufsrichtung der Mischscheibe (30) zugekehrten Öffnung (43;143) durch Abrollen des sich auf der Mischscheibe (30) bildenden, etwa zylindrischen bzw, spindelförmigen und vom Mittelpunkt (32) der Mischscheibe (30) ausgehenden Mischungskörpers (MK) auf der Mischscheibe (30) und an der senkrechten Begrenzungswand (41;141) des umlaufenden Mischelementes (40), bei gleichzeitiger Beseitigung der in der Spachtelmasse enthaltenden und durch den Wander- bzw. Fließprozeß der Spachtelmassekörperoberfläche zugeführten Luftbläschen durch deren Vergrößerung und Aufplatzen durch Abpumpen der Luft aus dem Mischraum (20), durch Umwälzen und Verschieben vermischt wird, wobei die Roll- und Schiebebewegung des Mischungskörpers (MK) und dessen Translationsbewegung über das Mischelement (40) gesteuert werden, wobei nach Beendigung des Mischvorganges der Mischraum belüftet und das luftblasenfreie Mischprodukt (Spachtelmasse) entnommen wird.

4. Verfahren nach einem der Ansprüche 1 oder 3, dadurch gekennzeichnet, daß eine um ihre senkrechte Mittelachse (31) umlaufend angetriebene, waagerechte Mischscheibe (30) verwendet wird.

5. Verfahren nach einem der Ansprüche 1 bis 4, dadurch gekennzeichnet, daß eine kreisförmige Mischscheibe (30) und ein Mischelement (40) verwendet werden, dessen von der in Längsrichtung gebogenen (141) oder rechtwinkligen Begrenzungswand (41) gebildeten öffnung (143;43) eine Länge aufweist, die gleich oder kleiner dem Radius der Mischscheibe (30) ist.

6. Verfahren nach einem der Ansprüche 1 bis 5, dadurch gekennzeichnet, daß das Mischelement (40) wechselseitig um seine senkrechte Achse in kleinen Winkelbereichen verschwenkt wird und daß die Winkelstellung der die senkrechte Öffnungsfläche (45) bildenden öffnung (43;143) der Begrenzungwand (41;141) des Mischelementes (40) zu der an die Mischscheibe (30) angelegten Tangente (33) veränderbar ist.

7. Verfahren nach einem der Ansprüche 1 bis 6, dadurch gekennzeichnet, daß das Mischelement (40) zu der Mischscheibe (30) derart angeordnet ist, daß die senkrechte Öffnungsfläche (45) der von der Begrenzungswand (41; 141) des Mischelementes (49) bildenden öffnung (43;143) zu einer Radiuslinie (34) der Mischscheibe (30) parallel und durch den Mischscheibenmittelpunkt (32) verlaufend und um seine senkrechte Achse (46) derart verschwenkbar ist, daß die Öffnungsfläche (45) der öffnung (43;143) in einem Winkel zur gleichen Radiuslinie (34) liegend und die öffnung (43;143) zum umlaufenden Rand (36) der Mischscheibe (30) zeigend ist oder daß die Öffnungsfläche (45) der öffnung (43;143) um einen Abschnitt (35) zu der Radiuslinie (34) versetzt verlaufend und die öffnung (43;143) zum Mischscheibenmittelpunkt (32) zeigend ist.

8. Verfahren nach einem der Ansprüche 1 bis 7, dadurch gekennzeichnet, daß das Mischelement (40) zu der Mischscheibe (30) derart angeordnet ist, daß die Kreislinien (37) der Mischscheibe (30) im rechten Winkel (α) auf den dem Mischscheibenmittelpunkt (32) zugekehrten Wandabschnitt (41a) der beiden Wandabschnitte (41a,41b) der rechtwinkligen Begrenzungswand (41) des Mischelementes (40) treffen.

9. Verfahren nach einem der Ansprüche 1 bis 7, dadurch gekennzeichnet, daß das Mischelement (40) zu der Mischscheibe (30) derart angeordnet ist, daß die Kreislinien (37) der Mischscheibe (30) in einem spitzen Winkel (α1) auf den dem Mischscheibenmittelpunkt (32) zugekehrten Wandabschnitt (41a) der beiden Wandabschnitte (41a,41b) der Begrenzungswand (41) des Mischelementes (40) treffen.

10. Verfahren nach einem der Ansprüche 1 bis 9, dadurch gekennzeichnet, daß das rechtwinklige (41) Mischelement (40) zu der Mischscheibe (30) derart angeordnet ist, daß die Masseteilchen des Mischungskörpers (MK) in einem Winkel (α3) von kleiner als 90° auf die Begrenzungswand (41) des rechtwinkligen Mischelementes (40) auftreffen.

11. Verfahren nach einem der Ansprüche 1 bis 9, dadurch gekennzeichnet, daß das bogenförmige (141) Mischelement (40) zu der Mischscheibe (30) derart angeordnet ist, daß die Masseteilchen des Mischungskörpers (MK) in einem, bezüglich der Mischscheibe (30), von außen nach innen verlaufenden Windelbereich (α4) von 30° bis 90° auf die Begrenzungswand (141) des bogenförmigen Mischelementes (40) auftreffen.

12. Verfahren nach einem der Ansprüche 1 bis 9, dadurch gekennzeichnet, daß das bogenförmige (141) Mischelement (40) zu der Mischscheibe (30) derart angeordnet ist, daß die Masseteilchen des Mischungskörpers (MK) in dem dem Mittelpunkt (32) der Mischscheibe (30) zugekehrten Abschnitt (144) der Begrenzungswand (141) in einem, bezüglich der Mischscheibe (30), von außen nach innen verlaufenden Winkelbereich (α5) von 55° bis 45° auf die bogenförmige Begrenzungswand (141) des Mischelementes (40) auftreffen.

13. Verfahren nach einem der Ansprüche 1 bis 9, dadurch gekennzeichnet, daß das rechtwinklige (41) Mischelement (40) zu der Mischscheibe (30) derart wechselweise bewegt wird, daß einmal die Masseteilchen des Mischungskörpers (MK) in einem Winkel (α2) von 90° und danach in einem Winkel (α3) von kleiner als 90° auf die rechtwinklige Begrenzungswand (41) des Mischelementes (40) auftreffen.

14. Verfahren nach einem der Ansprüche 1 bis 9, dadurch gekennzeichnet, daß das bogenförmige (141) Mischelement (40) zu der Mischscheibe (30) derart wechselweise bewegt wird, daß einmal die Masseteilchen des Mischungskörpers (MK) in einem, bezüglich der Mischscheibe (30), von außen nach innen verlaufenden Winkelbereich (α4) von 30° bis 90° und danach in einem, bezüglich der Mischscheibe (30), von außen nach innen verlaufenden Winkbereich (α5) von 55° bis 45° in dem dem Mittelpunkt (32) der Mischscheibe (30) zugekehrten Abschnitt (144) der Begrenzungswand (141) auf diese auftreffen.

15. Verfahren nach einem der Ansprüche 1 bis 13 dadurch gekennzeichnet, daß eine Mischscheibe (30) mit einem senkrecht stehenden, umlaufenden Rand (38) verwendet wird.

16. Vorrichtung zur Herstellung insbesondere kleinerer Mengen von mittel- oder höherviskosen Zwei- oder Mehrkomponenten-Massen durch Vermischen der Komponenten miteinander, wobei die Vorrichtung (10) aus einem Mischbehälter (50) mit einem quadratischen oder kreisförmigen querschnitt,aus einem Bodenteil (51), einer umlaufenden Seitenwand (52) und einem die obere Behälteröffnung (53) verschließenden Deckelteil (54), das mittels mechanischer Einrichtungen oder vermittels Vakuum an der Behälterseitenwand (52) im Betriebszustand der Vorrichtung (10) befestigt wird, aus einer im Mischraum (20) des Mischbehälters (50) angeordneten, waagerechten Mischscheibe (30), die auf dem Bodenteil (51) gelagert ist und um ihre senkrechte Mittelachse (31) vermittels einer am Bodenteil (51) angeordneten Antriebseinrichtung (130) umlaufend angetrieben wird, und aus einem oberhalb der Mischscheibe (30) gegenüber dieser feststehend angeordneten Mischelement (40) besteht, das als im Mischraum (20) angeordneter, senkrecht zur Mischscheibe (30) stehender, als rechtwinklige (41) oder gebogene Begrenzungswand (141) ausgebildeter Formkörper (42;142) mit der Funktion einer Mischschaufel und mit einer der Umlaufsrichtung der Mischscheibe (30) zugekehrten öffnung (43;143) ausgebildet ist,wobei die Mischscheibe (30) lösbar mit der Antriebsachse (131) der Antriebseinrichtung (130) verbunden ist, und wobeider Mischbehälter (50) einen in der Behälterwand (51;52;54) angeordneten Anschlußstutzen (55) aufweist, der mit einer Vakuumerzeugungseinrichtung (60) verbunden ist.

17. Vorrichtung zur Herstellung insbesondere kleinerer Mengen von mittel- oder höherviskosen Zwei- oder Mehrkomponenten-Massen durch Vermischen der Komponenten miteinander, wobei die Vorrichtung (10) aus einem Mischbehälter (50) mit einem quadratischen oder kreisförmigen Querschnitt, aus einem Bodenteil (51), einer umlaufenden Seitenwand (52) und einem die obere Behälteröffnung (53) verschließenden Deckelteil (54), das mittels mechanischer Einrichtungen oder vermittels Vakuum an der Behälterseitenwand (52) im Betriebszustand der Vorrichtung (10) befestigt wird, aus einer im Mischraum (20) des Mischbehälters (50) feststehend angeordneten, waagerechten Mischscheibe (30), die auf dem Bodenteil (51) lösbar angeordnet ist, und aus einem oberhalb der feststehenden Mischscheibe (30) gegenüber dieser um eine senkrechte Achse (47) vermittels einer Antriebseinrichtung (247) um den Mittelpunkt der Mischscheibe (30) umlaufend angetriebenen Mischelement (40) besteht, das als im Mischraum (20) angeordneter, senkrecht zur Mischscheibe (30) stehender, als rechtwinklige (41) oder gebogene Begrenzungswand (141) ausgebildeter Formkörper (42;142) mit der Funktion einer Mischschaufel und mit einer der Umlaufsrichtung des Mischelementes (40) zugekehrten öffnung (43;143) ausgebildet ist,wobeider Mischbehälter (50) einen in der Behälterwand (51;52;54) angeordneten Anschlußstutzen (55) aufweist, der mit einer Vakuumerzeugungseinrichtung (60) verbunden ist.

18. Vorrichtung zur Herstellung insbesondere kleinerer Mengen von mittel- oder höherviskosen Zwei- oder Mehrkomponenten-Massen, durch Vermischen der Komponenten miteinander, wobei die Vorrichtung (10) aus einem Mischbehälter (50) mit einem quadratischen oder kreisförmigen Querschnitt, aus einem Bodenteil (51), einer umlaufenden Seitenwand (52) und einem die obere Behälteröffnung (53) verschließenden Deckelteil (54), das mittels mechanischer Einrichtungen oder vermittels Vakuum an der Behälterseitenwand (52) im Betriebszustand der Vorrichtung (10) befestigt wird, aus einer im Mischraum (20) des Mischbehälters (50) angeordneten, waagerechten Mischscheibe (30), die auf dem Bodenteil (51) gelagert ist und um ihre senkrechte Mittelachse (31) vermittels einer am Bodenteil (51) angeordneten Antriebseinrichtung (130) umlaufend angetrieben wird, und aus einem oberhalb der umlaufend angetriebenen Mischscheibe (30) gegenüber dieser um eine senkrechte Achse (47) vermittels einer Antriebseinrichtung (247) zur Umlaufsrichtung der Mischscheibe (30) gegenläufig um den Mittelpunkt der Mischscheibe (30) umlaufend angetriebenen Mischelement (40) besteht,das als im Mischraum (20) angeordneter, senkrecht zur Mischscheibe (30) stehender, als rechtwinklige (41) oder gebogene Begrenzungswand (141) ausgebildeter Formkörper (42;142) mit der Funktion einer Mischschaufel und mit einer der Umlaufsrichtung der Mischscheibe (30) zugekehrten öffnung (43;143) ausgebildet ist, wobei die Mischscheibe (30) lösbar mit der Antriebsachse (131) der Antriebseinrichtung (130) verbunden ist, und wobei der Mischbehälter (50) einen in der Behälterwand (51;52;54) angeordneten Anschlußstutzen (55) aufweist, der mit einer Vakuumerzeugungseinrichtung (60) verbunden ist.

19. Vorrichtung nach einem der Ansprüche 16 bis 18, dadurch gekennzeichnet, daß das Behälterdeckelteil (54) scharnierartig am oberen, umlaufenden Rand des Mischbehälters (50) angelenkt ist.

20. Vorrichtung nach einem der Ansprüche 16 bis 19, dadurch gekennzeichnet, daß das Mischelement (40) an der Innenwandfläche (54a) des Deckelteils (54) angeordnet ist.

21. Vorrichtung nach einem der Ansprüche 16 bis 20, dadurch gekennzeichnet, daß das Mischelement (40) vermittels einer durch das Deckelteil (54) hindurchgeführten Schwenkachse (49) an dem Deckelteil (54) gehalten ist, wobei das aus dem Deckelteil (54) herausgeführte Ende (49a) der Schwenkachse (49) mit einer griffartigen Handhabe (149) versehen oder mit einer Antriebseinrichtung (147) verbunden ist, die für die-wechselseitige Schwenkbewegung des Mischelementes (40) mit einer Steuereinrichtung (200) verbunden ist.

22. Vorrichtung nach einem der Ansprüche 16 bis 21, dadurch gekennzeichnet, daß das Deckelteil (54) im Bereich seines Anlenkungspunktes an dem Mischbehälter (50) mit einer Zugfeder, Gasfeder oder Hydraulikzylinder (56) oder einer pneumatischen, hydraulischen, elektromotorischen oder elektromagnetischen Antriebseinrichtung zum selbsttätigen Verschwenken des Deckelteils (54) in seine Öffnungsstellung und/oder seine verschlußstellung versehen ist.

23. Vorrichtung nach einem der Ansprüche 16 bis 22, dadurch gekennzeichnet, daß die Mischscheibe (30) kreisförmig ausgebildet ist.

24. Vorrichtung nach einem der Ansprüche 16 bis 23, dadurch gekennzeichnet, daß die Mischscheibe (30) aus zwei übereinanderliegend angeordneten, gleiche oder ungleiche Abmessungen aufweisenden Scheibenkörpern (30a,30b) besteht, die beide über lösbare Haftverbindungen, wie Bajonettverschluß oder Magnetverschluß miteinander verbunden sind und von denen der obere Scheibenkörper (30a) als Spachtelmassenträger ausgebildet ist.

25. Vorrichtung nach einem der Ansprüche 16 bis 24, dadurch gekennzeichnet, daß die Vorrichtung anstelle eines senkrecht zu der Mischscheibe (30) angeordneten Mischelementes (40) ein zu der Mischscheibe (30) eine geneigte Stellung einnehmendes Mischelement (40) aufweist.

26. Vorrichtung nach einem der Ansprüche 16 bis 25, dadurch gekennzeichnet, daß die Mischscheibe (30) bzw. der obere (30a) der beiden die Mischscheibe (30) bildenden Scheibenkörper (30a,30b) mit einem nach oben gezogenen, umlaufenden Rand (38) versehen ist.

27. Vorrichtung nach Anspruch 26, dadurch gekennzeichnet, daß die mit einem umlaufenden Rand (38) versehene Mischscheibe (30) bzw. der mit einem umlaufenden Rand (38) versehene obere Scheibenkörper (30a) der beiden die Mischscheibe (30) bildenden Scheibenkörper (30a,30b) aus einem elastischen Werkstoff, wie Gummi oder einem gummiähnlichen Kunststoff besteht.

28. Vorrichtung nach einem der Ansprüche 16 bis 26, dadurch gekennzeichnet, daß die Mischscheibe (30) bzw. der obere (30a) der beiden die Mischscheibe (30) bildenden Scheibenkörper (30a,30b) aus metallischen Werkstoffen oder Kunststoffen besteht.

29. Vorrichtung nach einem der Ansprüche 16 bis 28, dadurch gekennzeichnet, daß das Mischelement (40) zu der Mischscheibe (30) derart angeordnet ist, daß zwischen der Mischscheibe (30) und der bodenseitigen Kante (48) des Mischelementes ein Zwischenraum ausgebildet ist, der die freie Beweglichkeit der Mischscheibe (30) zum Mischelement (40) gewährleistet.

30. Vorrichtung nach einem der Ansprüche 16 bis 29, dadurch gekennzeichnet, daß die bodenseitige Kante (48) des Mischelementes (40) messerklingenartig ausgebildet ist.

31. Vorrichtung nach einem der Ansprüche 16 bis 30, dadurch gekennzeichnet, daß das Mischelement (40) aus metallischen Werkstoffen, Kunststoffen oder aus mit einem Kunststoff beschichteten Metall besteht.

32. Vorrichtung nach einem der Ansprüche 16 bis 31, dadurch gekennzeichnet, daß das Mischelement (40) außermittig an dem Deckelteil (54) des Mischbehälters (50) angeordnet ist.

33. Vorrichtung nach einem der Ansprüche 17 und 19 bis 32, dadurch gekennzeichnet, daß das zur feststehenden Mischscheibe (30) umlaufende Mischelement (40) radial an einer an der Innenwandfläche (54a) des Deckelteils (54) des Mischbehälters (50) gelagerten Antriebsscheibe (145) befestigt ist, die mit der Antriebseinrichtung (247) für das Mischelement (40) verbunden ist.

34. Vorrichtung nach einem der Ansprüche 16 bis 33, dadurch gekennzeichnet, daß eine kreisförmige Mischscheibe (30) und ein Mischelement (40) vorgesehen sind, dessen von der in Längsrichtung gebogenen (141) oder rechtwinkligen Begrenzungswand (41) gebildete öffnung (143;43) eine Länge aufweist, die gleich oder kleiner dem Radius der Mischscheibe (30) ist.

35. Vorrichtung nach einem der Ansprüche 16 bis 34, dadurch gekennzeichnet, daß die Winkelstellung der die senkrechte Öffnungsfläche (45) bildenden öffnung (43;143) der Begrenzungswand (41;141) des Mischelementes (40) zu einer die Mischscheibe (30) angelegten Tangente (33) veränderbar ist.

36. Vorrichtung nach einem der Ansprüche 16 bis 35, dadurch gekennzeichnet, daß das Mischelement (40) zur Mischscheibe (30) derart angeordnet ist, daß die senkrechte Öffnungsfläche (45) der von der Begrenzungswand ( 41;141) des Mischelementes (40) bildenden Öffnung (43;143) zu einer Radiuslinie (34) der Mischscheibe (30) parallel und um einen Abschnitt (35) zu dieser Radiuslinie (34) versetzt verlaufend ist und um seine senkrechte Achse (46) derart verschwenkbar ist, daß die Öffnungsfläche (45) der Öffnung (43;143) parallel zu der gleichen Radiuslinie (34) liegend und die Öffnung (43;143) zum umlaufenden Rand (36) der Mischscheibe (30) zeigend ist oder daß die Öffnungsfläche (45) der Öffnung (43;143) parallel zu einer Mischscheibentangente (33) verlaufend und die öffnung (43;143) zum Mischscheibenmittelpunkt (32) zeigend ist.

37. Vorrichtung nach einem der Ansprüche 16 bis 36, dadurch gekennzeichnet, daß das Mischelement (40) zu der Mischscheibe (30) derart angeordnet ist, daß die Kreislinien (37) der Mischscheibe (30) im rechten Winkel (α) auf die Öffnungsfläche (45) des Mischelementes (40) treffen.

38. Vorrichtung nach einem der Ansprüche 16 bis 36, dadurch gekennzeichnet, daß das Mischelement (40) zu der Mischscheibe (30) derart angeordnet ist, daß die Kreislinien (37) der Mischscheibe (30) in einem spitzen Winkel (α1) auf die Öffnungsfläche (45) des Mischelementes (40) treffen.

39. Vorrichtung nach einem der Ansprüche 16 bis 38, dadurch gekennzeichnet, daß das rechtwinklige (41) Mischelement (40) zu der Mischscheibe (30) derart angeordnet ist, daß die Masseteilchen des Mischungskörpers (MK) in einem Winkel (α2) von 90° auf die Begrenzungswand (41) des rechtwinkligen Mischelementes (40) auftreffen.

40. Vorrichtung nach einem der Ansprüche 16 bis 38, dadurch gekennzeichnet, daß das rechtwinklige (41) Mischelement (40) zu der Mischscheibe (30) derart angeordnet ist, daß die Masseteilchen des Mischungskörpers (MK) in einem Winkel (α3) von kleiner als 90° auf die Begrenzungswand (41) des rechtwinkligen Mischelementes (40) auftreffen.

41. Vorrichtung nach einem der Ansprüche 16 bis 38, dadurch gekennzeichnet, daß das bogenförmige (141) Mischelement (40) zu der Mischscheibe (30) derart angeordnet ist, daß die Masseteilchen des Mischungskörpers (MK) in einem, bezüglich der Mischscheibe (30), von außen nach innen verlaufenden Winkelbereich (α4) von 30° bis 90° auf die Begrenzungswand (141) des bogenförmigen Mischelementes (40) auftreffen.

42. Vorrichtung nach einem der Ansprüche 16 bis 38, dadurch gekennzeichnet, daß das bogenförmige (141) Mischelement (40) zu der Mischscheibe (30) derart angeordnet ist, daß die Masseteilchen des Mischungskörpers (MK) in dem dem Mittelpunkt (32) der Mischscheibe (30) zugekehrten Abschnitt (144) der Begrenzungswand (141) in einem, bezüglich der Mischscheibe (30), von außen nach innen verlaufenden Winkelbereich (α5) von 55° bis 45° auf die Begrenzungswand (141) des bogenförmigen Mischelementes (40) auftreffen.

43. Vorrichtung nach einem der Ansprüche 16 bis 42, dadurch gekennzeichnet, daß das Mischelement (40) vermittels einer Antriebsachse (47) mit einer an dem Deckelteil (54) des Mischbehälters (50) angeordneten Antriebseinrichtung (247) verbunden ist, die über eine Steuereinrichtung (200) derart gesteuert wird, daß das Mischelement (40) eine wechselseitige Schwenkbewegung ausführt.

44. Vorrichtung nach einem der Ansprüche 16 bis 43, dadurch gekennzeichnet, daß das Mischelement (40) eine seine öffnung (43;143) nach oben hin abschließende Abdeckung (140) aufweist.

45. Vorrichtung nach einem der Ansprüche 16 bis 44, dadurch gekennzeichnet, daß der Mischbehälter (50) der Vorrichtung (10) aus einem Bodenteil (51) mit einem senkrecht hochgezogenen, umlaufenden Rand (51a) und einem haubenförmigen Deckelteil (54) besteht, das mit seinem umlaufenden Rand (54a) im geschlossenen Behälterzustand auf dem umlaufenden Rand (51a') des Bodenteils (51) aufsitzt, wobei das Bodenteil (51) oder die umlaufende Seitenwand (52) des Deckelteils (54) oder dieses selbst mit einem mit dem Mischraum (20) des Mischbehälters (50) in Verbindung stehenden Anschlußstutzen (55) versehen ist, der mit der Vakuumerzeugungseinrichtung (60) verbunden ist, daß das haubenförmige Deckelteil (54) einendseitig scharnierartig an das Bodenteil (51) angelenkt und mittels mechanischer Einrichtungen oder vermittels Vakuum an dem Bodenteil (51) gehalten ist, daß das haubenförmige Deckelteil (54) im Bereich seines Anlenkungspunktes (58) an dem Bodenteil (51) mit einer Zugfeder, Gasfeder oder Hydraulikzylinder (56) zum selbsttätigen Verschwenken des Deckelteils (54) in seine öffnungsstellung versehen ist, und daß in dem Mischraum (20) des Mischbehälters (50) die Mischscheibe (30) mit dem dieser zugeordneten Mischelement (40) angeordnet sind.

46. Vorrichtung nach einem der Ansprüche 16bis 45, dadurch gekennzeichnet, daß der Mischbehälter (50) zusammen mit einer Vorrichtung (80) zum dosierten Ausgeben von Spachtelmasse und Härterpaste an einem als Wandhalter ausgebildeten Tragrahmen (81) befestigt ist, wobei die Auslaßöffnungen (90,91) der Ausgabevorrichtung (80) zu dem Mischbehälter (50) derart angeordnet sind, daß bei geöffnetem Mischbehälter (50) die Mischscheibe (30) unterhalb der Auslaßöffnungen (90,91) liegt, und daß der Abstand zwischen dem Mischbehälter (50) und der Ausgabevorrichtung (80) dem Radius des Schwenkbereiches des Deckelteils (54) des Mischbehälters (50) entspricht oder daß die Auslaßöffnungen (90,91) der Ausgabevorrichtung (80) oberhalb des Deckelteils (54) liegen, wobei dieser als Schieber ausgebildet ist.

47. Vorrichtung nach Anspruch 46, dadurch gekennzeichnet, daß die Vorrichtung (10) zur gleichzeitigen und dosierten Abgabe von Spachtelmassen aus einer Kunststoffmasse und einem Härter, besteht aus
a) einem Traggestell (520), in dessen oberen Bereich ein mittels Druckluft,Druckgas, hydraulisch oder elektromotorisch oder von Hand betriebener Arbeitszylinder (521) mit einer senkrecht verfahrbaren Kolbenstange (522) und mit einer an deren Ende (522a) vorgesehenen Kolbenplatte (523) angeordnet ist,
b) einer Zentiierplatte (530) für einen die Kolbenplate (523) in ihrem Innenraum (541) aufnehmenden dosenartigen Behälter (540) für die Spachtelmasse, die im Bewegungsbereich der Kolbenstange (522) des Arbeitszylinders (521) an dem Traggestell (520) angeordnet ist und die mit einer mittigen oder exzentrischen Durchbohrung (531) versehen ist, deren oberer umlaufender Rand (532) zur Durchbohrungsmitte hinkonisch sich verjüngend ausgebildet ist,
c) einem unterhalb der Zentrierplatte (530) angeordneten Abfüllkopf (550), der zwei mittels eines messerartigen Verschlußriegels (553) mit einer hebelartigen Handhabe (554) verschließbare Ausgabeöffnungen (551,552) für die Spachtelmasse und die Härterpaste aufweist, die dicht nebeneinanderliegend sind und von denen die Ausgabeöffnung (551) für die Spachtelmasse vermittels eines Stutzens (555) mit der Durchbohrung (531) in der Zentrierplatte (530) verbunden ist, während die andere Ausgabeöffnung (552) für die Härterpaste über eine Durchbohrung (556) in dem Abfüllkopf (550) mit einer in diesem oben ausgebildeten Eintrittsöffnung (557) verbunden ist, die in einen auf den Abfüllkopf (550) aufsetzbaren Austauschadapter (560) mit einer Halterung (561) zur Aufnahme der Kartusche (570) für die Härterpaste mündet, die bodenseitig offen ausgebildet ist,
wobei die Kolbenplatte (523) des Arbeitszylinders (521) an dem freien Ende (526a) des einen Schenkels (526) eines U-förmigen Bügels (525) befestigt ist, dessen anderer Schenkel (527) an seinem freien Ende (527a) eine in dem Innenraum (571) der Kartusche (570) für die Härterpaste verschiebliche Kolbenplatte (528) trägt, wobei der die Ausgabeöffnung (551) für die Spachtelmasse in dem Abfüllkopf (550) verbindende Stutzen (555) bis in den konischen Bereich der Durchbohrung (531) in der Zentrierplatte (530) geführt ist, wobei der dosenartige Behälter (540) mit einem einen umlaufenden, die Zentrierplatte (530) in ihrem umlaufenden Rand (530a) übergreifenden Rand (542) aufweisenden Bodenteil (543) versehen ist, das dem Durchmesser und der Formgebung der Zentrierplatte (530) entsprechend bemessen ausgebildet ist und das eine Ausflußöffnung (544) aufweist, die entsprechend der Lage der Durchbohrung (531) in der Zentrierplatte (530) in dem Bodenteil (543) ausgebildet ist und mit der Durchbohrung (531) korrespondiert und die eine der konischen Form der Durchbohrung (531) entsprechende Ausgestaltung ihres umlaufenden Randes (544a) aufweist, der kreisbogenförmig nach innen eingezogen ist, und wobei die Handhabe (554) von Hand oder mittels pneumatischer, hydraulischer, elektromotorischer oder elektromagnetischer Einrichtungen bewegbar ist.

## Claims

1. Process for manufacturing average or highly viscous two-component or multiple-component masses by intermixing the components, in which case a predetermined total quantity of the components to be intermixed, such as hardeners and plastic material, is intermixed on a horizontal moving mixing disk (30) disposed within a closed mixing space (20) that can be evacuated, having a vane-shaped mixing element (40) arranged vertically on said mixing disk (30) which is stationary with regard to the moved mixing disk (30), said mixing element (40) is comprised of a right-angled (41) or curved shaped member (42;142) forming a limiting wall (141) provided with an opening (43,143) which faces in the direction of rotation of the mixing disk (30), due to the rolling away of the mixture body (MK) that possesses an approximately cylindrical or spindle shaped configuration forming on the moved mixing disk (30) and which proceeds from the central point (32) of said moved mixing disk (30) and on the vertical limiting wall (41;141) of the mixing element (40), with the simultaneous elimination of the small air bubbles contained in the filler and conveyed there by the migration or the flow process of the filler material surface owing to their enlargement and bursting open by the air being evacuated from the mixing space (20), by circulation and displacement, the rolling and the sliding motion of the mixture body (MK) and its translatory movement being controlled with the aid of the mixing element (40), wherein, following the termination of the intermixing process, the mixing space is ventilated and the air bubble-free mixed product (filler) is removed.

2. Process for the manufacture of more particularly smaller quantities of average or more highly viscous two-component or multiple-component masses by intermixing the components, in which case a predetermined total quantity of the components to be intermixed, such as hardener and plastic material, is intermixed on a moving horizontal mixing disk (30) disposed within a closed mixing space (20) that can be evacuated, having a vane-shaped mixing element (40) arranged vertically on said mixing disk (30) and, with respect to the stationary mixing disk (30), is driven revolvingly about the central point (32) of the latter and is comprised of a right-angled (41) or curved shaped member (42;142) forming a limiting wall (141) having an opening (43;143) facing in the direction of the direction of rotation of the mixing element (40), due to the rolling away of the mixture body (MK) forming on the mixing disk (30) which possesses an approximately cylindrical or spindle-shaped configuration on the mixing disk (30) and which proceeds from the central point (32) of said mixing disk (30) and on the vertical limiting wall (41;141) of the revolving mixing element (40), with the simultaneous elimination of the small air bubbles contained in the filler and conveyed there by the migration or the flow process of the filler material surface due to their enlargement and bursting open caused by the air being evacuated from the mixing space (20), by circulation and displacement, the rolling and sliding motion of the mixture body (MK) and its tranlatory movement being controlled with the aid of the mixing element (40), wherein, following the termination of the intermixing process, the mixing space is ventilated and the air bubble-free product (filler) is removed.

3. Process for the manufacture of more particularly smaller quantities of average or more highly viscous two-component or multiple component masses by intermixing the components, in which case a predetermined quantity of the components to be intermixed, such as hardener and plastic material, is intermixed on a horizontal moving mixing disk (30) disposed within a closed mixing space (20) which can be evacuated, having a vane-shaped mixing element (40) arranged vertically on said mixing disk (30) and revolvingly driven in the opposite direction to the direction of rotation of the mixing disk (30) about the central point (32) of the latter, said mixing element (40) being comprised of a right-angled (41) or curved shaped member (142) forming a limiting wall (141) provided with an opening (43;143) which faces in the direction of rotation of the mixing element (40), due to the rolling away of the mixture body (MK) being formed on the mixture disk (30) that possesses an approximately cylindrical or spindle-shaped configuration on the mixing disk (30) and which proceeds from the central point (32) of said mixing disk (30) and on the vertical limiting wall (41;141) of the revolving mixing element (40), with the simultaneous elimination of the small air bubbles contained in the filler and conveyed there by the migration or the flow forces of the filler material surface due to their enlargement and bursting open caused by the air being evacuated from the mixing space (20), by circulation and displacement, the rolling and sliding motion of the mixture body (MK) and its translatory movement being controlled with the aid of the mixing element (40), wherein, following the termination of the intermixing process, the mixing space is ventilated and the air bubble-free mixed product (filler) is removed.

4. Process according to any of Claims 1 to 3, characterized in that a horizontal mixing disk (30) revolvingly driven about its vertical centre axis (319 is employed.

5. Process according to any of Claims 1 to 4, characterized in that a circular mixing disk (30) and a mixing element (40) are employed, whose opening (143;43) formed by the longitudinally curved (141) or right-angled limiting wall (41) possesses a length which is equal to or smaller than the radius of the mixing disk (30).

6. Process according to any of Claims 1 to 5, characterized in that the mixing element (40) is alternately swivelled about its axis within small angular ranges and in that the angular position of the opening (43;143) forming the vertical opening surface (45) of the limiting wall (41; 141) of the mixing element (40) can be changed relative to the tangent line (33) plotted on the mixing disk (30).

7. Process according to any of Claims 1 to 6, characterized in that the mixing element (40) is disposed relative to the mixing disk (30) in such a way that the vertical opening surface (45) of the opening (43;143) formed by the limiting wall (41;141) of the mixing element (40) proceeds parallel to a radius line (34) of the mixing disk (30) and through the mixing disk central point (32) and is swivellable about its vertical axis (46) in such a way that the opening surface (45) of the opening (43;143) lies at an angle to the same radius line and the opening (43; 143) points to the circumferential edge (36) of the mixing disk (30), or in that the opening surface (45) of the opening (43;143) proceeds by one section (35) so as to be staggered with respect to the radius line (34) and the opening (43;143) points to the mixing disk central point (32).

8. Process according to any of Claims 1 to 7, characterized in that the mixing element (40) is disposed relative to the mixing disk (30) in such a way that the circular lines (37) of the mixing disk (30) impinge at a right angle (α) upon the wall, section (41a) which faces the mixing disk central point (32) of the two wall sections (41a,41b) of the right-angled limiting wall (41) of the mixing element (40).

9. Process according to any of the Claims 1 to 7, characterized in that the mixing element (40) is disposed relative to the mixing disk (30) in such a way that the circular lines (37) of the mixing disk (30) impinge at an acute angle (α1) upon the wall section (41) which faces the mixing disk central point (32) of the two wall sections (41a, 41b) of the limiting wall (41) of the mixing element (40).

10. Process according to any of Claims 1 to 9, characterized in that the right-angled (41) mixing element (40) is disposed relative to the mixing disk (30) in such a way that the particles of the mixture body (MK) impinge upon the limiting wall (41) of the right-angled mixing element (40) at an angle (α3) of less than 90°.

11. Process according to any of Claims 1 to 9, characterized in that the curved (141) mixing element (40) is disposed relative to the mixing element (30) in such a way that the particles of the mixture body (MK) impinge, with respect to the mixing disk (30), at an angular range (α4) proceeding from the outside towards the inside of from 30° to 90°, upon the limiting wall (141) of the curved mixing element (40).

12. Process according to any of Claims 1 to 9, characterized in that the curved (141) mixing element (40) is disposed relative to the mixing disk (30) in such a way that the particles of the mixture body (MK), in the section (144) of the limiting wall (141) facing the central point (32) of the mixing disk (30) impinge, with respect to the mixing disk (30), at an angular range (α5) proceeding from the outside towards the inside of from 55° to 45°, upon the curved limiting wall (141) of the mixing element (40).

13. Process according to any of Claims 1 to 9, characterized in that the right-angled (41) mixing element (40) is alternately moved towards the mixing disk (30) in such a way that the particles of the mixture body (MK) first im pinge at an angle (α2) of 90° and, thereupon, at an angle (α3) of less than 90° upon the right-angled limiting wall (41) of the mixing element (40).

14. Process according to any of Claims 1 to 9, characterized in that the curved (141) mixing element (40) is moved alternately relative to the mixing disk (30) in such a way that the particles of the mixture body (MK) first impinge within an angular range (α4) of from 30° to 90° while proceeding, with respect to the mixing disk (30), from the outside towards the inside and, thereupon, relative to the mixing disk, within an angular range of from 55° to 45°, in the section (144) of the limiting wall (141) facing the central point (32) of the mixing disk (30), upon the same.

15. Process according to any of Claims 1 to 13, characterized in that a mixing disk (30) having a vertically arranged circumferential edge (38) is employed.

16. Device for the manufacture of more particularly smaller quantities of average or more highly viscous two-component or multiple-component masses by intermixing the components, in which case the device (10) is comprised of a mixing container (50) having a square or circular cross-section, of a bottom portion (51), a circumferential side wall (52) and a cover portion (54) which closes the upper container aperture (53) which, with the aid of mechanical means or by means of vacuum is attached to the container side wall (52) when the device (10) is in the operative state, of a horizontal mixing disk (30) disposed in the mixing space (20) of the mixing container (50) which is supported on the bottom portion (51) and is revolvingly driven about its vertical centre axis (31) with the aid of a driving means (130) mounted on the bottom portion (51) and of a mixing element (40) disposed above the mixing disk (30) so as to be stationary with respect to the same, which is constructed in the form of a shaped body (42;142) disposed vertically relative to the mixing disk (30) and constructed in the form of a right-angled (41) or curved limiting wall (141) having the function of a mixing vane and an opening (43;143) facing the direction of rotation of the mixing disk (30), the mixing disk (30) in this case being detachably connected to the drive shaft (131) of the driving means (130), and in which the mixing container (50) is provided with a connection piece (55) disposed on the container wall (51;52;54) which communicates with a vacuum generating means (60).

17. Device for the manufacture of more particularly smaller quantities of average or more highly viscous two-component or multiple-component masses by intermixing the components, in which case the device (10) is comprised of a mixing container (50) possessing a square or circular cross-section, of a bottom portion (51), of a circumferential side wall (52) anda cover portion (54) which closes the upper container aperture (53) which, with the aid of mechanical means or by means of vacuum, is attached to the container side wall (52) while the device (10) is in the operative state, of a horizontal mixing disk (30) stationarily mounted in the mixing space (20) of the mixing container (50), said mixing disk (30) being detachably disposed on the bottom portion (51), and of a mixing element (40) above the stationary mixing disk (30) which, with respect to the latter, is revolvingly driven about a vertical axis (47) with the aid of a driving means (247) about the central point of the mixing disk (30), said mixing disk (40) having the form of a shaped member (42;142) mounted in the mixing space (20) arranged vertically to the mixing disk (30), constructed in the form of a right-angled (41) or curved limiting wall (141) possessing the function of a mixing vane and with an opening (43;143) facing in the direction of rotation of the mixing element (40), wherein the mixing container (50) is provided with a connection piece (55) disposed in the container wall (51;52;54) which communicates with a vacuum generating means (60).

18. Device for the manufacture of more particularly smaller quantities of average or more highly viscous two-component or multiple-component masses by intermixing the components, in which case the device (10) is comprised of a mixing container (50) possessing a square or a circular cross-section, of a bottom portion (51), of a circumferential side wall (52) and of a cover portion (54) closing the upper container opening (53) which, with the aid of mechanical means or by means of vacuum is attached to the container side wall (52) when the device (10) is in the operative state, of a horizontal mixing disk (30) mounted in the mixing space (20) of the mixing container (50) which is supported on the bottom portion (51) and which is revolvingly driven about its vertical axis (31) with the aid of a driving means (130) mounted on the bottom portion (51), and of a, above the revolvingly driven mixing disk (30), mixing element (40) which, with respect to said mixing disk (30), is revolvingly driven about a vertical axis (47) with the aid of a driving means (247) in the opposite direction to the direction of rotation of the mixing disk (30) and about the central point of the mixing disk (30), said mixing element being constructed in the form of a shaped member (42;142) mounted inside the mixing space (20) and arranged vertically to the mixing disk (30), constructed in the form of a right-angled (41) or curved limiting wall (141) having the function of a mixing vane and provided with an opening (43;143) facing in the direction of rotation of the mixing disk (30), the mixing disk (30) in this case being detachably connected to the drive shaft (131) of the driving means (130), and wherein the mixing container (50) is provided with a connection piece (55) disposed in the container wall (51; 52;54), which communicates with a vacuum generating means (60).

19. Device according to any of Claims 16 to 18, characterized in that the container cover portion (54) is hingedly connected to the upper circumferential edge of the mixing container (50).

20. Device according to any of Claims 16 to 19, characterized in that the mixing element (40) is disposed on the inner wall area (54a) of the cover portion (54).

21. Device according to any of Claims 16 to 20, characterized in that the mixing element (40) is retained on the cover portion (54) with the aid of a swivel axis (49) passed through the cover portion (54), in which case the end (49a) of the swivel axis (49) passed out from the cover portion (54) is provided with a grip-like handle (149) or is connected to a driving means (147) which, for the alternating swivelling motion of the mixing element (40), is connected to a control means (200).

22. Device according to any of Claims 16 to 21, characterized in that the cover portion (54), within the area of its hinging point on the mixing container (50), is provided with a tension spring, pneumatic spring or hydraulic cylinder (56) or with a pneumatic, hydraulic, electromotive or electromagnetic driving means for the automatic swivelling of the cover portion (54) into its opening position and/or its closing position.

23. Device according to any of Claims 16 to 22, characterized in that the mixing disk (30) is constructed so as to be circular.

24. Device according to any of Claims 16 to 23, characterized in that the mixing disk (30) is comprised of two super-jacently disposed disk members (30a,30b) possessing identical or non-identical dimensions, both of which are interconnected with the aid of detachable coupling connections, such as bayonet catch or magnetic lock and of which the upper disk member (30a) is designed in the form of a filler carrier.

25. Device according to any of Claims 16 to 24, characterized in that the device, in lieu of a mixing element (40) arranged vertically relative to the mixing disk (30), is provided with a mixing element (40) which assumes an inclined position relative to the mixing disk (30).

26. Device according to any of Claims 16 to 25, characterized in that the mixing disk (30) or the upper one (30a) of the two disk members (30a,30b) forming the mixing disk (30), is provided with an upwardly raised circumferential edge (38).

27. Device according to Claim 26, characterized in that the mixing disk (30) provided with a circumferential edge (38) or the upper disk member (30a) provided with a circumferential edge of the two disk members (30a,30b) forming the mixing disk (30) consists of an elastic material, such as rubber or a rubber-like plastic.

28. Device according to any of Claims 16 to 26, characterized in that the mixing disk (30) or the upper one (30a) of the two disk members (30a,30b) forming the mixing disk (30) consists of metallic materials or of plastics.

29. Device according to any of Claims 16 to 28, characterized in that the mixing element (40) is disposed relative to the mixing disk (30) in such a way that, between the mixing disk (30) and the bottom edge (48) of the mixing element, an interspace is formed which ensures the unimpeded movability of the mixing disk (30) to the mixing element (40).

30. Device according to any of Claims 16 to 29, characterized in that the bottom edge (48) of the mixing element (40) is constructed in the form of a knife blade.

31. Device according to any of Claims 16 to 30, characterized in that the mixing element (40) consists of metallic materials, plastics or of a metal coated with plastic.

32. Device according to any of Claims 16 to 31, characterized in that the mixing element (40) is disposed eccentrically on the cover portion (54) of the mixing container (50).

33. Device according to any of Claims 17 and 19 to 32, characterized in that the mixing element (40) which revolves relative to the stationary mixing disk (30), is attached radially to a drive disk (145) supported on the inner wall area (54a) of the cover portion (54) of the mixing container (50), said drive disk (145) being connected to the driving means (247) of the mixing element (40).

34. Device according to any of Claims 16 to 33, characterized in that a circular mixing disk (30) and a mixing element (40) are provided, whose opening (43;143) formed by the longitudinally curved (141) or right-angled limiting wall (41) possesses a length which is equal to or smaller than the radius of the mixing disk (30).

35. Device according to any of Claims 16 to 34, characterized in that the angular position of the opening (43;143) of the limiting wall (41;141) of the mixing element (40) forming the vertical opening surface (45) is variable relative to a tangent line (33) plotted on the mixing disk (30).

36. Device according to any of Claims 16 to 35, characterized in that the mixing element (40) is disposed relative to the mixing disk (40) in such a way that the vertical opening surface(45) of the opening (43;143) formed by the limiting wall (41;141) of the mixing element (40), with respect to a radius line (34) of the mixing disk (30) proceeds parallel and, by one section (35) staggered with respect to this radius line and is swivellable about its vertical axis (46) in such a way that the opening surface (45) of the opening (43;143) lies parallel to the same radius line (34) and the opening points at the circumferential edge (36) of the mixing disk (30) or that the opening surface (45) of the opening (43;143) proceeds parallel to a mixing disk tangent line (33) and the opening (43;143) points at the mixing disk central point (32).

37. Device according to any of Claims 16 to 36, characterized in that the mixing element (40) is disposed relative to the mixing disk (30) in such a way that the circular lines (37) of the mixing disk (30) impinge at a right angle (α) upon the opening surface (45) of the mixing element (40).

38. Device according to any of Claims 16 to 31, characterized in that the mixing element (40) is disposed relative to the mixing disk (30) in such a way that the circular lines (37) of the mixing disk (30) impinge at an acute angle (α1) upon the opening surface (45) of the mixing element (40).

39. Device according to any of Claims 16 to 38, characterized in that the right-angled (41) mixing element (40) is disposed relative to the mixing disk (30) in such a way that the particles of the mixture body (MK) impinge at an angle (α2) of 90° upon the limiting wall (41) of the right-angled mixing element (40).

40. Device according to any of Claims 16 to 38, characterized in that the right-angled (41) mixing element (40) is disposed relative to the mixing disk (30) in such a way that the particles of the mixture body (MK) impinge at an angle (α3) of less than 90° upon the limiting wall (41) of the right-angled mixing element (40).

41. Device according to any of Claims 16 to 38, characterized in that the curved (141) mixing element (40) is disposed relative to the mixing disk (30) in such a way that the particles of the mixture body (MK) impinge within an angular range (α4) proceeding relative to the mixing disk from the outside towards the inside of from 30° to 90° upon the limiting wall (141) of the curved mixing element (40).

42. Device according to any of Claims 16 to 38, characterized in that the curved (141) mixing element (40) os disposed relative to the mixing disk (30) in such a way that the particles of the mixture body (MK) in the section (144) of the limiting wall (141) facing the central point (32) of the mixing disk (30) within an angular range of (α5) proceeding, with respect to the mixing disk (30), from the outside towards the inside of from 55° to 45°, impinge upon the limiting wall (141) of the curved mixing element (40).

43. Device according to any of Claims 16 to 42, characterized in that the mixing element (40), with the aid of a drive shaft (47) connected to a driving means (247) mounted on the cover portion (54) of the mixing container (50) which, with the aid of a control means (200), is controlled in such a way that the mixing element (40) executes an alternating swivelling motion.

44. Device according to any of Claims 16 to 43, characterized in that the mixing element (40) is provided with a covering (140) closing its opening (43;143) towards the top.

45. Device according to any of Claims 16 to 44, characterized in that the mixing container (50) of the device (10) is comprised of a bottom portion (51) having a vertically raised circumferential edge (51a) and a cap-like cover portion (54) which, with its circumferential edge (54a), in the closed state of the container, is seated upon the circumferential edge (51a') of the bottom portion (51), in which case the bottom portion (51) or the circumferential side wall (52) of the cover portion (54), or the same itself is provided with a connection piece (55) that communicates with the mixing space (20) of the mixing container (50), said connection piece (55) being in communication with the vacuum generating means (60), in that the cap-like cover portion (54), at one of its ends, is hingedly connected to the bottom portion (51) and, with the aid of mechanical means or by means of vacuum, is retained on the bottom portion (51), in that the cap-like cover portion (54), within the area of its hinging point (58), is provided on the bottom portion (51) with a tension spring, pneumatic spring or a hydraulic cylinder (56) for automatically swivelling the cover portion (54) into its opening position, and in that, in the mixing space (20) of the mixing container (50), the mixing disk (30) with the mixing element (40) allocated to the latter are disposed.

46. Device according to any of Claims 16 to 45, characterized in that the mixing container (50), together with a means (80) for the dosed dispensing of filler and hardener paste is secured to a supporting frame (81) constructed in the form of a wall fixture, in which case the discharge apertures (90,91) of the dispenser (80) are disposed relative to the mixing container (50) in such a way that, when the mixing container (50) is open, the mixing disk (30) comes to lie underneath the discharge apertures (90,91) and that the distance between the mixing container (50) and the dispenser (80) corresponds to the radius of the swivel range of the cover portion (54) of the mixing container (50), or that the discharge apertures (90, 91) of the dispenser (80) come to be located above the cover portion (54), in which case the same is constructed in the form of a slide.

47. Device according to Claim 46, characterized in that the device (10) for the simultaneous and dosed delivery of fillers consisting of a plastic material and a hardener is comprised of
a) a supporting structure (520) within whose upper area a working cylinder (521) operated with the aid of compressed air, pressure gas, by hydraulic or electromotive means or manually with a vertically displaceable piston rod (522) and with a piston plate (523) provion the piston rod end (522a) is disposed;
b) a centering plate (530) for a tin-like container (540) for the filler which accommodates the piston plate (523) in its interior (541) which, within the travel range of the piston rod (522) of the working cylinder (521), is disposed on the supporting structure (520) and which is provided with an axial or excentric drilled hole (531), whose upper circumferential edge (532) is constructed so as to taper conically towards the centre of the drilled hole;
c) a filling head (550) disposed underneath the centering plate (530) which is provided with two delivery apertures (551,552) for the filler and the hardener paste that can be closed with the aid of a knife-like closing latch (553) having a lever-like handle (554), said delivery apertures being located in close side-by-side arrangement and of which the delivery aperture (551) for the filler communicates by means of a connection (555) with the drilled hole (531) in the centering plate (530), while the other delivery aperture (552) for the hardener paste communicates via a drilled hole (556) in the filler head (550) with an entry aperture (557) constructed in the latter which terminates in an interchangeable adaptor (560) with a mounting means (561) that can be fitted into the filling head (550) for receiving the cartridge (570) for the hardener paste which is constructed so as to be open at the bottom;
wherein the piston plate (523) of the working cylinder (521) is secured to the free end (526a) of the one leg (526) of a U-shaped stirrup (525), whose other leg (527), on its free end (527) bears a piston plate (528) which is displaceable in the interior (571) of the cartridge (570) for the hardener paste, in which case the connection (555) connecting the delivery aparture (551) for the filler in the filler head (550) is run as far as into the conical area of the drilled hole (531) in the centering plate (530), in which the tin-like container (540) is provided with a bottom portion (543) possessing a circumferential edge (542) which engages over the centering plate (530) in its circumferential edge (530a), said bottom portion (543) being dimensioned in correspondence to the diameter and the design of the centering plate (530) and which has an outlet (544) which is constructed in the bottom portion (543) in accordance with the position of the drilled hole (531) in the centering plate (530) and which corresponds to the drilled hole (531) and possesses a configuration of its circumferential edge (544a) that is in correspondence with the conical form of the drilled hole (531), said edge (544a) being circularly constricted towards the inside, and wherein the handle (554) can be moved manually or with the aid of pneumatic, hydraulic, electromotive or electromagnetic means.

## Revendications

1. Procédé pour la fabrication en particulier de petites quantités de masses de deux ou plusieurs constituants à moyenne ou haute viscosité par mélange des constituants l'un à l'autre, une quantité totale prédéterminée des constituants à mélanger, tels que durcisseur et masse plastique, étant mélangée par circulation et déplacement sur un disque mélangeur horizontal (30) qui se déplace, qui est placé dans un espace de mélange (20) fermé et qui peut être évacué, avec un élément mélangeur en forme de pale (40), qui se trouve perpendiculaire sur ce disque mélangeur et qui est fixe par rapport au disque mélangeur déplacé (30), qui est constitué par un corps moulé (42; 142) à angles droits (41) ou courbé, qui forme une paroi de délimitation (141) avec un orifice (43, 143) qui est tourné vers le sens de rotation du disque mélangeur (30), par déroulement, sur le disque mélangeur (30) et le long de la paroi de délimitation verticale (41 ; 141) de l'élément mélangeur (40), du corps de mélange (MK) qui se forme sur le disque mélangeur (30) déplacé, qui est à peu près cylindrique ou en forme de fuseau et qui part du point central (32) du disque mélangeur (30) déplacé tout en éliminant simultanément les petites bulles d'air contenues dans le mastic et amenées par le processus de migration et/ou de fluage de la surface du corps du mastic en les agrandissant et en les éclatant par pompage de l'air de l'espace de mélange (20), le mouvement de roulement et de glissement du corps de mélange (MK) et son mouvement de translation étant commandés par l'élément mélangeur (40), l'espace de mélange étant aéré et le produit du mélange sans bulles (mastic) étant prélevé après achèvement de l'opération de mélange.

2. Procédé pour la fabrication en particulier de petites quantités de masses de deux ou plusieurs constituants à moyenne ou haute viscosité par mélange des constituants l'un à l'autre, une quantité totale prédéterminée des constituants à mélanger, tels que durcisseur et masse plastique, étant mélangée par circulation et déplacement sur un disque mélangeur horizontal (30) disposé de manière fixe dans un espace de mélange (20) fermé et qui peut être évacué, avec un élément mélangeur en forme de pale (40), qui est perpendiculaire sur celui-ci et qui est commandé en rotation par rapport au disque mélangeur fixe (30) autour de son point central (32), élément constitué par un corps moulé (42; 142) à angles droits (41) ou courbé, qui forme une paroi de délimitation (142) avec un orifice (43, 143) qui est tourné vers le sens de rotation du disque mélangeur (30), par déroulement, sur le disque mélangeur (30) et le long de la paroi de délimitation verticale (41 ; 141) de l'élément mélangeur (40), du corps de mélange (MK) qui se forme sur le disque mélangeur (30) déplacé, qui est à peu près cylindrique ou en forme de fuseau et qui part du point central (32) du disque mélangeur (30) tout en éliminant simultanément les petites bulles d'air contenues dans le mastic et amenées par le processus de migration et/ou de fluage de la surface du corps du mastic en les agrandissant et en les éclatant par pompage de l'air de l'espace de mélange (20), le mouvement de roulement et de glissement du corps de mélange (MK) et son mouvement de translation étant commandés par l'élément mélangeur (40), l'espace de mélange étant aéré et le produit du mélange sans bulles (mastic) étant prélevé après achèvement de l'opération de mélange.

3. Procédé pour la fabrication en particulier de petites quantités de masses de deux ou plusieurs constituants à moyenne ou haute viscosité par mélange des constituants l'un à l'autre, une quantité totale prédéterminée des constituants à mélanger, tels que durcisseur et masse plastique, étant mélangée par circulation et déplacement sur un disque mélangeur horizontal (30) qui se déplace, qui est placé dans un espace de mélange (20) fermé et qui peut être évacué, avec un élément mélangeur en forme de pale (40), qui est perpendiculaire sur celui-ci et qui est commandé en rotation dans le sens contraire au sens de rotation du disque mélangeur (30) autour de son point central (32), élément constitué par un corps moulé (142) à angles droits (41) ou courbé, qui forme une paroi de délimitation (141) avec un orifice (43, 143) qui est tourné vers le sens de rotation du disque mélangeur (30) par déroulement, sur le disque mélangeur (30) et le long de la paroi de délimitation verticale (41 ; 141) de l'élément mélangeur (40), du corps de mélange (MK) qui se forme sur le disque mélangeur (30) déplacé, qui est à peu près cylindrique ou en forme de fuseau et qui part du point central (32) du disque mélangeur (30) tout en éliminant simultanément les petites bulles d'air contenues dans le mastic et amenées par le processus de migration et/ou de fluage de la surface du corps du mastic en les agrandissant et en les éclatant par pompage de l'air de l'espace de mélange (20), le mouvement de roulement et de glissement du corps de mélange (MK) et son mouvement de translation étant commandés par l'élément mélangeur (40), l'espace de mélange étant aéré et le produit du mélange sans bulles (mastic) étant prélevé après achèvement de l'opération de mélange.

4. Procédé selon l'une des revendications 1 ou 3, **caractérisé en ce** qu'un disque mélangeur (30) horizontal, commandé en rotation autour de son axe vertical (31), est utilisé.

5. Procédé selon l'une des revendications 1 à 4, **caractérisé en ce** qu'un disque mélangeur circulaire (30) et un élément mélangeur (40 sont utilisés dont l'orifice (143 ; 43), qui est formé par la paroi de délimitation (41) courbée dans le sens de la longueur (141) ou à angles droits (41), présente une longueur qui est égale ou inférieure au rayon du disque mélangeur (30).

6. Procédé selon l'une des revendications 1 à 5, **caractérisé en ce** que l'élément mélangeur (40) pivote alternativement d'un côté à l'autre autour de son axe vertical dans de petites zones angulaires et que la position angulaire de l'orifice (43 ; 143) de la paroi de délimitation (41 ; 141) de l'élément mélangeur (40), orifice qui forme la surface verticale d'ouverture (45), peut varier par rapport à la tangente (33) appliquée sur le disque mélangeur (30).

7. Procédé selon l'une des revendications 1 à 6, **caractérisé en ce** que l'élément mélangeur (40) est placé par rapport au disque mélangeur (30) de telle manière que la surface verticale d'ouverture (45) de l'orifice (43 ; 143) qui est formé par la paroi de délimitation (41 ; 141) de l'élément mélangeur (40) est parallèle à une ligne de rayon (34) du disque mélangeur (30), passe par le centre du disque mélangeur (32) et peut pivoter autour de son axe vertical (46) de telle manière que la surface d'ouverture (45) de l'orifice (43: 143) se situe dans un angle par rapport à la même ligne de rayon (34) et que l'orifice (43 ; 143) est orienté vers le bord périphérique (36) du disque mélangeur (30) ou que la surface d'ouverture (45) de l'orifice (43; 143) est décalée d'une portion (35) par rapport à la ligne de rayon (34) et que l'ouverture (43 ; 143) est orientée vers le centre du disque mélangeur (32).

8. Procédé selon l'une des revendications 1 à 7, **caractérisé en ce** que l'élément mélangeur (40) est placé par rapport au disque mélangeur (30) de telle manière que les circonférences (37) du disque mélangeur (30) touchent en angle droit (α) la portion de paroi (41a) tournée vers le centre du disque mélangeur (32) des deux portions de paroi (41a, 41b) de la paroi de délimitation à angles droits (41) de l'élément mélangeur (40).

9. Procédé selon l'une des revendications 1 à 7, **caractérisé en ce** que l'élément mélangeur (40) est placé par rapport au disque mélangeur (30) de telle manière que les circonférences (37) du disque mélangeur (30) touchent en angle aigu (α1) la portion de paroi (41a) tournée vers le centre du disque mélangeur (32) des deux portions de paroi (41a, 41b) de la paroi de délimitation à angles droits (41) de l'élément mélangeur (40).

10. Procédé selon l'une des revendications 1 à 9, **caractérisé en ce** que l'élément mélangeur (40) à angles droits (41) est placé par rapport au disque mélangeur (30) de telle manière que les particules de la masse du corps de mélange (MK) touchent la paroi de délimitation (41) de l'élément mélangeur (40) à angles droits (40) dans un angle (α3) inférieur à 90°.

11. Procédé selon l'une des revendications 1 à 9, **caractérisé en ce** que l'élément mélangeur (40) en forme d'arc (141) est placé par rapport au disque mélangeur (30) de telle manière que les particules de la masse du corps de mélange (MK) touchent la paroi de délimitation (141) de l'élément mélangeur en forme d'arc (40) dans une zone angulaire (α4) de 30° à 90° qui va de l'extérieur vers l'intérieur par rapport au disque mélangeur (30).

12. Procédé selon l'une des revendications 1 à 9, **caractérisé en ce** que l'élément mélangeur (40) en forme d'arc (141) est placé par rapport au disque mélangeur (30) de telle manière que les particules de la masse du corps de mélange (MK) touchent la paroi de délimitation en forme d'arc (141) de l'élément mélangeur (40) dans une zone angulaire (α5) de 55° à 45° qui va de l'extérieur vers l'intérieur par rapport au disque mélangeur (30) dans la portion (144) de la paroi de délimitation (141) qui est tournée vers le centre (32) du disque mélangeur (30).

13. Procédé selon l'une des revendications 1 à 9, **caractérisé en ce** que l'élément mélangeur (40) à angles droits (41) est déplacé en alternance par rapport au disque mélangeur (30) de telle manière que les particules de la masse du corps de mélange (MK) touchent la paroi de délimitation à angles droits (41) de l'élément mélangeur (40) une fois dans un angle (α2) de 90° et ensuite dans un angle (α3) inférieur à 90°.

14. Procédé selon l'une des revendications 1 à 9, **caractérisé en ce** que l'élément mélangeur (40) en forme d'arc (141) est déplacé en alternance par rapport au disque mélangeur (30) de telle manière que les particules de la masse du corps de mélange (MK) touchent la paroi de délimitation (141) dans la portion (144) de la paroi de délimitation (141) qui est tournée vers le centre (32) du disque mélangeur (30) une fois dans une zone angulaire (α4) de 30° à 90° qui va de l'extérieur vers l'intérieur par rapport au disque mélangeur (30) et ensuite dans une zone angulaire (α5) de 55° à 45° qui va de l'extérieur vers l'intérieur par rapport au disque mélangeur (30).

15. Procédé selon l'une des revendications 1 à 13, **caractérisé en ce** qu'un disque mélangeur (30) avec un bord périphérique perpendiculaire (38) est utilisé.

16. Dispositif pour la fabrication en particulier de petites quantités de masses de deux ou plusieurs constituants à moyenne ou haute viscosité par mélange des constituants l'un à l'autre, le dispositif (10) se composant d'un récipient de mélange (50) avec une section carrée ou circulaire, d'une partie fond (51), d'une paroi latérale périphérique (52) et d'une partie couvercle (54), qui ferme l'ouverture supérieure du récipient (53), qui est fixée au moyen de dispositifs mécaniques ou par du vide à la paroi latérale du récipient (52), lorsque le dispositif (10) est en état de fonctionnement, d'un disque mélangeur (30) horizontal placé dans l'espace de mélange (20) du récipient de mélange (50), qui est positionné sur la partie fond (51) et qui est commandé en rotation autour de son axe vertical (31) au moyen d'un dispositif d'entraînement (130) placé sur la partie fond (30), et d'un élément mélangeur (40) placé au-dessus du disque mélangeur (30) en étant fixe par rapport à celui-ci, élément qui est configuré comme un corps moulé (42 ; 142) placé dans l'espace de mélange (20), perpendiculaire au disque mélangeur (30), configuré comme une paroi de délimitation courbée (141) ou à angles droits (41), avec la fonction d'une pale mélangeuse et avec un orifice (43 ; 143) tourné vers le sens de rotation du disque mélangeur (30), le disque mélangeur (30) étant relié de manière amovible à l'axe d'entraînement (131) du dispositif d'entraînement (130) et le récipient de mélange (50) présentant une tubulure de raccord (55), placée dans la paroi du récipient (51 ; 52 ; 54), qui est reliée à un dispositif de production du vide (60).

17. Dispositif pour la fabrication en particulier de petites quantités de masses de deux ou plusieurs constituants à moyenne ou haute viscosité par mélange des constituants l'un à l'autre, le dispositif (10) se composant d'un récipient de mélange (50) avec une section carrée ou circulaire, d'une partie fond (51), d'une paroi latérale périphérique (52) et d'une partie couvercle (54), qui ferme l'ouverture supérieure du récipient (53), qui est fixée au moyen de dispositifs mécaniques ou par du vide à la paroi latérale du récipient (52), lorsque le dispositif (10) est en état de fonctionnement, d'un disque mélangeur (30) horizontal placé en étant fixe dans l'espace de mélange (20) du récipient de mélange (50), qui est placé de manière amovible sur la partie fond (51) et d'un élément mélangeur (40) entraîné en rotation autour du centre du disque mélangeur (30) au-dessus du disque mélangeur fixe (30) en face de celui-ci autour d'un axe vertical (47) au moyen d'un dispositif d'entraînement (247), élément qui est configuré comme un corps moulé (42 ; 142) placé dans l'espace de mélange (20), perpendiculaire au disque mélangeur (30), configuré comme une paroi de délimitation courbée (141) ou à angles droits (41), avec la fonction d'une pale mélangeuse et avec un orifice (43; 143) tourné vers le sens de la rotation de l'élément mélangeur (40), le récipient de mélange (50) présentant une tubulure de raccord (55), placée dans la paroi du récipient (51 ; 52 ; 54), qui est reliée à un dispositif de production du vide (60).

18. Dispositif pour la fabrication en particulier de petites quantités de masses de deux ou plusieurs constituants à moyenne ou haute viscosité par mélange des constituants l'un à l'autre, le dispositif (10) se composant d'un récipient de mélange (50) avec une section carrée ou circulaire, d'une partie fond (51), d'une paroi latérale périphérique (52) et d'une partie couvercle (54), qui ferme l'ouverture supérieure du récipient (53), qui est fixée au moyen de dispositifs mécaniques ou par du vide à la paroi latérale du récipient (52), lorsque le dispositif (10) est en état de fonctionnement, d'un disque mélangeur (30) horizontal placé en étant fixe dans l'espace de mélange (20) du récipient de mélange (50), qui est placé de manière amovible sur la partie fond (51) et d'un élément mélangeur (40) entraîné en rotation autour du centre du disque mélangeur (30) au-dessus du disque mélangeur (30) entraîné en rotation en face de celui-ci autour d'un axe vertical (47) au moyen d'un dispositif d'entraînement (247) dans le sens contraire au sens de rotation du disque mélangeur (30), élément qui est configuré comme un corps moulé (42 ; 142) placé dans l'espace de mélange (20), perpendiculaire au disque mélangeur (30), configuré comme une paroi de délimitation courbée (141) ou à angles droits (41), avec la fonction d'une pale mélangeuse et avec un orifice (43 ; 143) tourné vers le sens de la rotation de l'élément mélangeur (40), le disque mélangeur (30) étant relié de manière amovible à l'axe d'entraînement (131) du dispositif d'entraînement (130), le récipient de mélange (50) présentant une tubulure de raccord (55), placée dans la paroi du récipient (51 ; 52 ; 54), qui est reliée à un dispositif de production du vide (60).

19. Dispositif selon l'une des revendications 16 à 18, **caractérisé en ce** que la partie couvercle du récipient (54) est articulée à la manière d'une charnière sur le bord supérieur périphérique du récipient de mélange (50).

20. Dispositif selon l'une des revendications 16 à 19, **caractérisé en ce** que l'élément mélangeur (40) est placé sur la face de la paroi intérieure (54a) de la partie couvercle (54).

21. Dispositif selon l'une des revendications 16 à 20, **caractérisé en ce** que l'élément mélangeur (40) est maintenu sur la partie couvercle (54) au moyen d'un axe de pivotement (49) qui traverse la partie couvercle (54), l'extrémité (49a) de l'axe de pivotement (49) qui sort de la partie couvercle (54) étant pourvue d'une manette du type poignée (149) ou étant reliée au dispositif d'entraînement (147) qui est relié à un dispositif de commande (200) pour le mouvement de pivotement alterné de l'élément mélangeur (40).

22. Dispositif selon l'une des revendications 16 à 21, **caractérisé en ce** que la partie couvercle (54) est pourvue, dans la zone de son point d'articulation sur le récipient de mélange (50), d'un ressort de traction, d'un ressort à gaz ou d'un vérin hydraulique (56) ou d'un dispositif d'entraînement pneumatique, hydraulique, électromoteur ou électromagnétique pour le pivotement automatique de la partie couvercle (54) dans sa position d'ouverture et/ou de fermeture.

23. Dispositif selon l'une des revendications 16 à 22, **caractérisé en ce** que le disque mélangeur (30) est configuré en forme de cercle.

24. Dispositif selon l'une des revendications 16 à 23, **caractérisé en ce** que le disque mélangeur (30) est constitué par deux corps de disque (30a, 30b) placés l'un sur l'autre, présentant les mêmes dimensions ou des dimensions différentes, qui sont reliés tous les deux l'un à l'autre par des raccords par adhérence amovibles tels que fermeture à baïonnette ou fermeture magnétique et parmi lesquels le corps de disque supérieur (30a) est configuré comme un support de mastic.

25. Dispositif selon l'une des revendications 16 à 24, **caractérisé en ce** que le dispositif présente, à la place d'un élément mélangeur (40) placé perpendiculairement par rapport au disque mélangeur (30), un élément mélangeur (40) qui prend une position inclinée par rapport au disque mélangeur (30).

26. Dispositif selon l'une des revendications 16 à 25, **caractérisé en ce** que le disque mélangeur (30) ou le corps de disque supérieur (30a) parmi les deux corps de disque (30a, 30b) qui forment le disque mélangeur (30) est pourvu d'un bord périphérique (38) qui est étiré vers le haut.

27. Dispositif selon la revendication 26, **caractérisé en ce** que le disque mélangeur (30) pourvu d'un bord périphérique (38) et/ou le corps de disque supérieur (30a), parmi les deux corps de disque (30a, 30b) qui forment le disque mélangeur (30), qui est pourvu d'un bord périphérique (38), est constitué par une matière élastique, telle que le caoutchouc ou une matière plastique semblable au caoutchouc.

28. Dispositif selon l'une des revendications 16 à 26, **caractérisé en ce** que le disque mélangeur (30) ou le corps de disque supérieur (30a) parmi les deux corps de disque (30a, 30b) qui forment le disque mélangeur (30) est constitué par des matières métalliques ou des matières plastiques.

29. Dispositif selon l'une des revendications 16 à 28, **caractérisé en ce** que l'élément mélangeur (40) est placé par rapport au disque mélangeur (30) de telle manière qu'il est formé un espace intermédiaire entre le disque mélangeur (30) et le bord côté fond (48) de l'élément mélangeur qui garantit la libre mobilité du disque mélangeur (30) par rapport à l'élément mélangeur (40).

30. Dispositif selon l'une des revendications 16 à 29, **caractérisé en ce** que le bord côté fond (48) de l'élément mélangeur (40) est configuré à la manière d'une lame de couteau.

31. Dispositif selon l'une des revendications 16 à 30, **caractérisé en ce** que l'élément mélangeur (40) est constitué par des matières métalliques, des matières plastiques ou par un métal revêtu d'une matière plastique.

32. Dispositif selon l'une des revendications 16 à 31, **caractérisé en ce** que l'élément mélangeur (40) est placé de manière excentrique sur la partie couvercle (54) du récipient de mélange (50).

33. Dispositif selon l'une des revendications 17 et 19 à 32, **caractérisé en ce** que l'élément mélangeur (40) qui tourne par rapport au disque mélangeur fixe (30) est fixé radialement sur un disque d'entraînement (145), positionné sur la face de paroi intérieure (54a) de la partie couvercle (54) du récipient de mélange (50), qui est relié au dispositif d'entraînement (247) pour l'élément mélangeur (40).

34. Dispositif selon l'une des revendications 16 à 33, **caractérisé en ce** qu'un disque mélangeur circulaire (30) et un élément mélangeur (40) sont prévus dont l'ouverture (143 ; 43) formée par la paroi de délimitation à angles droits (41) ou courbée dans le sens longitudinal (41) présente une longueur qui est égale ou inférieure au rayon du disque mélangeur (30).

35. Dispositif selon l'une des revendications 16 à 34, **caractérisé en ce** que la position angulaire de l'orifice (43 ; 143) de la paroi de délimitation (41 ; 141) de l'élément mélangeur (40) qui forme la face d'ouverture verticale (45) est variable par rapport à une tangente (33) appliquée sur le disque mélangeur (30).

36. Dispositif selon l'une des revendications 16 à 35, **caractérisé en ce** que l'élément mélangeur (40) est placé par rapport au disque mélangeur (30) de telle manière que la face d'ouverture verticale (45) de l'ouverture (43 ; 143) formée par la paroi de délimitation (41 ; 141) de l'élément mélangeur (40) est parallèle à une ligne de rayon (34) du disque mélangeur (30) et est décalée d'une portion (35) par rapport à cette ligne de rayon (34) et est pivotable autour de son axe vertical (46) de telle manière que la face d'ouverture (45) de l'orifice (43 ; 143) est parallèle à la même ligne de rayon (34) et que l'ouverture (43 ; 143) est orientée vers le bord périphérique (36) du disque mélangeur (30) ou que la face d'ouverture (45) de l'orifice (43 ; 143) est parallèle à une tangente du disque mélangeur (33) et que l'orifice (43 ; 143) est orienté vers le centre du disque mélangeur (32).

37. Dispositif selon l'une des revendications 16 à 36, **caractérisé en ce** que l'élément mélangeur (40) est placé par rapport au disque mélangeur (30) de telle manière que les circonférences (37) du disque mélangeur (30) touchent en angle droit (α) la face d'ouverture (45) de l'élément mélangeur (40).

38. Dispositif selon l'une des revendications 16 à 36, **caractérisé en ce** que l'élément mélangeur (40) est placé par rapport au disque mélangeur (30) de telle manière que les circonférences (37) du disque mélangeur (30) touchent en un angle aigu (α1) la face d'ouverture (45) de l'élément mélangeur (40).

39. Dispositif selon l'une des revendications 16 à 38, **caractérisé en ce** que l'élément mélangeur (40) à angles droits (41) est placé par rapport au disque mélangeur (30) de telle manière que les particules de la masse du corps de mélange (MK) touchent la paroi de délimitation (41) de l'élément mélangeur à angles droits (40) dans un angle (α2) de 90°.

40. Dispositif selon l'une des revendications 16 à 38, **caractérisé en ce** que l'élément mélangeur (40) à angles droits (41) est placé par rapport au disque mélangeur (30) de telle manière que les particules de la masse du corps de mélange (MK) touchent la paroi de délimitation (41) de l'élément mélangeur à angles droits (40) dans un angle (α3) inférieur à 90°.

41. Dispositif selon l'une des revendications 16 à 38, **caractérisé en ce** que l'élément mélangeur (40) en forme d'arc (141) est placé par rapport au disque mélangeur (30) de telle manière que les particules de la masse du corps de mélange (MK) touchent la paroi de délimitation (141) de l'élément mélangeur en forme d'arc (40) dans une zone angulaire (α4) de 30° à 90° qui va de l'extérieur vers l'intérieur par rapport au disque mélangeur (30).

42. Dispositif selon l'une des revendications 16 à 38, **caractérisé en ce** que l'élément mélangeur (40) en forme d'arc (141) est placé par rapport au disque mélangeur (30) de telle manière que les particules de la masse du corps de mélange (MK) touchent la paroi de délimitation (141) de l'élément mélangeur en forme d'arc (40) dans une zone angulaire (α5) de 55° à 45° qui va de l'extérieur vers l'intérieur par rapport au disque mélangeur (30) dans la portion (144) de la paroi de délimitation (141) qui est tournée vers le centre (32) du disque mélangeur (30).

43. Dispositif selon l'une des revendications 16 à 42, **caractérisé en ce** que l'élément mélangeur (40) est relié au moyen d'un axe d'entraînement (47) à un dispositif d'entraînement (247) placé sur la partie couvercle (54) du récipient de mélange (50), dispositif (247) qui est commandé par un dispositif de commande (200) de telle manière que l'élément mélangeur (40) effectue un mouvement de pivotement alternatif d'un côté à l'autre.

44. Dispositif selon l'une des revendications 16 à 43, **caractérisé en ce** que l'élément mélangeur (40) présente un recouvrement (140) qui ferme son ouverture (43 ; 143) vers le haut.

45. Dispositif selon l'une des revendications 16 à 44, **caractérisé en ce** que le récipient de mélange (50) du dispositif (10) est composé d'une partie fond (51) avec un bord périphérique (51a) relevé à la verticale et une partie couvercle (54) en forme de calotte qui repose avec son bord périphérique (54a), lorsque le récipient est à l'état fermé, sur le bord périphérique (51a') de la partie fond (51), la partie fond (51) ou la paroi latérale périphérique (52) de la partie couvercle (54) ou celui-ci lui-même étant pourvu d'une tubulure de raccord (55), qui est en relation avec l'espace de mélange (20) du récipient de mélange (50), qui est reliée au dispositif de production du vide (60), que la partie couvercle en forme de calotte (54) est articulée à l'une de ses extrémités à la manière d'une charnière à la partie fond (51) et est maintenue sur la partie fond (51) au moyen de dispositifs mécaniques ou par du vide, que la partie couvercle en forme de calotte (54) est pourvue, dans la zone de son point d'articulation (58) à la partie fond (51), d'un ressort de traction, ressort à gaz ou d'un vérin hydraulique (56) pour le pivotement automatique de la partie couvercle (54) dans sa position d'ouverture et que le disque mélangeur (30) est placé avec cet élément mélangeur (40) qui lui est affecté dans l'espace de mélange (20) du récipient de mélange (50).

46. Dispositif selon l'une des revendications 16 à 45, **caractérisé en ce** que le récipient de mélange (50) est fixé avec un dispositif (80) pour la distribution dosée de mastic et de pâte de durcisseur à un cadre porteur (81) configuré comme support mural, les orifices de sortie (90, 91) du dispositif de distribution (80) étant placés par rapport au récipient de mélange (50) de telle manière que, lorsque le récipient de mélange (50) est ouvert, le disque mélangeur (30) se situe au-dessous des orifices de sortie (90, 91) et que l'écart entre le récipient de mélange (50) et le dispositif de distribution (80) correspond au rayon de la zone de pivotement de la partie couvercle (54) du récipient de mélange (50) ou que les orifices de sortie (90, 91) du dispositif de distribution (80) se situent au-dessus de la partie couvercle (54), celui-ci étant configuré comme un verrou.

47. Dispositif selon la revendication 46, **caractérisé en ce** que le dispositif (10) pour la distribution simultanée et dosée de mastics composés d'une masse plastique et d'un durcisseur est constitué par
a) un bâti porteur (520) dans la zone supérieure duquel est placé un cylindre de travail (521) actionné par de l'air comprimé, du gaz comprimé, de manière hydraulique ou électromotrice ou manuelle avec une tige de piston (522) déplaçable verticalement et avec une plaque de piston (523) prévue à son extrémité (522a).
b) une plaque de centrage (530) pour un récipient (540) pour le mastic, du type boîte, qui reçoit la plaque du piston (523) dans son espace intérieur (541), plaque qui est placée dans la zone de déplacement de la tige de piston (522) du cylindre de travail (521) sur le bâti porteur (520) et qui est pourvue d'une perforation centrale ou excentrique (531) dont le bord périphérique supérieur (532) est configuré en s'effilant de manière conique vers le milieu de la perforation,
c) une tête de remplissage (550) placée au-dessous de la plaque de centrage (530) qui présente deux orifices de distribution (551, 552), qui peuvent être fermés au moyen d'un verrou de fermeture du type lame (553) avec une poignée du type levier (554), pour le mastic et la pâte de durcisseur, qui sont situés très près l'un de l'autre et parmi lesquels l'orifice de distribution (551) du mastic est relié par une tubulure (555) à la perforation (531) dans la plaque de centrage (530) tandis que l'autre orifice de distribution (552) pour la pâte de durcisseur est reliée par une perforation (556) dans la tête de remplissage (550) à un orifice d'entrée configuré en haut dans celle-ci, orifice d'entrée qui débouche dans un adaptateur de remplacement (560) qui peut être mis sur la tête de remplissage (550) avec un support (561) pour recevoir la cartouche (570) pour la pâte de durcisseur qui est configurée en étant ouverte côté fond,
la plaque de piston (523) du cylindre de travail (521) étant fixée à l'extrémité libre (526a) de l'une des branches (526) d'un étrier en forme de U (525) dont l'autre branche (527) porte une plaque de piston (528) déplaçable dans l'intérieur (571) de la cartouche (570) pour la pâte de durcisseur, la tubulure (555) qui relie l'orifice de distribution (551) pour le mastic dans la tête de remplissage (550) étant guidée jusque dans la zone conique de la perforation (531) de la plaque de centrage (530), le récipient du type boîte (540) étant pourvu d'une partie fond (543) présentant un bord périphérique (542) qui recouvre la plaque de centrage (530) dans son bord périphérique (530a), partie fond qui est configurée en étant dimensionnée de manière à correspondre au diamètre et à la configuration de la plaque de centrage (530) et qui présente un orifice de sortie (544) qui est configuré de manière à correspondre à la position de la perforation (531) de la plaque de centrage (530) dans la partie fond et qui correspond à la perforation (531) et qui présente une configuration de son bord périphérique (544a) qui correspond à la forme conique de la perforation (531), bord qui est rentré vers l'intérieur en forme d'arc de cercle, et la poignée (554) étant mobile à la main ou à l'aide de dispositifs pneumatiques, hydrauliques, électromoteurs ou électromagnétiques.
